# EUROPEAN PATENT APPLICATION

(11) **EP 4 772 459 A1**
(43) Date of publication of application: **08.07.2026**
(21) Application number: 24859951.6
(22) Date of filing: 30.08.2024
(51) Int. Cl.: B65G 43/08, B65G 47/70

(54) **CONVEYANCE SYSTEM**

(30) Priority: 31.08.2023 JP 2023141220; 19.07.2024 JP 2024116293
(71) Applicant: Itoh Denki Co., Ltd., Kasai-shi, Hyogo 675-2302 (JP)
(72) Inventor: ITOH Kazuo, Kasai-shi, Hyogo 679-0105 (JP); TACHIBANA Toshiyuki, Kasai-shi, Hyogo 679-0105 (JP); OGAWA Yasumasa, Kasai-shi, Hyogo 679-0105 (JP); MIZUTANI Tomoya, Kasai-shi, Hyogo 679-0105 (JP); INOUE Mitsuo, Kasai-shi, Hyogo 679-0105 (JP); ASADA Shin, Kasai-shi, Hyogo 679-0105 (JP)
(74) Representative: Parker, Andrew James
(86) International application number: PCT/JP2024/031142
(87) International publication number: WO 2025/047926

(57) **Abstract**

The present invention aims to propose a conveyance system having a less incidence of erroneous conveyance of an object.

A conveyance system for conveying a plurality of objects to their respective destinations, includes: a conveying situation estimator; a conveyance device; a plurality of sensors; and a comparator. The conveying situation estimator estimates an estimated conveying situation that shows how each of the objects is conveyed by the conveyance device. The conveyance device places an actual object thereonto to actually move the actual object. Each of the sensors is located at a predetermined position to detect the actual object on the conveyance device. The comparator is configured to compare the estimated conveying situation of each of the objects estimated by the conveying situation estimator with an actual conveying situation of each of the actual objects detected by the each of the sensors.

## Description

### TECHNICAL FIELD

The present invention relates to a conveyance system using conveyor apparatuses such as roller conveyors and belt conveyors.

### BACKGROUND ART

Conveyor apparatuses are often installed at delivery yards, collection points, warehouses, and the like. For example, in a distribution center where objects need to be sorted according to their delivery destinations, the conveyor apparatus installed therein features a plurality of branching conveying passages.

The conveyance device installed in the shipping yard includes a main conveying passage and branching conveying passages branched from the main conveying passage. A conveying direction changing device is arranged at the branching portion of the main conveying passage.

### PRIOR ART DOCUMENTS

### PATENT DOCUMENTS

Patent Document 1: JP 2005-231745 A
Patent Document 2: JP 2012-211015 A
Patent Document 3: JP 2013-230914 A

### DISCLOSURE OF THE INVENTION

### TECHNICAL PROBLEM

There is a market demand to convey objects at higher speeds and thereby increase the number of objects per unit time.

As a measure to meet this requirement, the inventors conceived a conveyance system in which the destinations of objects are predetermined, the objects are sequentially sent out, and when an object of a specific order arrives at a predetermined branching portion, a conveyance direction converting device is driven to send out the object to the branching conveying passage.

That is, if an object a is sent out to a branching conveying passage A, an object b is sent out to a branching conveying passage B, and an object c is sent out to the branching conveying passage B, each object is moved on the main conveying passage in the order of the object a, object b, and object c. Then, information indicating that the conveyance destination of the leading object a is the branching conveying passage A, that of the subsequent object b is the branching conveying passage B, and that of the object c is the branching conveying passage B is transmitted to the conveying direction changing device at each branching portion. When each object reaches the branching portion where the route should be changed, the conveying direction changing device is driven to send the object to an adequate branching conveying passage.

In this conveyance system, the conveying order of objects corresponds to their destinations. According to the above-described conveyance system, since it is unnecessary to verify the destination of the object at the branching portion, the conveying efficiency is higher, enabling an increase in the number of items conveyed per unit time.

However, in the above-described conveyance system, if an object being conveyed is removed during conveyance, the correspondence between conveying order of an object and its destination collapses, resulting in improper conveyance.

The same applies when another object is introduced midway along the conveyance path, causing the correspondence between conveying order of an object and its destination to collapse to lead to erroneous conveyance.

The present invention addresses the above-mentioned problems and proposes a conveyance system that minimizes erroneous conveyance of objects.

### SOLUTION TO THE PROBLEM

The aspect for solving the above-mentioned problem is a conveyance system for conveying a plurality of objects to their respective destinations, including: a conveying situation estimator; a conveyance device; a plurality of sensors; and a comparator, the conveying situation estimator estimating an conveying situation that shows how each of the objects is conveyed by the conveyance device, the conveyance device placing an actual object thereonto to actually move the actual object, each of the sensors being located at a predetermined position to detect the actual object on the conveyance device, the comparator being configured to compare the estimated conveying situation of each of the objects estimated by the conveying situation estimator with an actual conveying situation of each of the actual objects detected by the each of the sensors.

The conveyance system according to the present aspect includes a conveying situation estimator, and the conveying situation estimator estimates an estimated conveying situation in which the object is conveyed by the conveyance device. The estimated conveying situation is only the result of estimation.

Further, the conveyance system according to the present aspect includes a plurality of sensors that detect the actual conveying situation of the object.

In the conveyance system of the present aspect, since the estimated conveying situation of an object predicted by the conveying situation estimator is compared with the actual conveying situation of the object detected by a sensor using a comparator, erroneous conveyance of an object is minimized.

For example, if an object being transported is removed, an unexpected empty will occur in the conveying passage. That is, in a case where there is a preceding first object, followed by a second object and a third object, the state occurs where the second object in the intermediate position is lost, and the third object is conveyed along the conveying passage immediately following the first object.

Furthermore, if another object is introduced midway along the conveying passage, an unexpected congestion may occur on the conveying passage. That is, in a case where there is a first object conveyed beforehand and a second object following it, when an object X is inserted between the first and second objects, a state arises in which a third object is conveyed along the conveying passage following the first object.

When another object is introduced midway along the conveying passage, the second object that should exist may disappear from its designated position, resulting in a state where object X is conveyed following the first object, and subsequently, the second object is conveyed along the conveying passage.

The conveyance system of the present aspect compares the estimated conveying situation of the object assumed by the comparator with the actual conveying situation of the actual object. By comparing the two, it is possible to identify unexpected voids or congestion.

In the above-mentioned aspect, it is preferable that the conveying situation estimator estimates an operation timing of the sensor under the estimated conveying situation, and the conveyance system further includes a driving situation detector that detects an operation timing of the sensors under an actual driving situation of the conveyance device.

According to the present aspect, it is possible to compare the estimated conveying situation with the actual conveying situation.

In each of the above-described aspects, it is preferable that the conveying situation estimator estimates a rotational situation of a specific component and/or a time required to convey the object under the estimated conveying situation, and the conveyance system further includes a driving situation detector that detects a rotational situation of the specific component and /or a time required to convey the object.

According to the present aspect, it is possible to grasp a conveying situation of the object.

In each of the above-described aspects, it is preferable that the conveying situation estimator estimates a conveying posture of the object when it is conveyed under the estimated conveying situation, at least any of the plurality of sensors is a sensor group, the sensor group including a plurality of sensor elements arranged in a direction intersecting a conveying direction of the object, the actual conveying situation is configured to detect a side-by-side movement and/or a conveying posture of the object from information on an operation timing of each of the sensor elements of the sensor group detected by the each of the sensor elements, and the comparator compares the conveying posture of the object estimated by the conveying situation estimator with the side-by-side movement and/or the conveying posture of the actual object detected by the sensor.

Side-by side movement of objects refers to a state in which at least some of the plurality of objects are present within the same section in the conveying direction of the conveying passage.

The side-by-side movement of objects includes cases in which, when viewed in a planar manner, at least a portion of objects proceed side by side in the same section along the conveying direction of the conveying passage. Furthermore, the state where objects proceed overlapping vertically is also considered a state in which objects are moving side by side.

According to the present aspect, it is possible to detect situations where the posture of an object is distorted or where objects are conveyed in parallel with each other.

In each of the above-described aspects, it is preferable that the conveyance device includes a conveying member that performs conveying operation through rotation or linear movement, thereby moving the object through the conveying operation of the conveying member, the conveying situation estimator estimates a predicted tip-side conveying movement amount, the predicted tip-side conveying movement amount being a minimum value of the conveying movement amount that is expected to be detected by the sensor at a predetermined position when a tip of the object moves normally, the conveyance system includes a driving situation detector that acquires an actual conveying movement amount of the conveyance device, and the comparator performs a front end comparison of comparing the predicted tip-side conveying movement amount with the actual conveying movement amount when an actual tip of the object is detected by the sensor at a predetermined position.

In the conveyance system of the present aspect, the predicted tip-side conveying movement amount is compared with the actual conveying movement amount.

The predicted tip-side conveying movement amount is predicted movement amount of the conveyance device during the conveyance of a specific section until the front end of an object reaches the position of a sensor, and the minimum value of the conveying movement amount is adopted considering errors and the like.

On the other hand, the driving situation detector acquires the actual conveying movement amount, which is actual conveying movement amount of the conveyance device.

In the conveyance system of the present aspect, since the actual conveying movement amount is compared with the predicted tip-side conveying movement amount, it becomes possible to compare the predicted arrival time of an object with the actual arrival time of the object, thereby enabling detection of unexpected space and unforeseen congestion.

In each of the above described aspects, it is preferable that the conveyance device includes a conveying member that performs conveying operation through rotation or linear movement, thereby moving the object through the conveying operation of the conveying member, the conveying situation estimator estimates a predicted rear-end-side conveying movement amount, the predicted rear-end-side conveying movement amount being a maximum value of the conveying movement amount that is expected to be detected by the sensor at a predetermined position when a rear end of the object moves normally, the conveyance system includes a driving situation detector that acquires an actual conveying movement amount of the conveyance device, and the comparator performs a rear-end comparison of comparing the predicted rear-end-side conveying movement amount with the actual conveying movement amount when an actual rear-end of the object is detected by the sensor at a predetermined position.

In the conveyance system of the present aspect, the predicted rear-end-side conveying movement amount is compared with the actual conveying movement amount.

The predicted rear-end-side conveying movement amount is predicted movement amount of the conveyance device during the conveyance of a specific section until the rear end of an object reaches the position of a sensor, and the maximum value of the conveying movement amount is adopted considering errors and the like.

On the other hand, the driving situation detector acquires the actual conveying movement amount, which is actual conveying movement amount of the conveyance device.

In the conveyance system of the present aspect, since the actual conveying movement amount is compared with the predicted rear-end-side conveying movement amount, it becomes possible to compare the predicted rear-end arrival time of an object with the actual rear-end arrival time of the object, thereby enabling detection of unexpected space and unforeseen congestion.

In each of the above-described aspects, the conveyance device preferably includes a conveyance member that performs a rotational or traveling conveying operation and moves an object by operating the conveying member. Hereabout, the conveying situation estimator preferably estimates a predicted tip-side conveying movement amount, which is the minimum conveying movement amount of the tip-side of the object estimated to be detected by a sensor at a predetermined position when the object moves normally, and a predicted rear-end-side conveying movement amount, which is the maximum conveying movement amount of the rear-end of the object estimated to be detected by a sensor at a predetermined position when the object moves normally. Further, the conveyance device preferably includes a driving situation detector that acquires the actual conveying movement amount. Hereabout, the conveyance device preferably includes a comparator performing a front-end comparison by comparing the actual conveying movement amount with the predicted tip-side conveying movement amount when the actual front-end of the object is detected by the sensor at the predetermined position, and a rear-end comparison by comparing the actual conveyance operation amount with the predicted rear-end-side conveying movement amount when the actual rear end of the object is detected by the sensor at the predetermined position.

In the conveyance system of the present aspect, a front end comparison, which compares a predicted tip-side conveying movement amount with an actual conveying movement amount, and a rear end comparison, which compares a predicted rear-end-side conveying movement amount with an actual conveying movement amount, are conducted. Therefore, the estimated conveying situation and the actual conveying situation of an object can be compared more accurately.

In each of the above-described aspects, it is preferable that when the comparison by the comparator shows a difference of a certain amount or more between the expected conveying situation and the actual conveying situation, at least one of the following processes is performed: (1) changing conveying speed of the conveyance device; (2) correcting the estimated conveying situation of the conveying situation estimator; (3) changing the destination of the object; (4) stopping the conveyance device; (5) changing a conveying route; and (6) notification.

"Changing conveying speed of the conveyance device" can refer to either changing the speed of the entire conveyance device or changing the speed within a specific section of the conveyance device.

"Correcting the estimated conveying situation of the conveying situation estimator" is a measure taken when the estimation of the estimated conveying situation is considered to be unreasonable.

"Changing of the destination of the object" refers, for example, to returning the object to its initial position. Further, in order for an operator to perform manual sorting, the destination is changed to a manual sorting station.

"Stopping the conveyance device" refers to either stopping the entire conveyance device or stopping a partial section of the conveyance device.

"Changing a conveying route" refers to diverting the object to convey it to a predetermined destination.

"Notification" is performed by means of sound, light, text, or the like.

Another aspect for solving the same problem is a conveyance system for conveying a plurality of objects to their respective destinations by using a conveyance device, the conveyance device including: a conveying member that performs conveying operation through rotation or linear movement, thereby moving the object through the conveying operation of the conveying member, the conveyance system including: a tip-side predictor that estimates a predicted tip-side conveying movement amount, the predicted tip-side conveying movement amount being a minimum value of the conveying movement amount that is expected to be detected by a sensor at a predetermined position when a tip of the object moves normally; a driving situation detector that acquires an actual conveying movement amount of the conveyance device; and a front-end comparator that performs a front-end comparison of comparing the predicted tip-side conveying movement amount with the actual conveying movement amount when an actual tip of the object is detected by the sensor at a predetermined position.

In the conveyance system of the present aspect, since the actual conveying movement amount is compared with the predicted tip-side conveying movement amount, it becomes possible to compare the predicted arrival time of an object with the actual arrival time of the object, thereby enabling detection of unexpected space and unforeseen congestion.

Another aspect for solving the same problem is a conveyance system for conveying a plurality of objects to their respective destinations by using a conveyance device, the conveyance device including: a conveying member that performs conveying operation through rotation or linear movement, thereby moving the object through the conveying operation of the conveying member, the conveyance system including: a rear-end-side predictor that estimates a predicted rear-end-side conveying movement amount, the predicted rear-end-side conveying movement amount being a maximum value of the conveying movement amount that is expected to be detected by a sensor at a predetermined position when a tip of the object moves normally; a driving situation detector that acquires an actual conveying movement amount of the conveyance device; and a rear-end comparator that performs a rear-end comparison of comparing the predicted rear-end side conveying movement amount with the actual conveying movement amount when an actual rear-end of the object is detected by the sensor at a predetermined position.

In the conveyance system of the present aspect, since the actual conveying movement amount is compared with the predicted rear-end-side conveying movement amount, it becomes possible to compare the predicted rear-end arrival time of an object with the actual rear-end arrival time of the object, thereby enabling detection of unexpected space and unforeseen congestion.

Another aspect for solving the same problem is a conveyance system for conveying a plurality of objects to their respective destinations by using a conveyance device, the conveyance device including: a conveying member that performs conveying operation through rotation or linear movement, thereby moving the object through the conveying operation of the conveying member, the conveyance system including: a tip-side predictor that estimates a predicted tip-side conveying movement amount, the predicted tip-side conveying movement amount being a minimum value of the conveying movement amount that is expected to be detected by a sensor at a predetermined position when a tip of the object moves normally; a rear-end-side predictor that estimates a predicted rear-end-side conveying movement amount, the predicted rear-end-side conveying movement amount being a maximum value of the conveying movement amount that is expected to be detected by the sensor at a predetermined position when a tip of the object moves normally; a driving situation detector that acquires an actual conveying movement amount of the conveyance device; a front-end comparator that performs a front-end comparison of comparing the predicted tip-side conveying movement amount with the actual conveying movement amount when an actual tip of the object is detected by the sensor at a predetermined position; and a rear-end comparator that performs a rear-end comparison of comparing the predicted rear-end-side conveying movement amount with the actual conveying movement amount when an actual rear end of the object is detected by the sensor at a predetermined position.

In the conveyance system of the present aspect, since a front-end comparison of comparing the predicted tip-side conveying movement amount with the actual conveying movement amount and a rea- end comparison of comparing the predicted rear-end-side conveying movement amount with the actual conveying movement amount are carried out, more accurate comparison of the estimated conveying situation with the actual conveying situation of the object can be carried out.

In the above-mentioned aspect, at least one of the plurality of sensors is a sensor group, and the sensor group is configured to arrange a plurality of sensor elements in a direction intersecting with a conveying direction of the object.

According to the present aspect, the conveyance system uses the sensor group to recognize the situation of an object two-dimensionally thus being capable of detecting a shape and a conveying posture of an object as well as side-by side movement of objects.

Further, according to the present aspect, the conveyance system is capable of detecting distorted posture of an object or a situation where objects are being conveyed in parallel to each other.

In each of the above-described aspects, it is preferable that the driving situation detector be capable of executing a detection operation for detecting delay or early arrival of the object using information on the time of operation of the sensor element detected by each sensor element of the sensor group.

According to the present aspect, by detecting the delay or early arrival of the object, it becomes possible to identify unexpected spaces between objects or unexpected congestion during conveyance.

In each of the above-described aspects, it is preferable that the driving situation detector be capable of executing a detection operation to detect the side-by-side movement and/or the conveying posture of the object using the information on the time of operation of the sensor elements detected by each sensor element of the sensor group.

According to the present aspect, it is also possible to execute detection operations for abnormal conditions such as side-by-side movement or changes in the conveying posture of objects that are unexpected.

In each of the above-described aspects, it is preferable that the driving situation detector be capable of executing a detection operation for detecting a rotational situation of a specific member and/or time required for conveying the object.

According to the present aspect, it is possible to grasp conveying situation of an object.

In each of the above-described aspects, there is provided the conveyance system characterized by performing either cancellation of the side-by-side movement of an object or change of conveying posture based on the result of detection operation.

According to the present aspect, it is possible to cancel the side-by-side movement of objects or to achieve conveyance at a favorable posture.

In each of the above-described aspects, it is preferable that when the conveyance system detects an abnormality caused by delay, early arrival, removal, or insertion of an object, it resets a discrepancy between the estimated conveying situation and the actual conveying situation so that the estimated conveying situation should match the actual conveying situation that is detected.

According to the present aspect, when an abnormality such as delay, early arrival, removable, or insertion of an object is detected, it is possible to reset (reconfigure) the estimated conveying situation to a state closer to the actual conveying situation.

In each of the above-described aspects, it is preferable that when an object is conveyed from one conveying module to another adjacent conveying module, deviation between the estimated conveying situation and the actual conveying situation is reset and the estimated conveying situation is reconfigured to a situation closer to the detected actual conveying situation.

In each of the above-described aspects, it is preferable that the estimated conveying situation is reset to the detected actual conveying situation after an object has reached or passed the sensor.

According to the present aspect, since the estimated conveying situation is continuously updated to obtain the estimated conveying situation not significantly deviated from the actual conveying situation, the control becomes easier.

Another aspect for solving the same problem is a conveyance system for conveying a plurality of objects to their respective destinations, including: a conveyance device; a plurality of sensors; and a comparator, the conveyance device placing an actual object thereonto to actually move the actual object, at least any of the plurality of sensors being a sensor group that includes a plurality of sensor elements arranged in a direction intersecting a conveying direction of the object, wherein the conveyance system is configured to detect a side-by-side movement and/or a conveying posture of the object from information acquired by each of the sensor elements of the sensor group, and wherein the comparator is configured to compare a predetermined conveying posture with the side-by-side movement and/or the conveying posture of the object detected by the sensor.

According to the conveyance system of the present aspect, it is possible to grasp the conveying situation of an object and compare it with a predetermined conveying situation by means of the comparator.

In each of the above-described aspects, it is preferable that the conveyance device includes a conveying passage that branches into multiple passages and has multiple destinations, thereby conveying order of the objects corresponding to the destinations of the objects.

According to the conveyance system of the present aspect, since it is unnecessary to confirm the destination of an object at the branching section, the conveyance efficiency is high, thereby enabling an increase in the number of objects conveyed per unit time.

### EFFECT OF INVENTION

A conveyance system of the present invention can reduce the occurrence of an erroneous conveyance of the object.

### BRIEF DESCRIPTION OF DRAWINGS

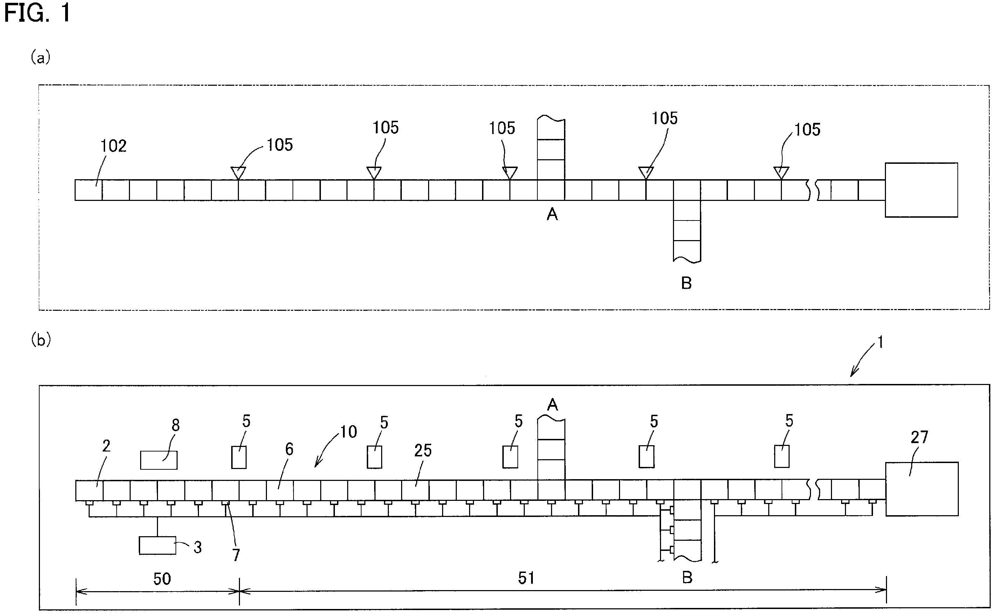

Fig.1 is a conceptual diagram of a conveyance system according to an embodiment of the present invention, wherein (a) shows a conveyor line assumed in a conveying situation estimator, and wherein (b) shows a real conveyor line.

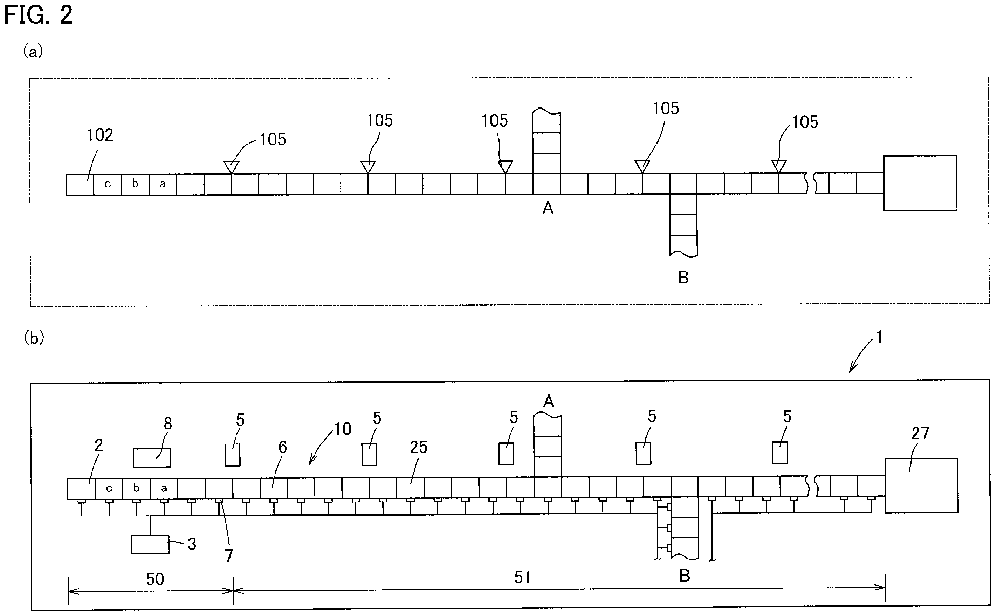

FIG. 2 is a conceptual diagram of a conveyance system according to the embodiment of the present invention, showing the situation where objects a, b, and c are conveyed using the conveyance system, wherein (a) shows the situation of the conveyor line estimated by the conveying situation estimator, and wherein (b) shows the situation of the real conveyor line.

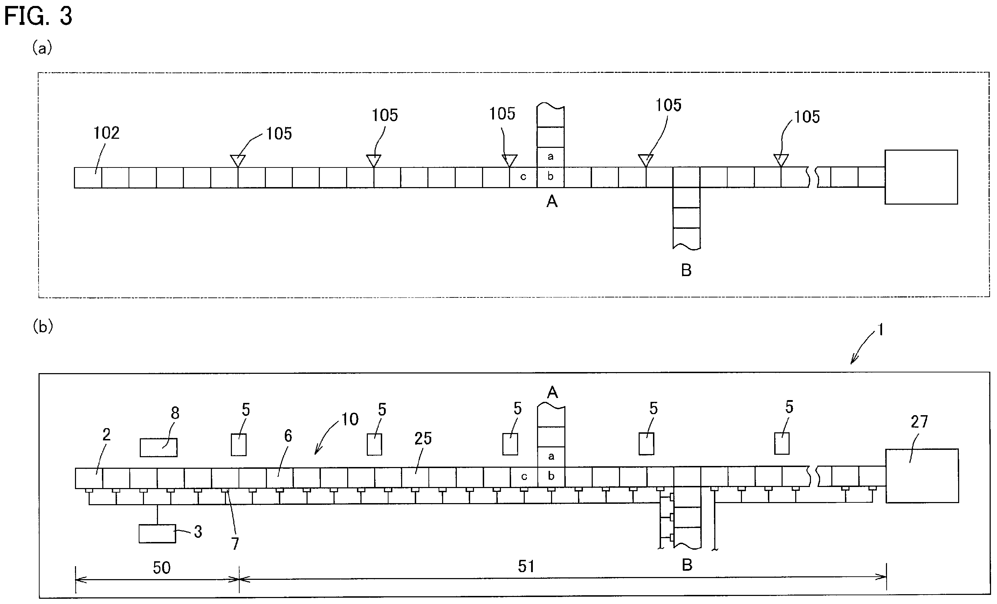

FIG. 3 is a conceptual diagram of a conveyance system according to the embodiment of the present invention, showing the situation where the objects a, b, and c are further conveyed after the situation in FIG. 2 using the conveyance system, wherein (a) shows the situation of the conveyor line estimated by the conveying situation estimator, and wherein (b) shows the situation of the real conveyor line.

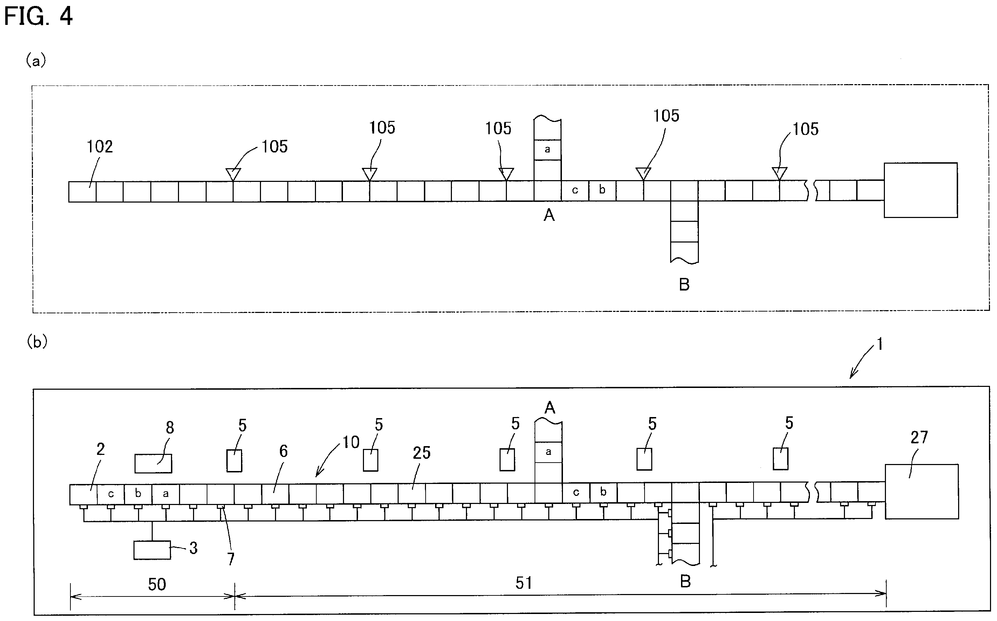

FIG. 4 is a conceptual diagram of a conveyance system according to the embodiment of the present invention, showing the situation where the objects a, b, and c are further conveyed after the situation in FIG. 3 using the conveyance system, wherein (a) shows the situation of the conveyor line estimated by the conveying situation estimator, and wherein (b) shows the situation of the real conveyor line.

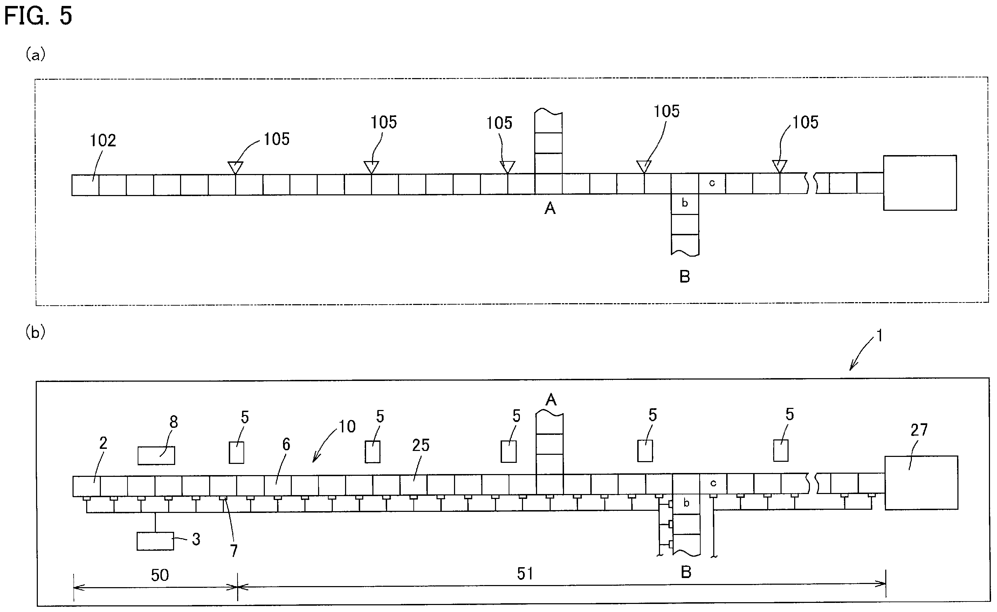

FIG. 5 is a conceptual diagram of a conveyance system according to the embodiment of the present invention, showing the situation where the objects a, b, and c are further conveyed after the situation in FIG. 4 using the conveyance system, wherein (a) shows the situation of the conveyor line estimated by the conveying situation estimator, and wherein (b) shows the situation of the real conveyor line.

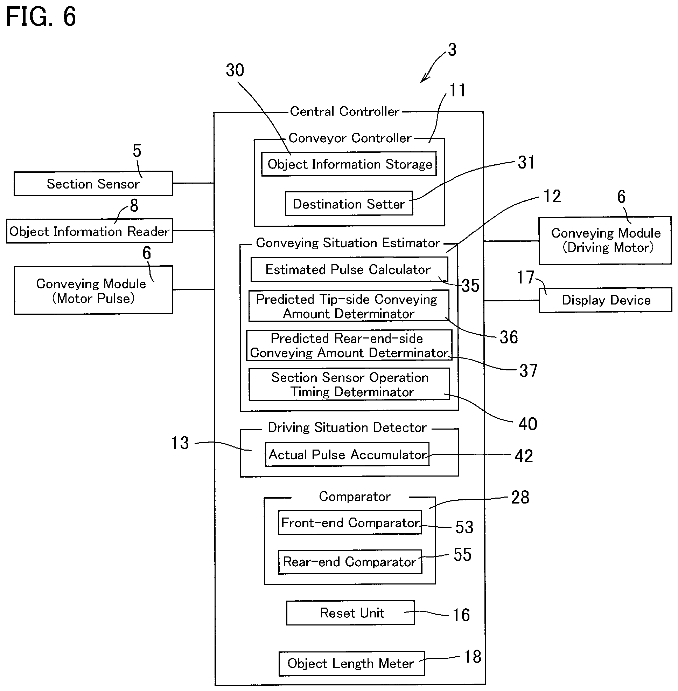

FIG. 6 is a block diagram of a central controller of the conveyance system according to the embodiment of the present invention.

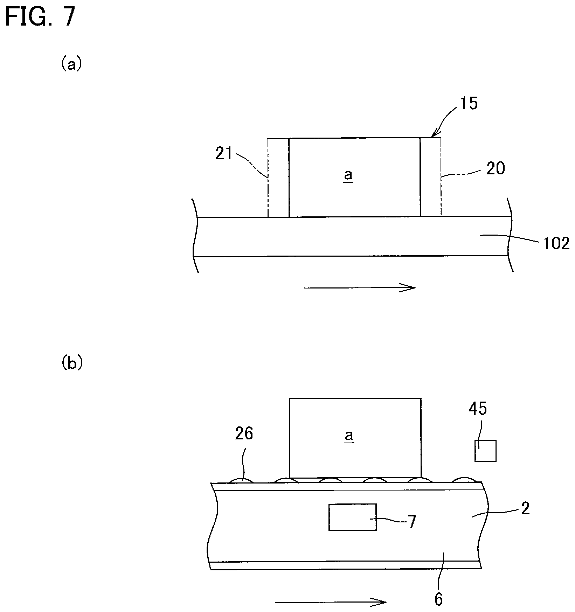

FIG. 7 is a conceptual diagram of a specific conveying module of the conveyance system according to the embodiment of the present invention, wherein (a) shows a conveying module estimated in the conveying situation estimator, and wherein (b) shows an actual conveying module.

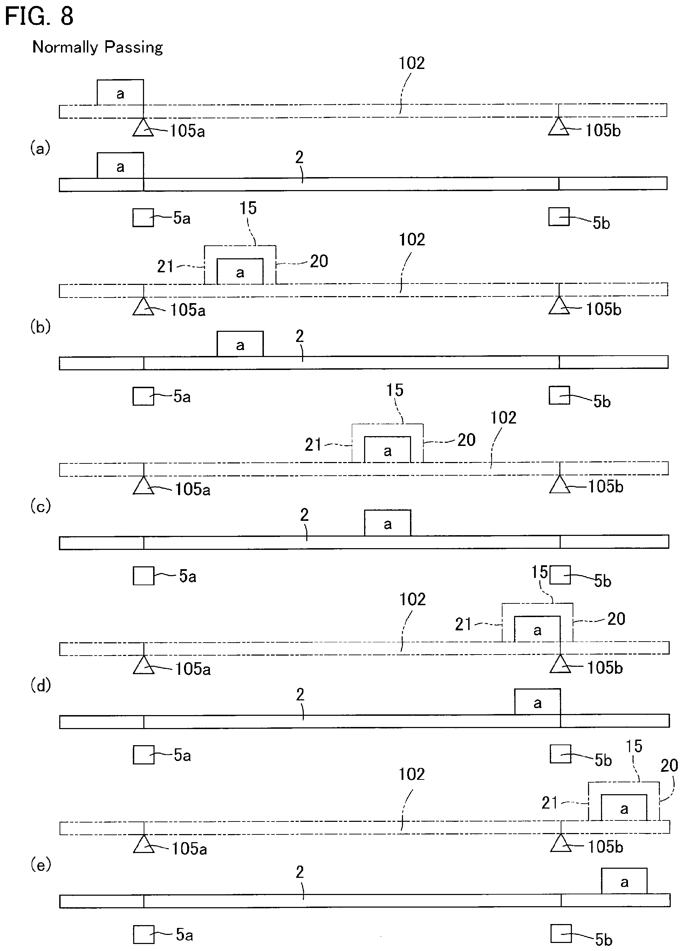

FIG. 8 is a conceptual diagram of a specific area of the conveyance system according to the embodiment of the present invention, showing the case where the object passes through the area as estimated; the upper illustrations of (a) to (e) represent the conveyor lines as assumed by the conveying situation estimator, while the lower illustrations of (a) to (e) represent the real conveyor lines.

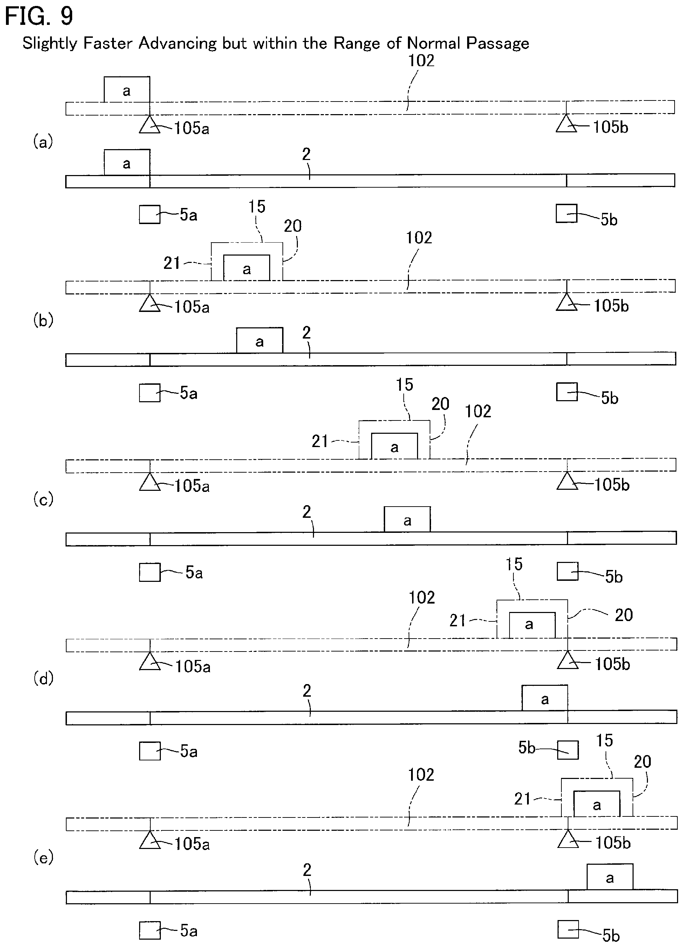

FIG. 9 is a conceptual diagram of a specific area of the conveyance system according to the embodiment of the present invention, showing the case where the object moves slightly faster yet passes through the area normally; the upper illustrations of (a) to (e) represent the conveyor lines as estimated by the conveying situation estimator, while the lower illustrations of (a) to (e) represent the real conveyor lines.

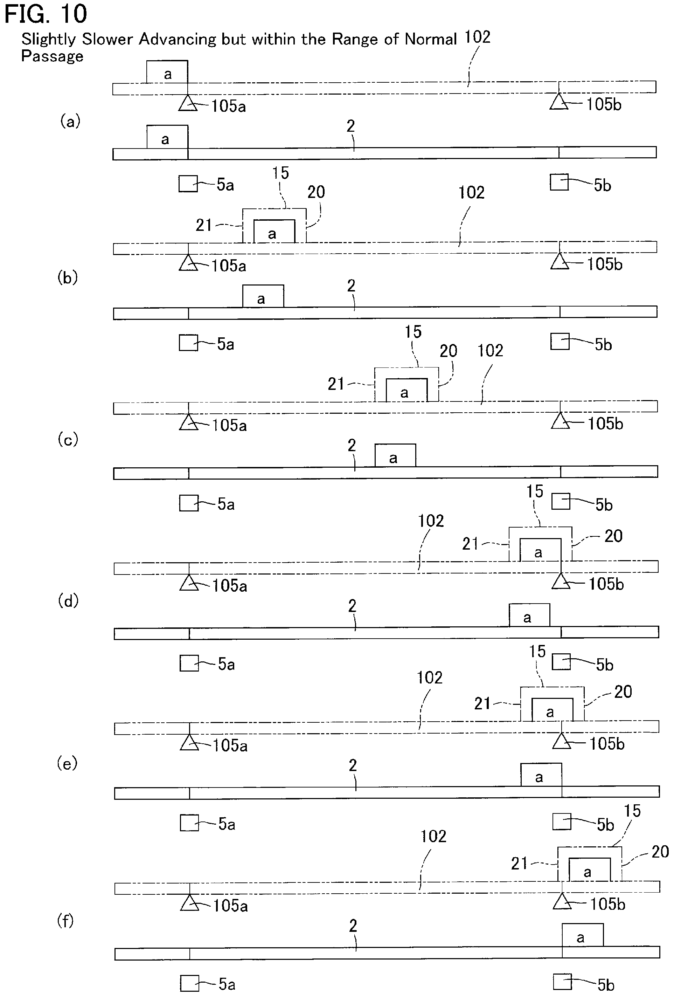

FIG. 10 is a conceptual diagram of a specific area of the conveyance system according to the embodiment of the present invention, showing the case where the object moves slightly slower yet passes through the area normally; the upper illustrations of (a) to (e) represent the conveyor lines as estimated by the conveying situation estimator, while the lower illustrations of (a) to (e) represent the real conveyor lines.

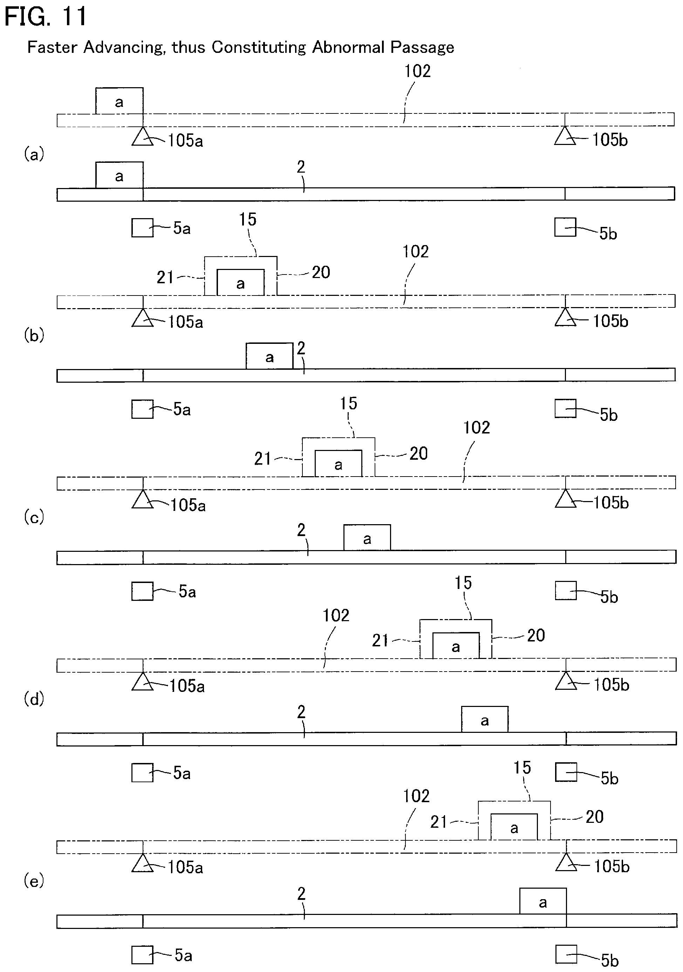

FIG. 11 is a conceptual diagram of a specific area of the conveyance system according to the embodiment of the present invention, showing the case where the object moves too fast and passes through the area too quickly; the upper illustrations of (a) to (e) represent the conveyor lines as estimated by the conveying situation estimator, while the lower illustrations of (a) to (e) represent the real conveyor lines.

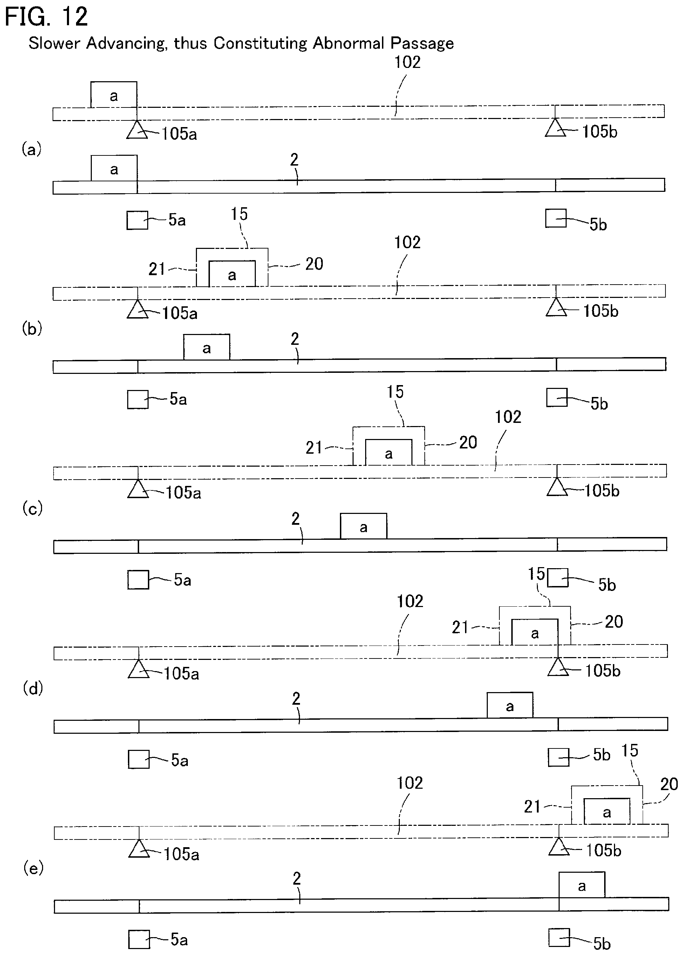

FIG. 12 is a conceptual diagram of a specific area of the conveyance system according to the embodiment of the present invention, showing the case where the object moves too slow and passes through the area too delayed; the upper illustrations of (a) to (e) represent the conveyor lines as estimated by the conveying situation estimator, while the lower illustrations of Figs. (a) to (e) represent the real conveyor lines.

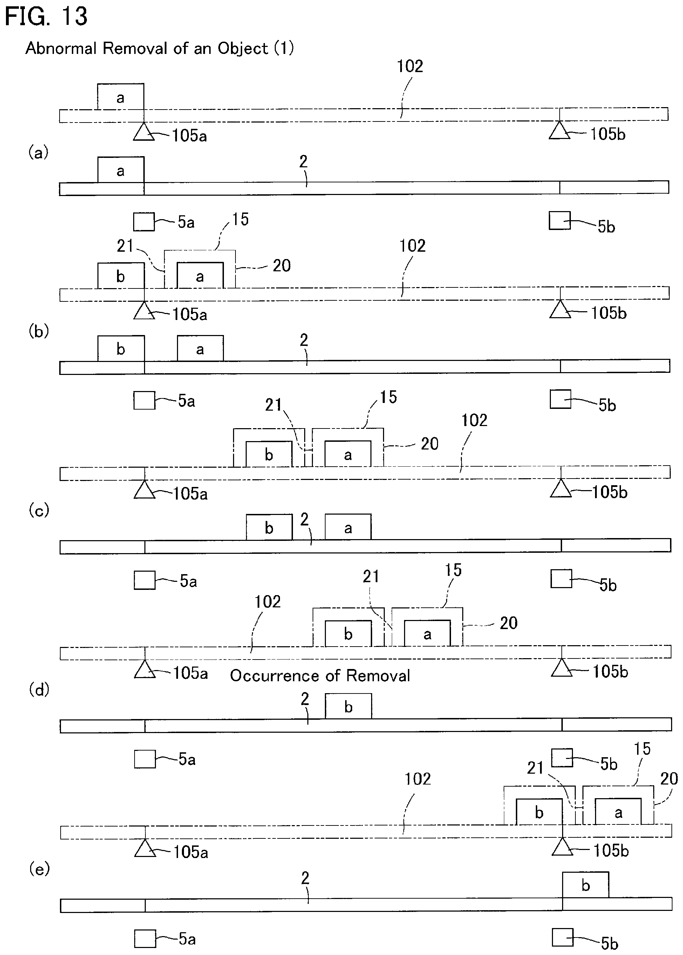

FIG. 13 is a conceptual diagram of a specific area of the conveyance system according to the embodiment of the present invention, showing the case where the object is removed midway; the upper illustrations of (a) to (e) represent the conveyor lines as estimated by the conveying situation estimator, while the lower illustrations of (a) to (e) represent the real conveyor lines.

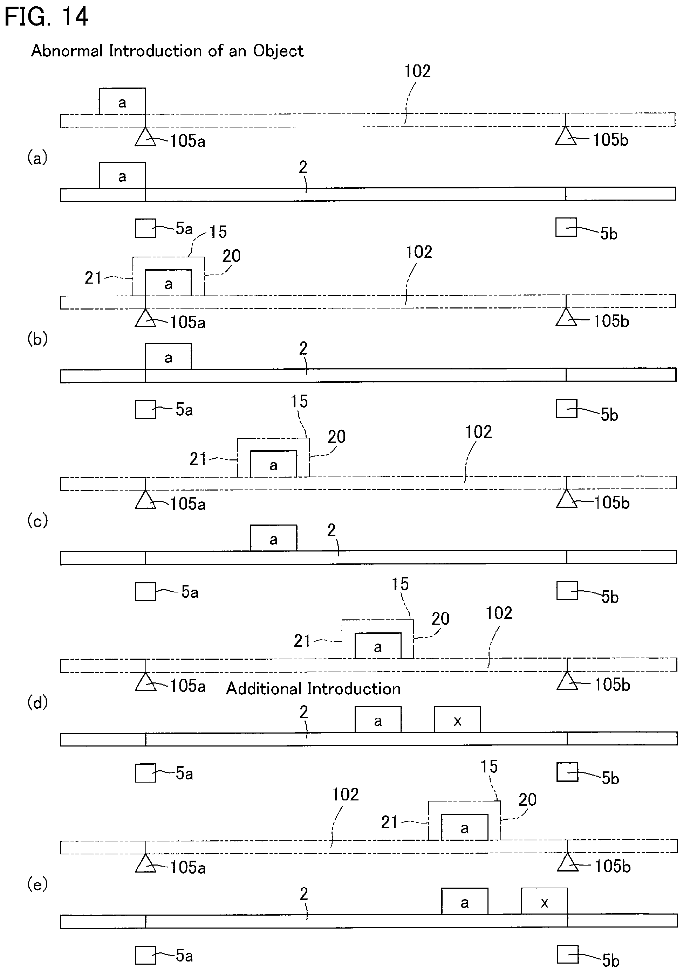

FIG. 14 is a conceptual diagram of a specific area of the conveyance system according to the embodiment of the present invention, showing the case where the object is introduced midway; the upper illustrations of (a) to (e) represent the conveyor lines as estimated by the conveying situation estimator, while the lower illustrations of (a) to (e) represent the real conveyor lines.

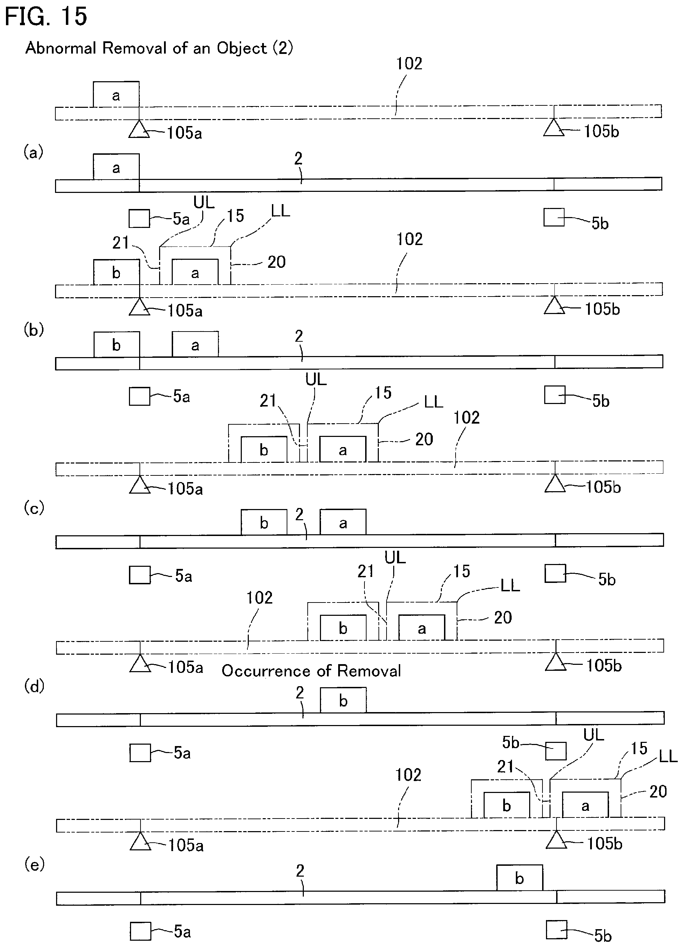

FIG. 15 is a conceptual diagram of a specific area of the conveyance system according to the embodiment of the present invention, showing the case where the object is removed midway; the upper illustrations of (a) to (e) represent the conveyor lines as estimated by the conveying situation estimator, while the lower illustrations of (a) to (e) represent the real conveyor lines.

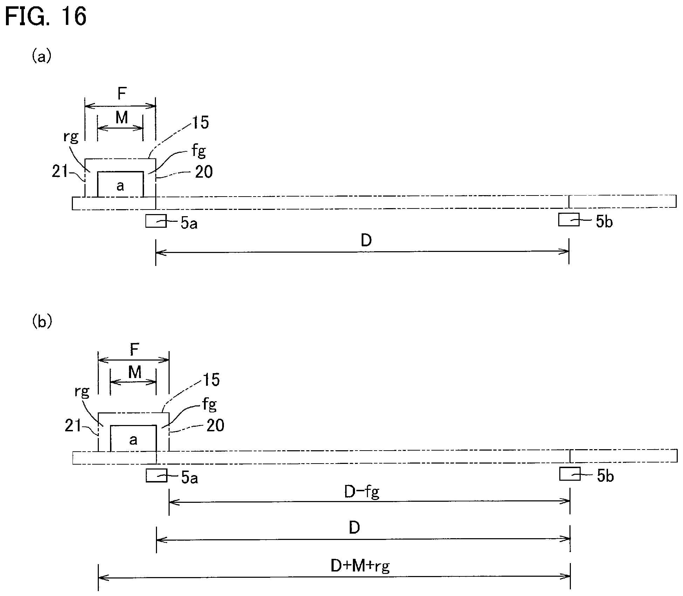

FIG. 16 is an explanatory diagram illustrating the relationship among a monitoring section, the size of an object, a predicted tip-side conveying movement amount, and a predicted rear-end-side conveying movement amount.

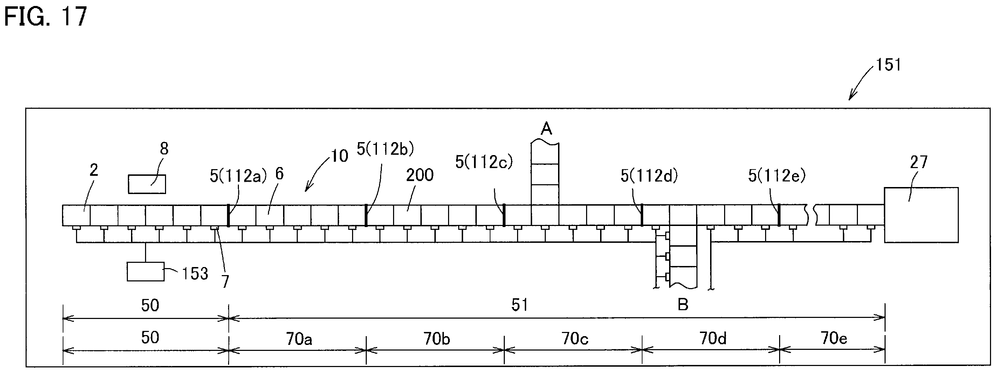

FIG. 17 is a conceptual diagram of the conveyance system according to the second embodiment of the present invention, representing a real conveyor line.

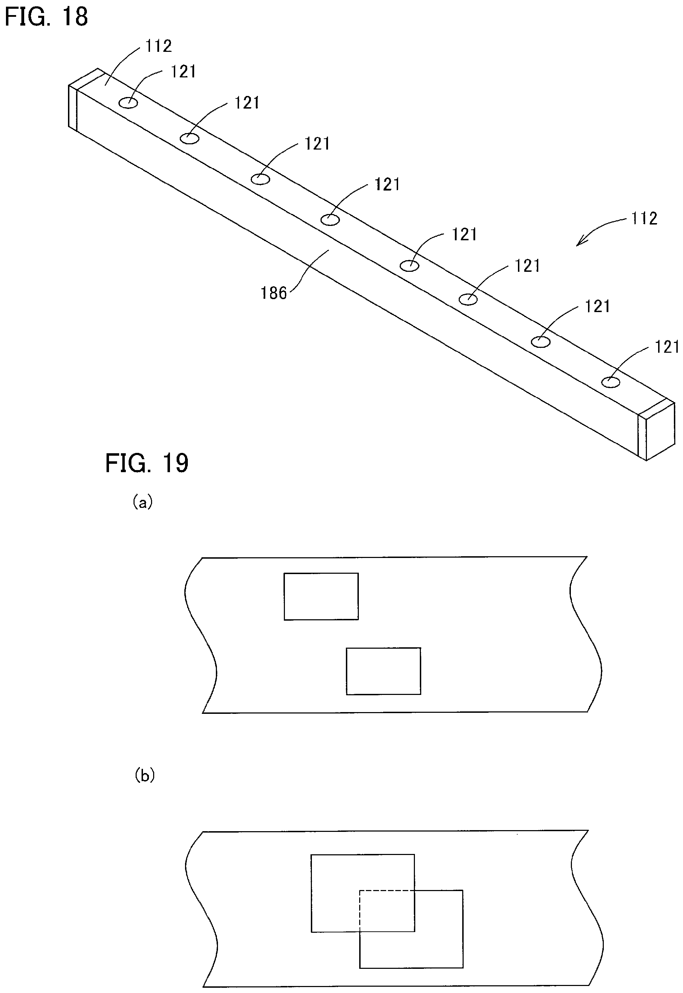

FIG. 18 is a perspective view of a sensor unit (sensor group).
FIG. 19 is an explanatory diagram; illustrations of (a) and (b) represent a state where objects advance side by side to each other.

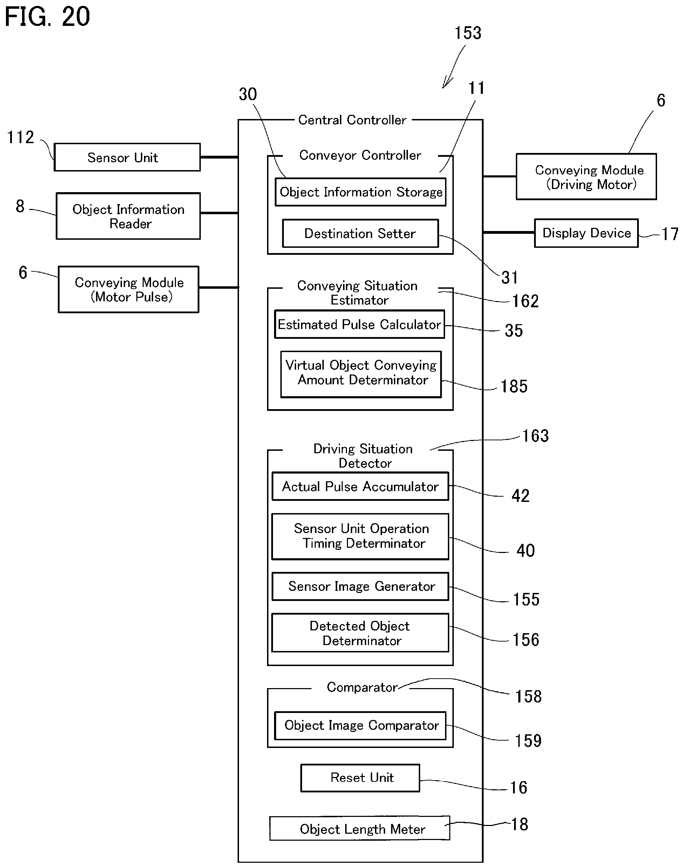

FIG. 20 is a block diagram illustrating a central controller of the conveyance system according to the second embodiment of the present invention.

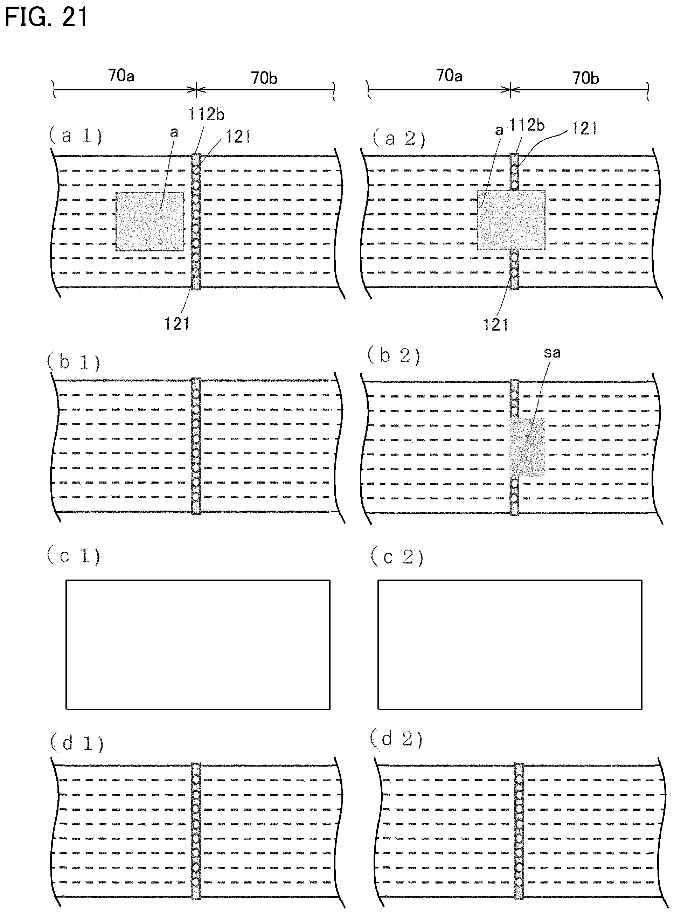

FIG. 21 is a conceptual diagram of a partial section of a conveyance device according to the second embodiment of the present invention viewed in plan, illustrating the movement when an object is conveyed in a posture parallel to the conveying direction, wherein (a1) and (a2) represent illustrations showing the movement of an actual object on the conveyance device, wherein (b1) and (b2) represent illustrations showing the sensor images on the conveyance device, wherein (c1) and (c2) represent illustrations showing the posture and shape of an object derived from a sensor image at reset, and wherein (d1) and (d2) represent illustrations showing the movement of an virtual object on the conveyance device.

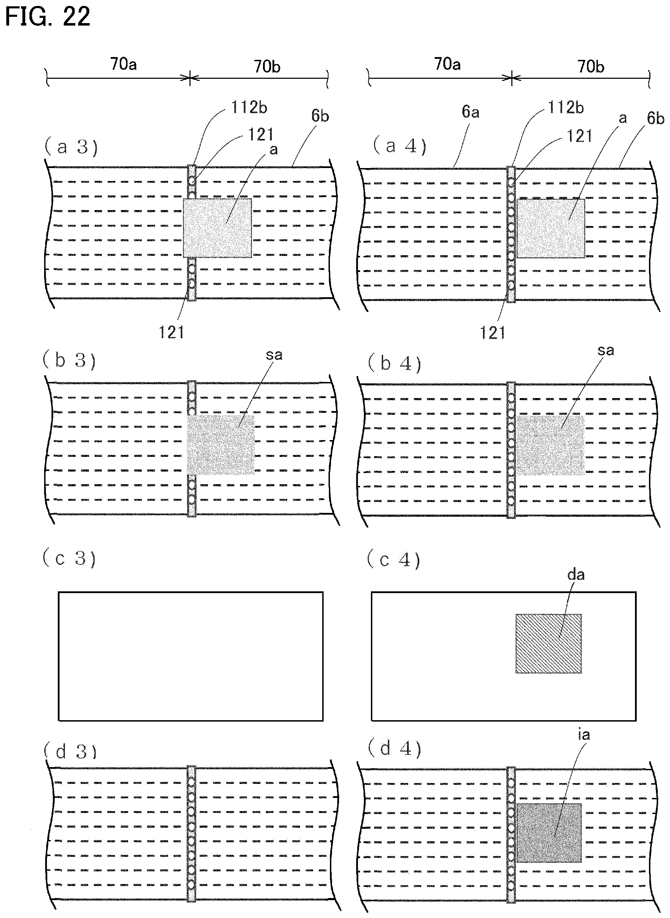

FIG. 22 is a conceptual diagram of a partial section of the conveyance device viewed in plan, illustrating the movement of the object continuing from FIG. 21, wherein (a3) and (a4) represent illustrations showing the movement of an actual object on the conveyance device, wherein (b3) and (b4) represent illustrations showing the sensor images on the conveyance device, wherein (c3) and (c4) represent illustrations showing the posture and shape of an object derived from a sensor image at reset, and wherein (d3) and (d4) represent illustrations showing the movement of the virtual object on the conveyance device.

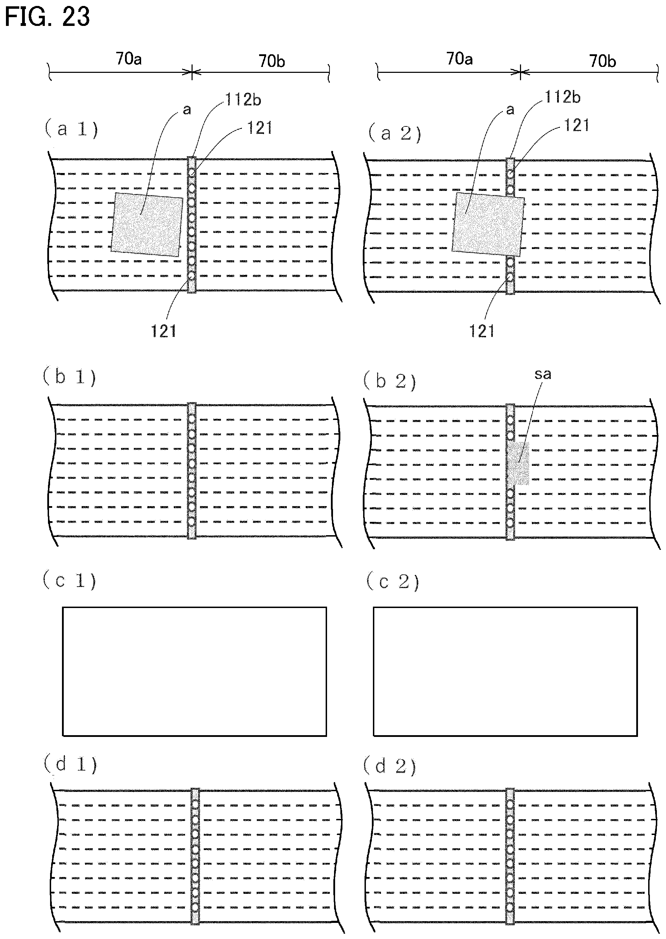

FIG. 23 is a conceptual diagram of a partial section of a conveyance device according to the second embodiment of the present invention viewed in plan, illustrating the movement when the posture of an object is inclined, wherein (a1) and (a2) represent illustrations showing the movement of an actual object on the conveyance device, wherein (b1) and (b2) represent illustrations showing the sensor images on the conveyance device, wherein (c1) and (c2) represent illustrations showing the posture and shape of an object derived from a sensor image at reset, and wherein (d1) and (d2) represent illustrations showing the movement of an virtual object on the conveyance device.

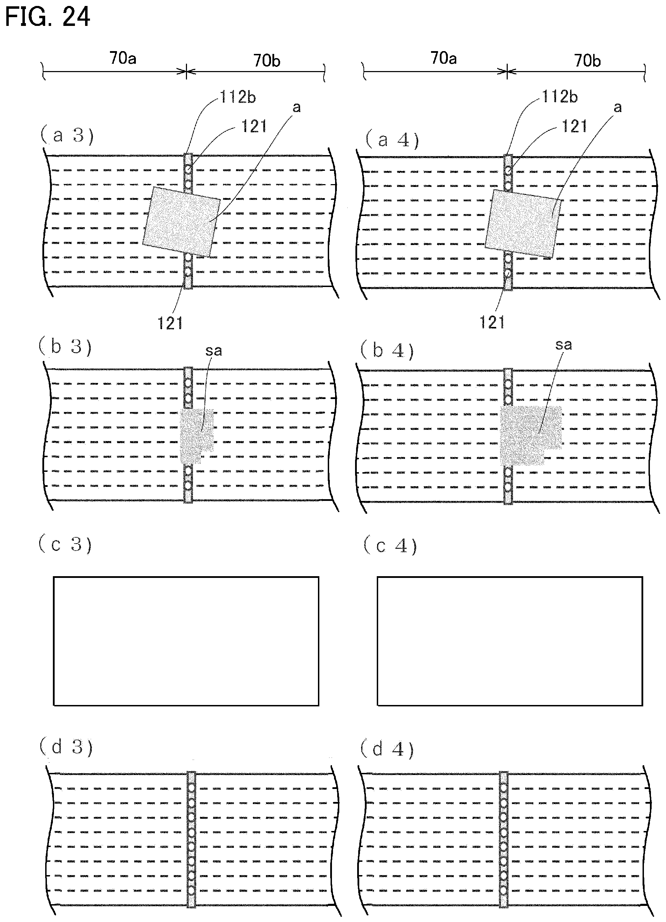

FIG. 24 is a conceptual diagram of a partial section of the conveyance device viewed in plan, illustrating the movement of the object continuing from FIG. 23, wherein (a3) and (a4) represent illustrations showing the movement of an actual object on the conveyance device, wherein (b3) and (b4) represent illustrations showing the sensor images on the conveyance device, wherein (c3) and (c4) represent illustrations showing the posture and shape of an object derived from a sensor image at reset, and (d3) and (d4) represent illustrations showing the movement of the virtual object on the conveyance device.

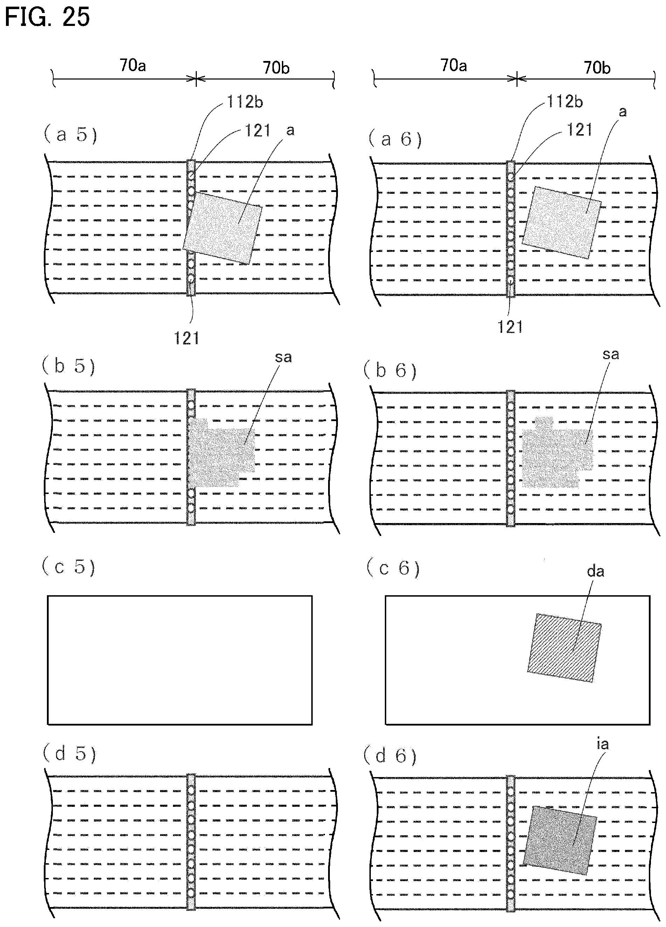

FIG. 25 is a conceptual diagram of a partial section of the conveyance device viewed in plan, illustrating the movement of the object continuing from FIG. 24, wherein (a5) and (a6) represent illustrations showing the movement of an actual object on the conveyance device, wherein (b5) and (b6) represent illustrations showing the sensor images on the conveyance device, wherein (c5) and (c6) represent illustrations showing the posture and shape of an object derived from a sensor image at reset, and wherein (d5) and (d6) represent illustrations showing the movement of the virtual object on the conveyance device.

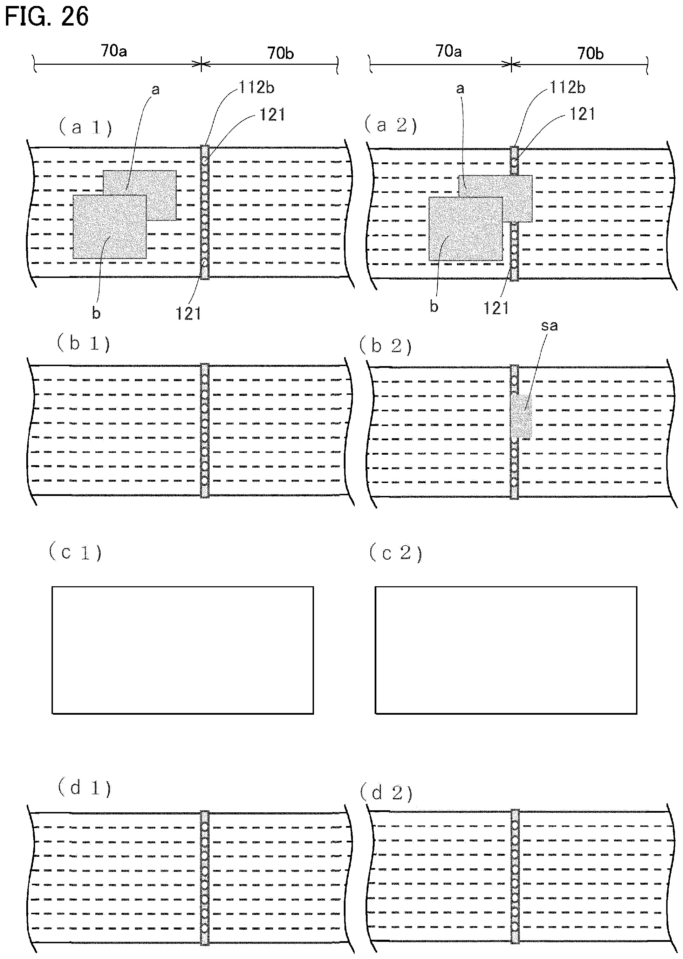

FIG. 26 is a conceptual diagram of a partial section of a conveyance device according to the second embodiment of the present invention viewed in plan, illustrating the movement when two objects are conveyed while overlapped, wherein (a1) and (a2) represent illustrations showing the movement of an actual object on the conveyance device, wherein (b1) and (b2) represent illustrations showing the sensor images on the conveyance device, wherein (c1) and (c2) represent illustrations showing the posture and shape of an object derived from a sensor image at reset, and wherein (d1) and (d2) represent illustrations showing the movement of an virtual object on the conveyance device.

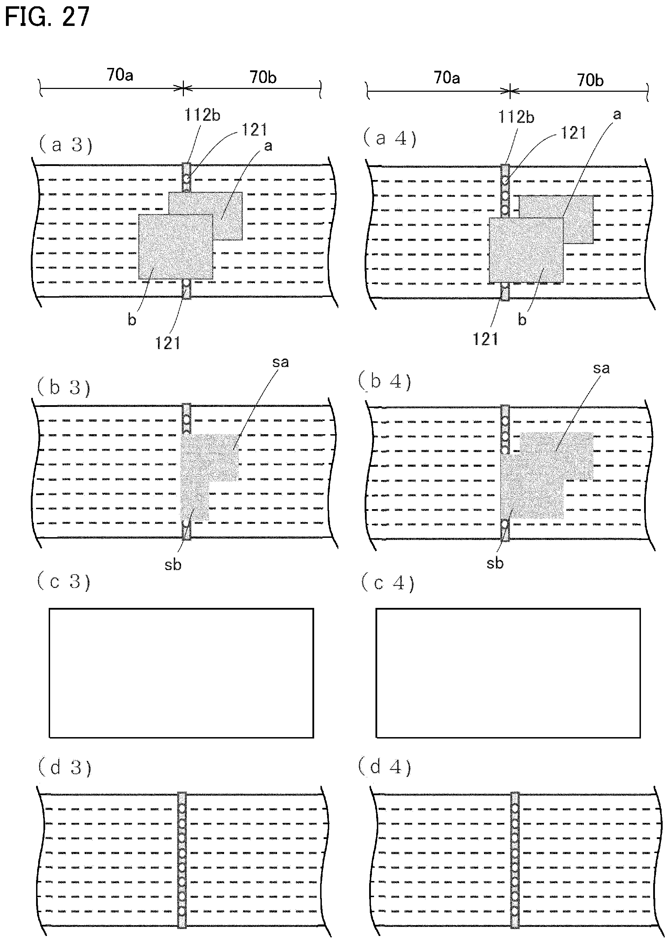

FIG. 27 is a conceptual diagram of a partial section of the conveyance device viewed in plan, illustrating the movement of the object continuing from FIG. 26, wherein (a3) and (a4) represent illustrations showing the movement of an actual object on the conveyance device, wherein (b3) and (b4) represent illustrations showing the sensor images on the conveyance device, wherein (c3) and (c4) represent illustrations showing the posture and shape of an object derived from a sensor image at reset, and (d) and (d4) represent illustrations showing the movement of the virtual object on the conveyance device.

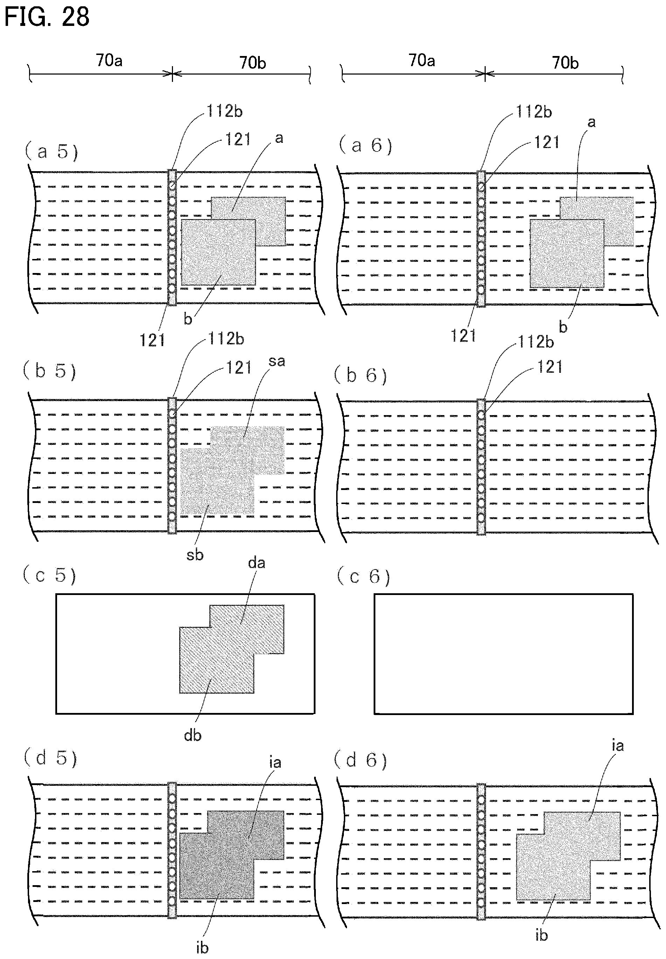

FIG. 28 is a conceptual diagram of a partial section of the conveyance device viewed in plan, illustrating the movement of the object continuing from FIG. 27, wherein (a5) and (a6) represent illustrations showing the movement of an actual object on the conveyance device, wherein (b5) and (b6) represent illustrations showing the sensor images on the conveyance device, wherein (c5) and (c6) represent illustrations showing the posture and shape of an object derived from a sensor image at reset, and wherein (d5) and (d6) represent illustrations showing the movement of the virtual object on the conveyance device.

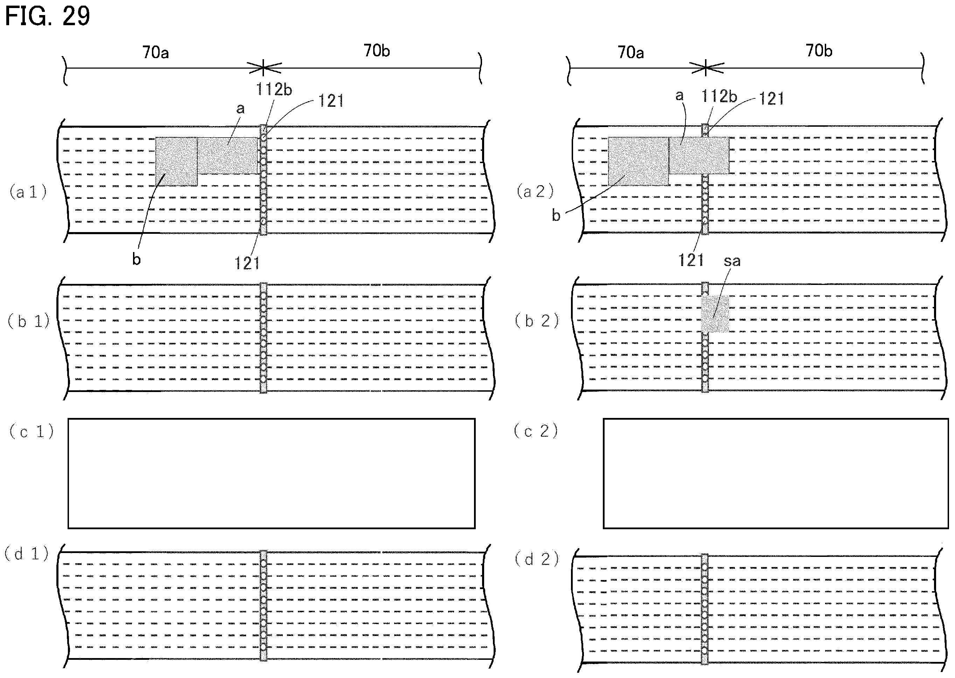

FIG. 29 is a conceptual diagram of a partial section of a conveyance device according to the second embodiment of the present invention viewed in plan, illustrating the movement when a subsequent object pushes a preceding object during conveyance, wherein (a) and (b) represent illustrations showing the movement of an actual object on the conveyance device, wherein (b1) and (b2) represent illustrations showing the sensor images on the conveyance device, wherein (c1) and (c2) represent illustrations showing the posture and shape of an object derived from a sensor image at reset, and wherein (d1) and (d2) represent illustrations showing the movement of a virtual object on the conveyance device.

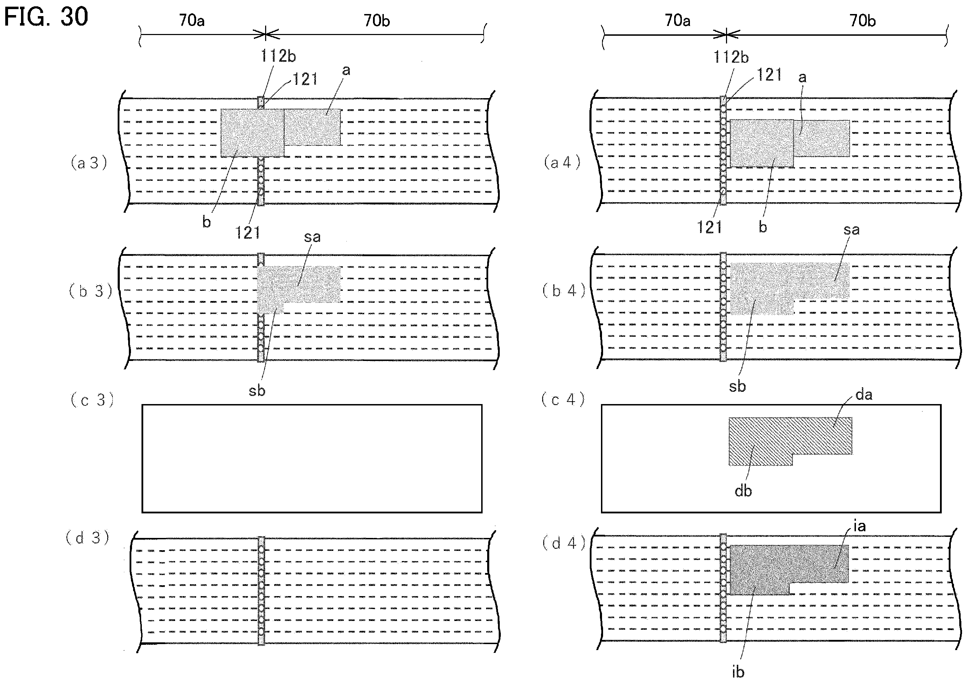

FIG. 30 is a conceptual diagram of a partial section of the conveyance device viewed in plan, illustrating the movement of the object continuing from FIG. 29, wherein (a3) and (a4) represent illustrations showing the movement of an actual object on the conveyance device, wherein (b3) and (b4) represent illustrations showing the sensor images on the conveyance device, wherein (c3) and (c4) represent illustrations showing the posture and shape of an object derived from a sensor image at reset, and wherein (d3) and (d4) represent illustrations showing the movement of the virtual object on the conveyance device.

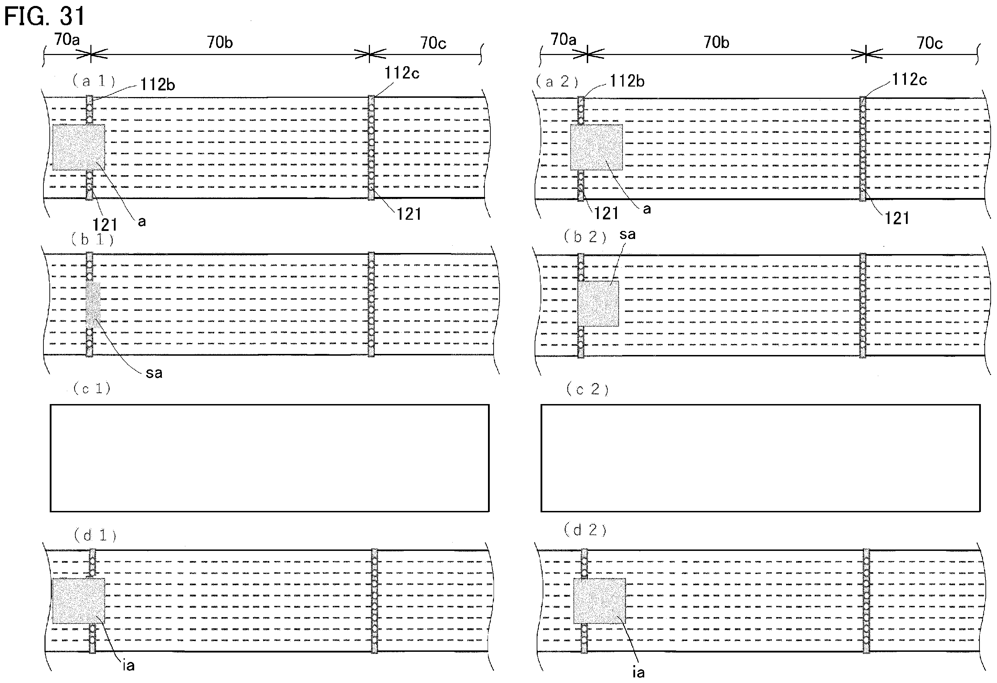

FIG. 31 is a conceptual diagram of a partial section of a conveyance device according to the second embodiment of the present invention viewed in plan, illustrating the movement when the posture of the conveyed object changes midway, wherein (a1) and (a2) represent illustrations showing the movement of an actual object on the conveyance device, wherein (b1) and (b2) represent illustrations showing the sensor images on the conveyance device, wherein (c1) and (c2) represent illustrations showing the posture and shape of an object derived from a sensor image at reset, and wherein (d1) and (d2) represent illustrations showing the movement of a virtual object on the conveyance device.

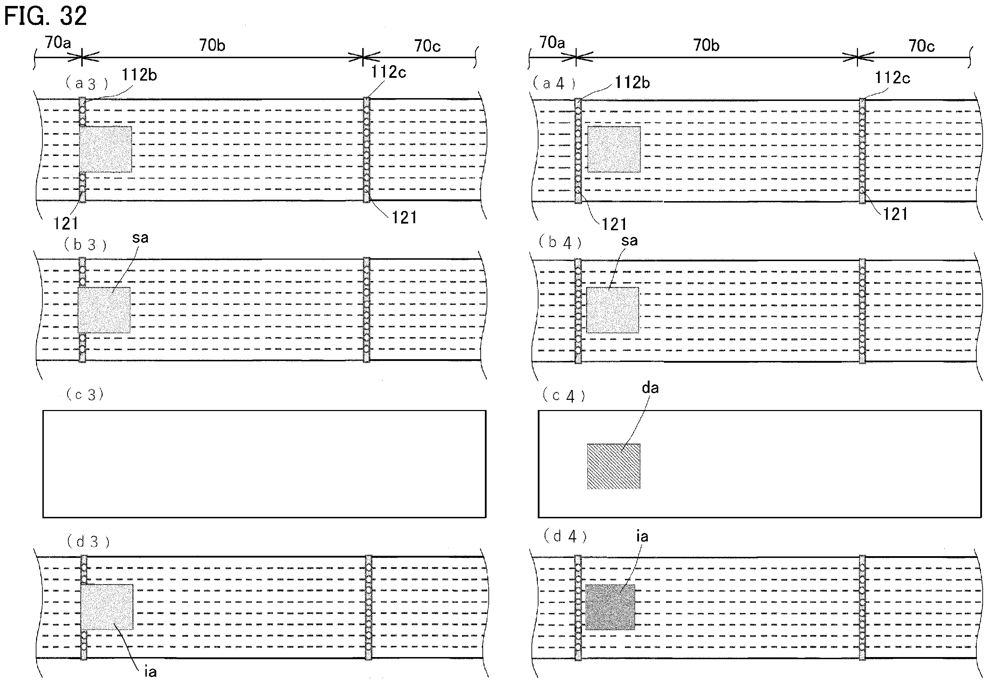

FIG. 32 is a conceptual diagram of a partial section of the conveyance device viewed in plan, illustrating the movement of the object continuing from FIG. 31, wherein (a3) and (a4) represent illustrations showing the movement of an actual object on the conveyance device, wherein (b3) and (b4) represent illustrations showing the sensor images on the conveyance device, wherein (c3) and (c4) represent illustrations showing the posture and shape of an object derived from a sensor image at reset, and wherein (d3) and (d4) represent illustrations showing the movement of the virtual object on the conveyance device.

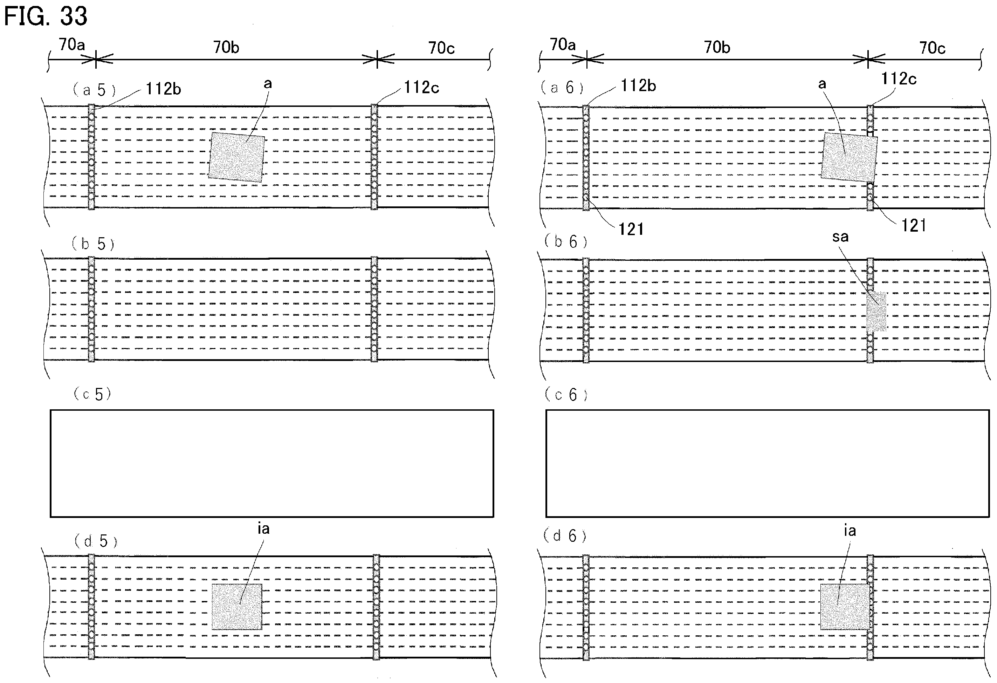

FIG. 33 is a conceptual diagram of a partial section of the conveyance device viewed in plan, illustrating the movement of the object continuing from FIG. 32, wherein (a5) and (a6) represent illustrations showing the movement of the actual object on the conveyance device, wherein (b5) and (b6) represent illustrations showing the sensor images on the conveyance device, wherein (c5) and (c6) represent illustrations showing the posture and shape of an object derived from a sensor image at reset, and wherein (d5) and (d6) represent illustrations showing the movement of the virtual object on the conveyance device.

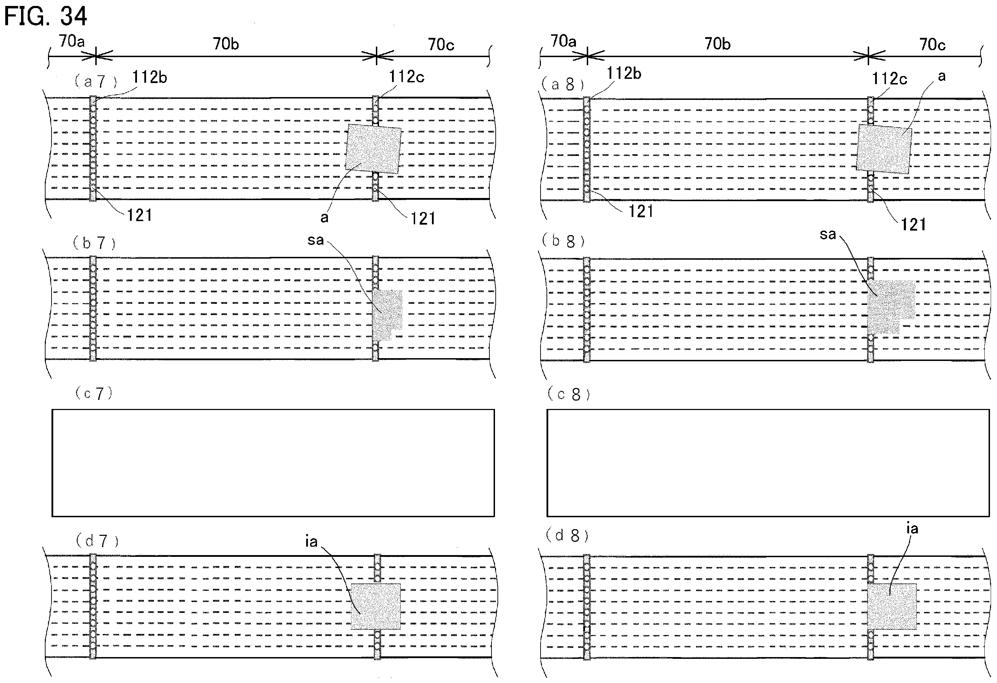

FIG. 34 is a conceptual diagram of a partial section of the conveyance device viewed in plan, illustrating the movement of the object continuing from FIG. 33, wherein (a7) and (a8) represent illustrations showing the movement of the actual object on the conveyance device, wherein (b7) and (b8) represent illustrations showing the sensor images on the conveyance device, wherein (c7) and (c8) represent illustrations showing the posture and shape of an object derived from a sensor image at reset, and wherein (d7) and (d8) represent illustrations showing the movement of the virtual object on the conveyance device.

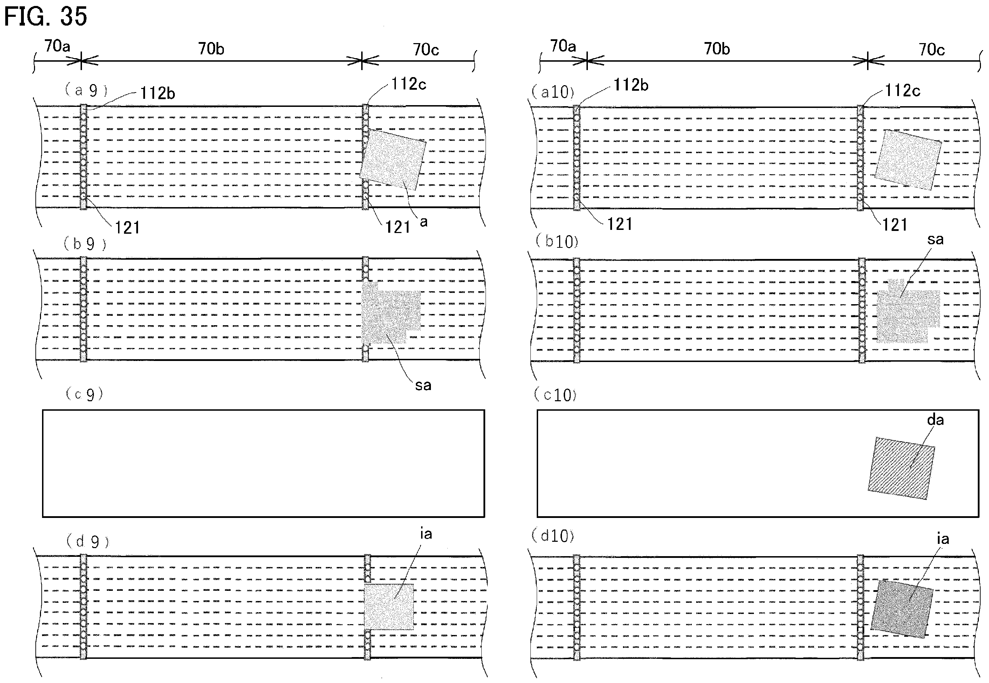

FIG. 35 is a conceptual diagram of a partial section of the conveyance device viewed in plan, illustrating the movement of the object continuing from FIG. 34, wherein (a9) and (a10) represent illustrations showing the movement of the actual object on the conveyance device, wherein (b9) and (b10) represent illustrations showing the sensor images on the conveyance device, wherein (c9) and (c10) represent illustrations showing the posture and shape of an object derived from a sensor image at reset, and wherein (c9) and (c10) represent illustrations showing the movement of the virtual object on the conveyance device.

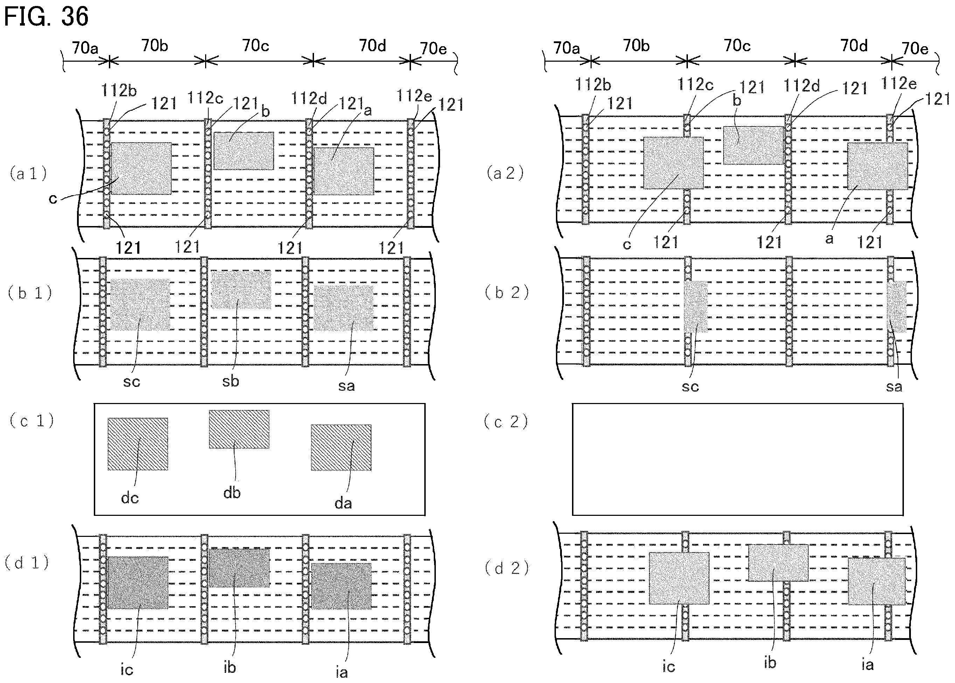

FIG. 36 is a conceptual diagram of a partial section of a conveyance device according to the second embodiment of the present invention viewed in plan, illustrating the movement when a preceding conveyed object is stationary and a subsequent conveyed object overlaps by mounting on top of it, resulting in two conveyed objects being transported overlapping each other, wherein (a1) and (a2) represent illustrations showing the movement of an actual object on the conveyance device, wherein (b1) and (b2) represent illustrations showing the sensor images on the conveyance device, wherein (c1) and (c2) represent illustrations showing the posture and shape of an object derived from a sensor image at reset, and wherein (d1) and (d2) represent illustrations showing the movement of a virtual object on the conveyance device.

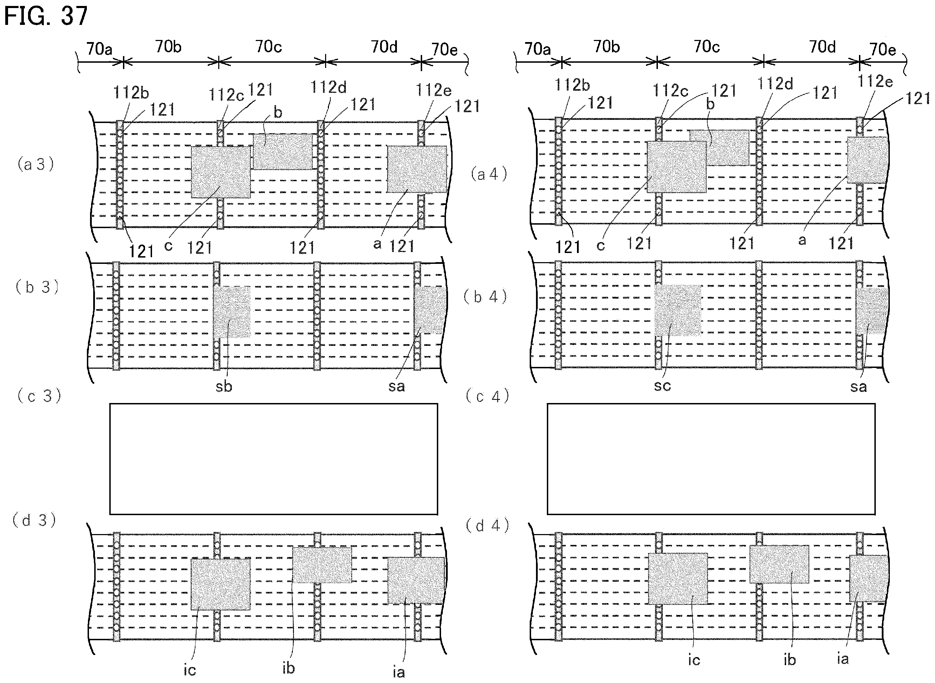

FIG. 37 is a conceptual diagram of a partial section of the conveyance device viewed in plan, illustrating the movement of the object continuing from FIG. 36, wherein (a3) and (a4) represent illustrations showing the movement of an actual object on the conveyance device, wherein (b3) and (b4) represent illustrations showing the sensor images on the conveyance device, wherein (c3) and (c4) represent illustrations showing the posture and shape of an object derived from a sensor image at reset, and wherein (d3) and (d4) represent illustrations showing the movement of the virtual object on the conveyance device.

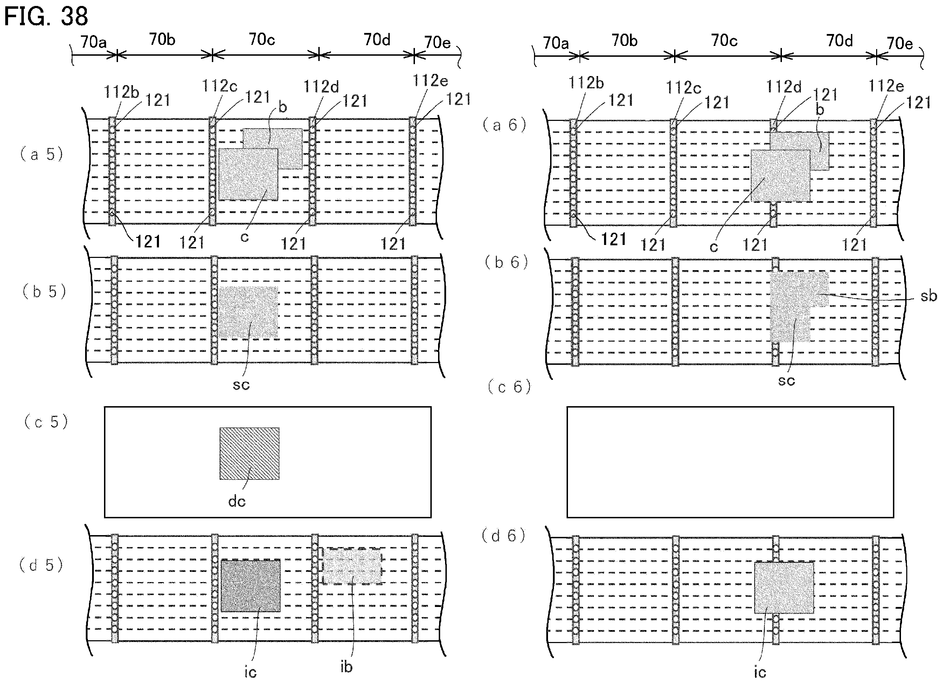

FIG. 38 is a conceptual diagram of a partial section of the conveyance device viewed in plan, illustrating the movement of the object continuing from FIG. 37, wherein (a5) and (a6) represent illustrations showing the movement of the actual object on the conveyance device, wherein (b5) and (b6) represent illustrations showing the sensor images on the conveyance device, wherein (c5) and (c6) represent illustrations showing the posture and shape of an object derived from a sensor image at reset, and wherein (d5) and (d6) represent illustrations showing the movement of the virtual object on the conveyance device.

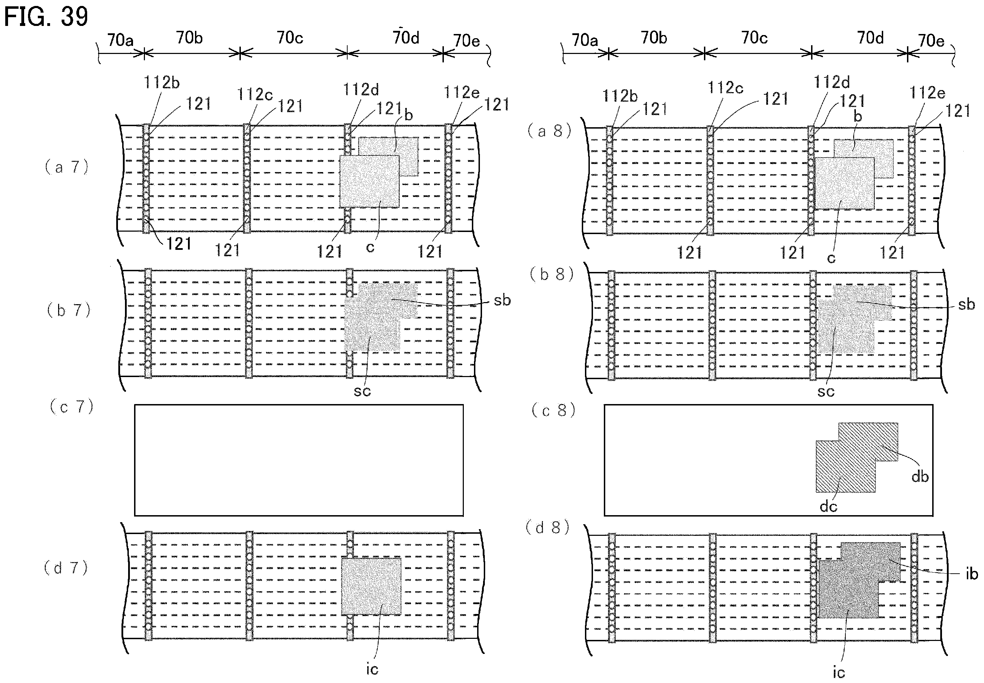

FIG. 39 is a conceptual diagram of a partial section of the conveyance device viewed in plan, illustrating the movement of the object continuing from FIG. 38, wherein (a7) and (a8) represent illustrations showing the movement of the actual object on the conveyance device, wherein (b7) and (b8) represent illustrations showing the sensor images on the conveyance device, wherein (c7) and (c8) represent illustrations showing the posture and shape of an object derived from a sensor image at reset, and wherein (d7) and (d8) represent illustrations showing the movement of the virtual object on the conveyance device.

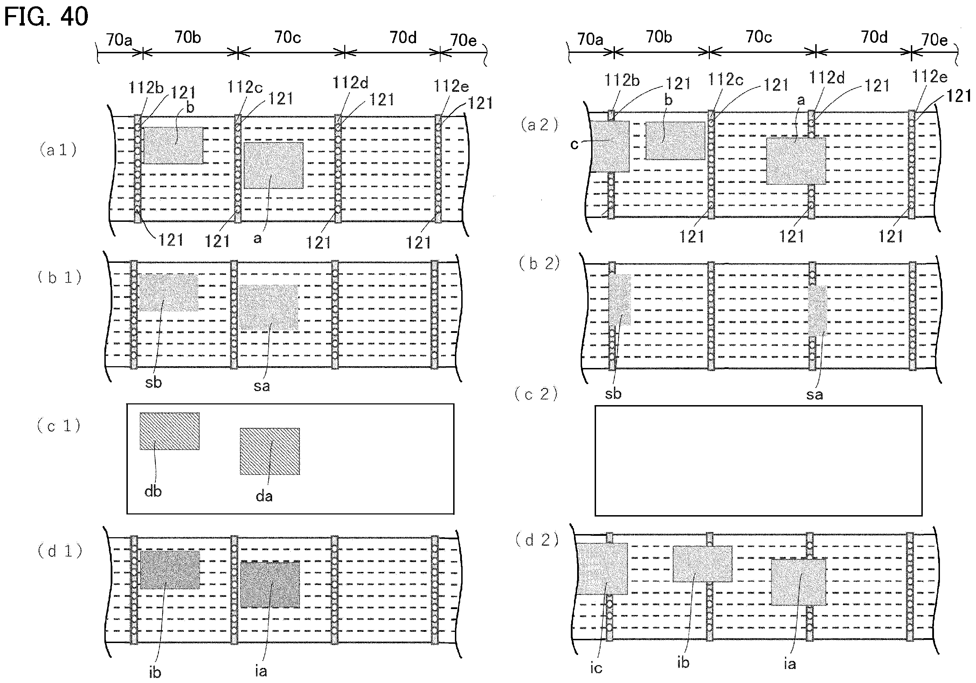

FIG. 40 is a conceptual diagram of a partial section of a conveyance device according to the second embodiment of the present invention viewed in plan, illustrating the movement when a subsequent object pushes a preceding object after the preceding object has stopped, thereby conveying the preceding object along, wherein (a1) and (a2) represent illustrations showing the movement of an actual object on the conveyance device, wherein (b1) and (b2) represent illustrations showing the sensor images on the conveyance device, wherein (c1) and (c2) represent illustrations showing the posture and shape of an object derived from a sensor image at reset, and wherein (d1) and (d2) represent illustrations showing the movement of a virtual object on the conveyance device.

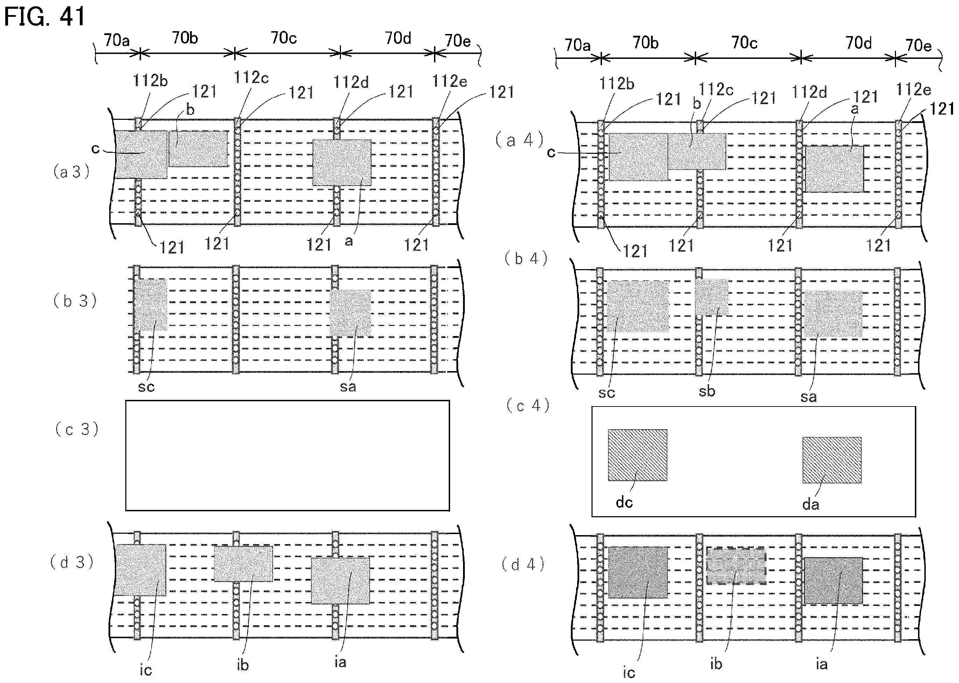

FIG. 41 is a conceptual diagrams of a partial section of the conveyance device viewed in plan, illustrating the movement of the object continuing from FIG. 40, wherein (a3) and (a4) represent illustrations showing the movement of an actual object on the conveyance device, wherein (b3) and (b4) represent illustrations showing the sensor images on the conveyance device, wherein (c3) and (c4) represent illustrations showing the posture and shape of an object derived from a sensor image at reset, and wherein (d39 and (d4) represent illustrations showing the movement of the virtual object on the conveyance device.

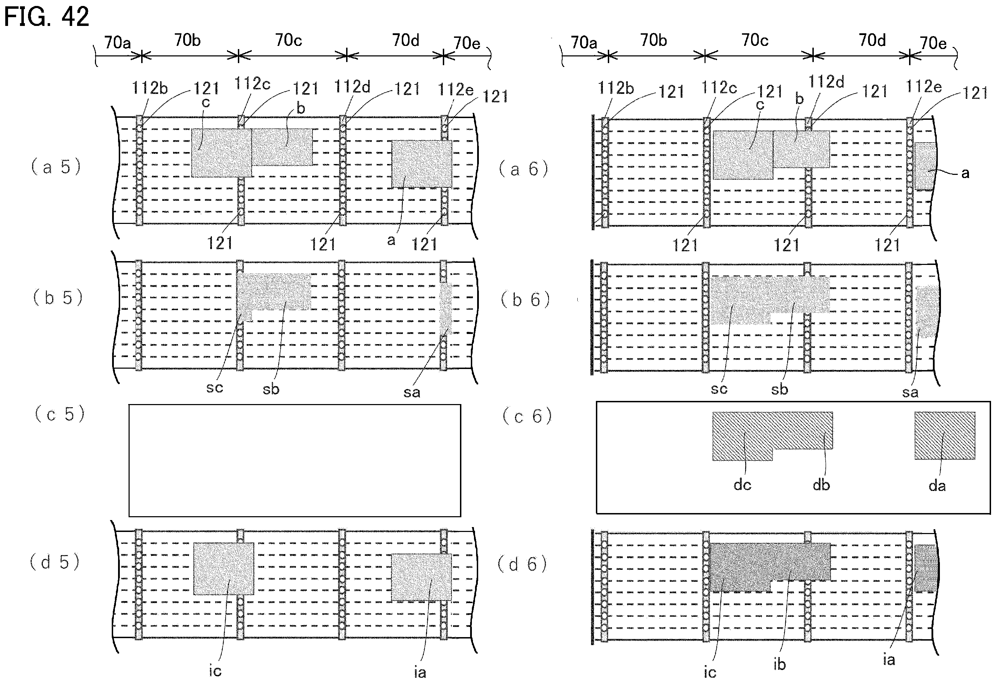

FIG. 42 is a conceptual diagrams of a partial section of the conveyance device viewed in plan, illustrating the movement of the object continuing from FIG. 41, wherein (a5) and (a6) represent illustrations showing the movement of the actual object on the conveyance device, wherein (b5) and (b6) represent illustrations showing the sensor images on the conveyance device, wherein (c5) and (c6) represent illustrations showing the posture and shape of an object derived from a sensor image at reset, and (d5) and (d6) represent illustrations showing the movement of the virtual object on the conveyance device.

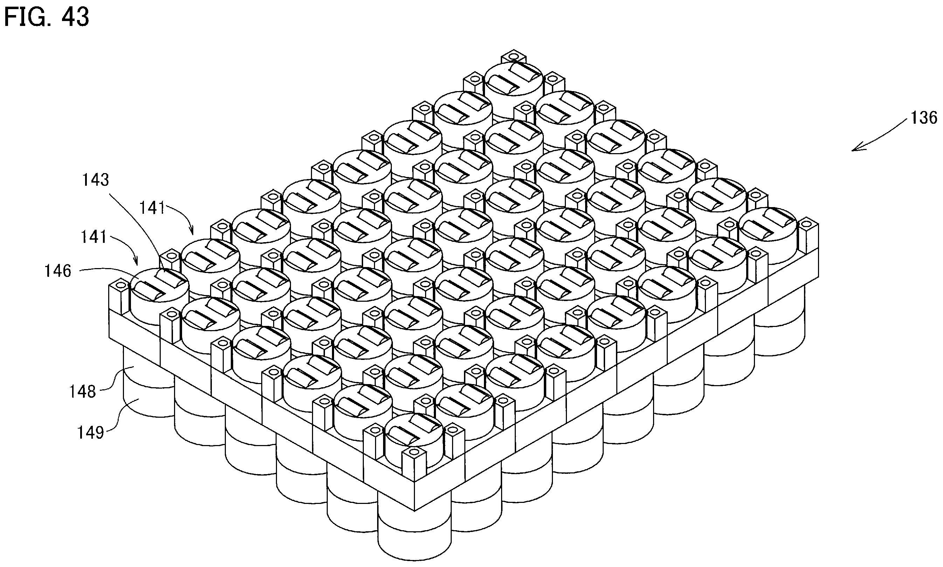

FIG. 43 is a perspective view illustrating an example of a conveying module that includes a plurality of conveyance cells, with each conveyance cell being capable of having a different conveying direction assigned.

### BEST MODE FOR CARRYING OUT THE INVENTION

Hereinafter, an embodiment of the present invention will be described.

The conveyance system 1 of the present embodiment includes a real conveyor line 25 configured in an layout shown in FIG. 1 (b) and a central controller 3.

The conveyor line 25 includes conveyance devices 2 having roller conveyors, and a plurality of section sensors 5.

The conveyance device 2 includes a plurality of known conveying modules 6 connected together. Further, the conveying module 6 is also referred to as a zone conveyor and is a short-roller conveyor. The conveying module 6 of the conveyance device 2 is driven by a motor (not shown). An individual controller 7, called a zone controller, is mounted on the conveying module 6, and rollers 26 (FIG. 7) belonging to the conveying module are driven and stopped by the individual controller 7. That is, the motor of the conveying module 6 of the conveyance device 2 is controlled by the individual controller 7.

In the present embodiment, pulses corresponding to the rotation of the motor are output from the individual controller 7 belonging to each conveying module 6.

A load sensor 45 (FIG. 7) is provided on the conveying module 6. The conveying modules 6 of the conveyance device 2 are driven individually and move an object forward (from left to right as in the direction of the arrow in the drawing). That is, when the object is introduced into the upstream conveying module 6, the conveying module 6 and the conveying module 6 positioned ahead in the traveling direction are driven to move the object forward. This operation is repeated sequentially to move an object.

As shown in FIG. 1 (b), the conveyor line 25 includes a single main conveying passage 10 and a plurality of branching conveying passages branched from the main conveying passage. Further, a conveying direction changing device is provided at a branching portion (not shown). For the sake of clarity in the drawings, only the branching conveying passages A and B are illustrated. Moreover, an area at the starting end side of the main conveying passage 10 is designated as a preparation area 50 while an area beyond that is designated as a conveying area 51.

A plurality of section sensors (sensors) 5 are installed at a regular interval along the conveyor line 25.

The type of the section sensors 5 is not limited; for example, an optical sensor can be employed.

For example, the section sensors 5 may employ a transmissive optical sensor equipped with a pair of a light emitter and a photo detector. In the case of employing a transmissive optical sensor, the light emitter is installed on one side across the conveyor line 25, and the photo detector is installed on the opposite side.

The section sensor 5 adopted in the present embodiment is a single sensor. The section sensor 5 adopted in the present embodiment determines whether an object is present in front of the section sensor 5, and in the present embodiment, the tip and rear end of the object are detected by the section sensor 5.

That is, the section sensor 5 adopted in the present embodiment determines whether something exists between the light emitter and the light detector.

In the preparation area 50 of the conveyor line 25, an information reader 8 is provided. The information reader 8 is a device that reads information from barcodes, two-dimensional codes, or the like affixed to an object.

The structure and principle of the information reader 8 are not limited, and it may optically read information or utilize magnetic or radio waves. For example, the information reader 8 may be a code reader that reads a two-dimensional code or a barcode reader that read a barcode. The information reader 8 may also read information from information storage members such as RFID.

The conveyance system 1 of the present embodiment includes a total length meter for measuring the total length of an object at the start of conveyance.

In the present embodiment, as described later, the total length of an object at the start of conveyance is measured by the first section sensor 5a. However, the present invention is not limited to this configuration, and the total length of the object at the start of conveyance may be measured by a separate sensor. However, the present invention is not limited to this configuration, and the total length of the object at the start of conveyance may be measured by a separate sensor. As a modification example, an information reader 8 may be provided with a measurement sensor (not shown) for measuring the length of the object.

At the end of the conveyor line 25, there is a manual sorting station 27. The manual sorting station 27 is a workspace where an operator perform sorting manually by hand.

Next, a central controller 3 is described.

The central controller 3 is equipped with a CPU and a memory that stores a computer program to realize desired functions.

The central controller 3 of the present embodiment stores computer programs functionally corresponding to the conveyor controller 11, conveying situation estimator 12, driving situation detector 13, comparator 28, reset unit 16, and object length meter 18, as shown in FIG. 6.

The central controller 3 receives input signals from the section sensor 5, the information reader 8, and each conveying module 6.

A conveying module 6 and a display device 17 are connected to the output side of the information reader 8.

The conveyor controller 11 controls the conveyance device 2, and in addition to its regular control functions, is provided with an object information storage 30 and a destination setter 31. The object information storage 30 stores information on what the object is and its destination.

The destination setter 31 determines the destination of an object from information stored in the object information storage 30 as well as establishes a conveying route.

The conveying situation estimator 12 estimates and determines the conveying situation of an object using a computer. Moreover, the conveying situation estimator 12 specifically functions as an estimated pulse calculator 35, a predicted tip-side conveying amount determinator 36, and a predicted rear-end-side conveying amount determinator 37.

The conveying situation estimator 12 specifically determines what time each object should reach which position on the conveyor line 25.

Hereinafter, the conveying situation estimator 12 is described.

The lower figure in each diagram of FIG. 8 represent a real conveyance device 2. Hereinafter, the lower figure in each diagram is referred to as a real conveyance device 2. The real conveyance device 2 illustrated below each diagram of FIG. 8 schematically shows the section between two section sensors 5a and 5b. The upper figure in each FIG. 8 represents a virtual conveyance device 102, which corresponds to the real conveyance device 2, and is equipped with virtual section sensors 105a and 105b. Hereinafter, the upper illustration in each diagram is referred to as a virtual conveyance device 102. The virtual conveyance device 102 is modeled after the real conveyance device 2.

The conveying situation estimator 12 determines, for example as shown in the upper figure of each diagram of FIG. 8 what time the object a should reach which position.

In each virtual conveyance device 102 shown in FIG. 8, the solid lines indicate the position where an object should be at each timing. For ease of understanding, the object whose position is determined by the conveying situation estimator is referred to as an virtual object a. Furthermore, the actual object in reality is denoted as the actual object a. For ease of understanding, the virtual object a and the actual object a are displayed at the same scale.

In the present embodiment, considering the disturbance within an estimated range during conveyance, the virtual conveyance device 102 defines and determines a range slightly wider than that of the actual object a for an allowable position range and timing of the actual object a.

In the virtual conveyance device 102 shown in FIG. 8 (b), a two-dot chain line frame surrounding the virtual object a represents a presence area 15 within which the virtual object a should be located. The size of the presence area 15 is not restricted but is approximately 1.05 to 1.3 times of an entire length of the virtual object a. More desirably, it is approximately 1.08 to 1.15 times.

FIG. 7 is an enlargement of each virtual conveyance device 102 and each real conveyance device 2 at a specific position. The line at a front end of the presence area 15 is a front-side boundary line 20 while the line at a rear side is the rear-side boundary line 21.

The conveying situation estimator 12 simulates the ideal movement of an object, and as shown in FIG. 8, the virtual object a and its surrounding presence area 15 move over time.

The predicted tip-side conveying amount determinator 36 and the predicted rear-end-side conveying amount determinator 37 determine the permissible range of the driving amount of the conveyance device 2 during the passage of the virtual object a between the two section sensors 105a and 105b in the virtual space.

That is, the real conveyance device 2 is a roller conveyor, and the actual object a is placed on the roller 26. With the rotation of the roller, the actual object a moves forward.

The conveying situation estimator 12 causes the virtual object a to move between the two section sensors 105a and 105b in the virtual space. Then, the central controller 3 calculates the assumed driving situation of the roller 26 when the virtual object a passes between the two virtual section sensors 105a and 105b. That is, numerical values related to the number of rotations of the roller 26 required for the virtual object a to pass through two virtual section sensors 105a and 105b are calculated. Specifically, the number of rotations of the roller 26 correlates with the motor pulses of a conveyance device 2, and in the present embodiment, the motor pulses are calculated as numerical values related to the necessary rotations of the roller 26.

Next, the predicted tip-side conveying amount determinator 36 and the predicted rear-end-side conveying amount determinator 37 will be described.

For easy explanation, the section sensor 5a on the upstream side in the travel direction of the real conveyance device 2 is referred to as the first section sensor 5a, and the section sensor 5b on the downstream side is referred to as the second section sensor 5b. Furthermore, the section sensor 105a on the upstream side in the travel direction of the virtual conveyance device 102 is referred to as the virtual first section sensor 105a, and the section sensor 105b on the downstream side is referred to as the virtual second section sensor 105b.

In the present embodiment, the estimated pulse calculator 35 and the predicted rear-end-side conveying amount determinator 37 calculate the number of roller rotations required for the front-side boundary line 20 to be detected by the virtual second section sensor 105b after the tip of the virtual object a is detected by the virtual first section sensor 105a. The required number of rotations is converted into that of motor pulses.

As described above, since the virtual conveyance device 102 imitates a real conveyance device 2, the predicted tip-side conveying amount determinator 36 calculates the number of rotations of the roller required for the tip of the actual object a to reach the second section sensor 5b after detected by the first section sensor 5a.

Similarly, the estimated pulse calculator 35 and the predicted rear-end-side conveying amount determinator 37 calculate the number of roller rotations required for the rear-side boundary line 21 to be detected by the virtual second section sensor 105b after the tip of the virtual object a is detected by the virtual first section sensor 105a.

As described above, since the virtual conveyance device 102 imitates a real conveyance device 2, the predicted rear-end-side conveying amount determinator 37 calculates the number of rotations of the roller required for the tip of the actual object a to reach the second section sensor 5b after detected by the first section sensor 5a.

Since the front-side boundary line 20 is located ahead of the tip of the virtual object a, the motor pulses required for the front-side boundary line 20 to reach the virtual second section sensor 105b are fewer than the motor pulses required for the tip of the virtual object a to reach the virtual second section sensor 105b.

The motor pulses (conveying movement amount) required for the front-side boundary line 20 to be estimated to be detected by the virtual second section sensor 105b after the tip of the virtual object a is estimated to be detected by the virtual first section sensor 105a is the minimum value of the expected range (allowable range) of motor pulses (conveying movement amount) estimated for the same actual object a to be detected by the real second section sensor 5b after detected by the real first section sensor 5a in normal conveyance.

In the present embodiment, the predicted tip-side conveying amount determinator 36 determines the number of motor pulses required from the moment the tip of the virtual object a is detected by the virtual first section sensor 105a until the front-side boundary line 20 is detected by the virtual second section sensor 105b.

That is, in the present embodiment, assuming that the object a is conveyed normally, the predicted tip-side conveying amount determinator 36 determines the minimum number (allowable number) of the motor pulses (conveying operation amount) estimated to indicate when the tip of the actual object a is detected by the second section sensor 5b after detected by the first section sensor 5a.

Hereinafter, the minimum number of the motor pulses (conveying movement amount), which is determined by the predicted tip-side conveying amount determinator 36 and is expected for the tip of the actual object a to move from when detected by the first section sensor 5a to when detected by the second section sensor 5b, is referred to as the tip arrival assumed pulse (tolerance value). The predicted tip arrival pulse is the predicted tip-side conveying movement amount, which is the minimum value of the conveying movement amount expected when the tip of the object a is detected by the second section sensor 5b assuming normal movement.

The predicted tip arrival pulse is determined by calculation and is not an actual physical entity. Based on the definition of the predicted tip arrival pulse, the predicted tip arrival pulse is the minimum value of the motor pulse (conveying amount) expected when the tip of the virtual object a is detected by the virtual first section sensor 105a and then is detected by the virtual second section sensor 105b.

Since the rear-side boundary line 21 is positioned behind the virtual object a, the number of motor pulses required for the rear-side boundary line 21 to reach the virtual second section sensor 105b is greater than the number of motor pulses required for the rear end of the virtual object a to reach the virtual second section sensor 105b.

The number of motor pulses (conveying movement amount) required for the rear-side boundary line 21 to be estimated to be detected by the virtual second section sensor 105b after the tip of the virtual object a is estimated to be detected by the virtual first section sensor 105a is the maximum value within the expected range (allowable range) of the motor pulses (conveying movement amount) when the tip of the actual object a is estimated to be detected by the real second section sensor 5b after the tip of the actual object a is estimated to be detected by the real first section sensor 5a assuming normal movement.

In this embodiment, the predicted rear-end-side conveying amount determinator 37 determines the roller motor pulses required for the rear-side boundary line 21 to be detected by the virtual second section sensor 105b after tip of the virtual object a is detected by the virtual first section sensor 105a

That is, in the present embodiment, assuming normal movement of the object a, the predicted rear-end-side conveying amount determinator 37 determines the maximum value (allowable value) of the motor pulses (conveying operation amount) estimated to be required for the rear end of the actual object a to be detected by the second section sensor 5b after the tip of the actual object a is detected by the first section sensor 5a.

Hereinafter, the maximum value (allowable value) of motor pulses (conveying operation amount) estimated to be required for the rear end of the actual object a to be detected by the second section sensor 5b after the tip of the actual object a is detected by the first section sensor 5a, which is determined by the predicted rear-end-side conveying amount determinator 37, is referred to as the predicted rear-end arrival pulse.

The predicted rear-end arrival pulse is the maximum value of the predicted rear-end-side conveying movement amount, which corresponds to the conveying movement amount at which the rear end of the object a is expected to be detected by the second section sensor 5b when the object moves normally.

The predicted rear-end arrival pulse is determined by calculation and is not an actual physical entity. Based on the definition of the predicted rear end arrival pulse, the predicted rear end arrival pulse is the maximum motor pulse (conveying movement amount) estimated to be required for the rear end of the virtual object a to be detected by the virtual second section sensor 105b after the tip of the virtual object is detected by the virtual first section sensor 105a.

Conveying situation estimator 12 determines the cumulative value of motor pulses required for the virtual second section sensor 105b to detect the front end of the virtual object a and the cumulative value of motor pulses required for the virtual second section sensor 105b to detect the rear end of the virtual object a, based on the predicted tip-side conveying amount determinator 36 and the predicted rear-end-side conveying amount determinator 37 respectfully.

Next, the driving situation detector 13 will be described.

The driving situation detector 13 obtains information related to the actual driving situation of the real conveyance device 2. Specifically, the driving situation detector 13 calculates pulses corresponding to the motor rotation output from the individual controller 7 using the actual pulse accumulator 42. In the present embodiment, the driving situation detector 13 detects the time of operation of the section sensor 5 under the actual driving situation of the real conveyance device 2.

In the present embodiment, the driving situation detector 13 accumulates actual motor pulses required from the moment when the tip of the actual object a is detected by the first section sensor 5a to the moment when the tip of the actual object a is detected by the second section sensor 5b.

Hereinafter, the actual motor pulses required for moving the actual object a from the moment when the tip of the actual object a is detected by the first section sensor 5a to the moment when the tip of the actual object a is detected by the second section sensor 5b are referred to as actually measured tip arrival pulses.

Further, in the present embodiment, the driving situation detector 13 also accumulates the actual motor pulses required for moving the actual object a from the moment when the tip of the actual object a is detected by the first section sensor 5a to the moment when the rear end of the actual object a is detected by the second section sensor 5b.

Hereinafter, the actual motor pulses required from the time the tip of the actual object a is detected by the first section sensor 5a until the rear end of the actual object a is detected by the second section sensor 5b are referred to as actually measured rear end arrival pulses.

The comparator 28 includes a front-end comparator 53 and a rear-end comparator 55. The comparator 28 compares the estimated conveying situation of an object estimated by the conveying situation estimator 12 with the actual conveying situation of an object detected by the section sensor 5.

In the present embodiment, the actually measured tip arrival pulses and actually measured rear end arrival pulses detected by the driving situation detector 13 are compared with the predicted tip arrival pulses (predicted tip-side conveying movement amount) and the predicted rear end arrival pulses (predicted rear-end-side conveying movement amount) determined by the predicted tip-side conveying amount determinator 36 and the predicted rear-end-side conveying amount determinator 37, respectively. That is, the front-end comparator 53 compares the actually measured tip arrival pulses with the predicted tip arrival pulses (predicted tip-side conveying movement amount). Also, the rear-end comparator 55 compares the actual arrival pulse at the rear end with the predicted rear end arrival pulses (predicted rear-end-side conveying movement amount).

Then, if the actually measured tip arrival pulses and the actually measured rear end arrival pulse fall within the range of the predicted tip arrival pulses (predicted tip-side conveying movement amount on the leading side) and the predicted rear end arrival pulses (predicted rear-end-side conveying movement amount), they are judged to be normal; if they fall outside of this range, they are judged to be abnormal.

The object length meter 18 is a computer program that measures the entire length of the object at the start of conveying based on a signal from the first section sensor 5a.

The object is placed in the preparation area 50 of the main conveying passage 10, moves along the main conveying passage 10, and enters the conveying area 51. At this time, the object passes through in front of the first section sensor 5a. When the tip of the object reaches the first section sensor 5a, the first section sensor 5a detects it. That is, the first section sensor 5a turns to the ON state. While the object passes through in front of the first section sensor 5a, the ON state of the first section sensor 5a is maintained. When the object completely passing through in front of the first section sensor 5a, the first section sensor 5a transitions to an OFF state.

The object length meter 18 calculates the total length of the object based on the conveying distance or time of the main conveying passage 10 while the first section sensor 5a remains in the ON state.

Hereinafter, the operation of the conveyance system 1 according to the present embodiment will be described.

In the conveyance system 1 of the present embodiment, prior to actual conveyance, a simulation of conveying virtual object a and the like is conducted using the virtual conveyance device 102 in a virtual space to compare that with the conveying status of the object a and the like in the real conveyance device 2.

The actual object is randomly placed in the preparation area 50 of the conveyor line 25. For example, as shown in FIG. 2 (b), the actual objects a, b, and c are placed in the preparation area 50 of the conveyor line 25.

Actual objects a, b, and c advance downstream via the conveyor line 25, and the information reader 8 reads the code information affixed to the objects. The read information is transmitted to the central controller 3. The central controller 3 searches for the corresponding object in the object information storage 30 and specifies the destination of each actual object a, b, and c. In the conveyance system 1 of the present embodiment, the conveying order of objects a, b, and c corresponds to their respective destinations.

Furthermore, upon entering the main conveying passage 10 from the preparation area 50, the entire length of an object is calculated by the object length meter 18.

Moreover, in the case where a measurement sensor (not shown) that measures the length of the object is provided in the information reader 8, as illustrated in an alternative embodiment, the full length of each actual object a, b, and c is measured by the information reader 8, and the length information is also transmitted to the central controller 3.

In the present embodiment, after each actual object a, b, and c, passes through the first section sensor 5a to be calculated the total length of the object, or after each object passes through the information reader 8, simulation of the virtual conveyance device 102 starts.

For example, it is assumed that the actual object a is to be sent to the branching conveying passage A, and the actual object b is to be sent to the branching conveying passage B. In this case, simulation is conducted by understanding the leading object is object a, the next object is object b, and the trailing object is object c.

Subsequently, the moving distance of each actual object a, b, and c for reaching a predetermined branching portion is converted into the number of pulses.

In the virtual conveyance device 102, each virtual object a, b, and c moves the calculated distance before entering its respective destination, branching conveying passages A or B.

Next, the operation of the real conveyance device 2 is described. The actual objects a, b, and c on the real conveyance device 2 flow through the preparation area 50 and enter the conveying area 51.

A signal is transmitted from the central controller 3 to the real conveyance device 2 so as to operate in accordance with the simulation.

The central controller 3 calculates the actual movement distance of the actual objects a, b, and c after passing through the first section sensor 5, based on signals from the real conveyance device 2. Specifically, pulses corresponding to the rotation number of a motor (not illustrated) output from the conveying module 6 during the movement of the actual objects a, b, and c are accumulated by the actual pulse accumulator 42, and the actual moving distances of the actual objects a, b, and c after passing through the first section sensor 5 are calculated.

For example, assuming that when distance is converted into pulses, the branching portion of the branching conveying passage A is located at the position of 2200 pulses, and the branching portion of the branching conveying passage B is located at the position of 3200 pulses.

When the moving distance of an object reaches the position of the conveying module 6 corresponding to a location where branching is to occur, a signal is sent from the central controller 3 to the conveying module 6 corresponding to the real conveyance device 2, causing the conveying direction changing device attached to the conveying module 6 (not shown) to operate and send the objects a, b, and c to the respective branching conveying passages A and B.

As described above, the conveyance system 1 of the present embodiment corresponds the conveying order of the objects with their destinations.

The conveyance system 1 according to the present embodiment recognizes only the order in which the actual objects a, b, and c are arranged, and regardless of which object is at the front, sends it to the branching conveying passage A. Additionally, regardless of what the next object is, it is sent to the branching conveying passage B.

The actual objects a, b, and c are arranged sequentially as shown in FIG. 2 in the order of actual objects a, b, and c.

The actual objects a, b, and c are conveyed in this order. Information regarding the conveying destinations of actual objects a, b, and c is transmitted from the central controller 3 to each conveying module 6. Regardless of the identity of the leading object, when the movement distance of the leading object reaches the branching conveying passage A, the object enters the branching conveying passage A as shown in FIGS. 3 and 4. Furthermore, regardless of the identity of the subsequent object, when the movement distance of the leading object reaches the branching conveying passage B, the object enters the branching conveying passage B as shown in FIG. 5.

In the present embodiment, the movement of the virtual conveyance device 102 is compared with the movement of the real conveyance device 2, and if a significant discrepancy occurs between the two, a predetermined action is taken.

In the conveyance system 1 of the present embodiment, particularly, the predicted conveying situation of a virtual object such as the virtual object a estimated by the conveying situation estimator 12 is compared with the actual conveying situation of an actual object such as the actual object a detected by the section sensor 5, using the comparator 28.

The following describes this operation.

In the conveyance system of the present embodiment, concerning the actual conveying situation of the actual object a and the like between the first section sensor 5a and the second section sensor 5b detected by the section sensor 5, the comparator 28 compares the estimated conveying situation of the virtual object a and the like assumed by the conveying situation estimator 12 with the actual conveying situation of the actual object a and the like.

That is, when the tip of the actual object a is detected by the first section sensor 5a of the real conveyance device 2, the estimated conveying situation of the virtual object a in the virtual conveyance device 102 and the conveying situation of the actual object a are compared until the rear end of the actual object a is detected by the second section sensor 5b. Specifically, as illustrated in FIGS. 8 to 14, when the tip of the actual object a is detected by the first section sensor 5a of the real conveyance device 2, the tip of the actual object a passes through the first section sensor 5a, then subsequently the rear end of the actual object a also passes through the first section sensor 5a, and further the entire length of the actual object a is measured, an presence area 15 surrounding the virtual object a on the virtual conveyance device 102 is defined to establish the front-side boundary line 20 and the rear-side boundary line 21. The size of the presence area 15 varies depending on the size of the actual object a. That is, the length of the object a is measured by the first section sensor 5a or the information reader 8. Here, the size of the presence area 15 changes in accordance with the entire length of the measured actual object a.

In the present embodiment, a detected situation of the second section sensor 5b when the actual object a passes through the second section sensor 5b is compared with a detected situation when the virtual object a of the virtual conveyance device 102 passes through the virtual second section sensor 105b.

That is, if the actual object a passes through the second section sensor 5b concurrently with the presence area 15 of the virtual conveyance device 102 in the virtual space passing through the virtual second section sensor 105b, it is determined to be a normal passage.

If the timing when the actual object a passes through the second section sensor 5b and the timing when the presence area 15 of the virtual conveyance device 102 passes through the virtual second section sensor 105b are misaligned, and the actual object a fails to pass through the second section sensor 5b while the presence area 15 of the virtual conveyance device 102 passes through the virtual second section sensor 105b, this is determined to be an abnormal passage.

More specifically, when the tip of the actual object a is detected by the second section sensor 5b, if the front-side boundary line 20 of the virtual object a has not reached the virtual second section sensor 105b, it is determined as an abnormal passing through. Similarly, when the rear end of the actual object a is detected by the second section sensor 5b, if the rear-side boundary line 21 of the virtual object a has already passed beyond the virtual second section sensor 105b, it is determined as an abnormal passing through.

In an actual application, when the actual object a moves from the position of the first section sensor 5a to the position of the second section sensor 5b, the actual conveying movement amount of the real conveyance device 2 is detected by accumulating motor pulses using the driving situation detector 13. These motor pulses are then compared with the motor pulses determined by the predicted tip-side conveying amount determinator 36 and those determined by the predicted rear-end-side conveying amount determinator 37.

That is, a comparison is made between the motor pulses corresponding to the actual conveying movement amount from when the tip of the actual object a is detected by the first section sensor 5a until the tip of the actual object a is detected by the second section sensor 5b, and the motor pulses corresponding to the conveying operation amount required for the front-side boundary line 20 to be detected by the virtual second section sensor 105b.

Furthermore, a comparison is made between the motor pulses corresponding to the actual conveying movement amount from when the tip of the actual object a is detected by the first section sensor 5a until the rear end of the actual object a is detected by the second section sensor 5b, and the motor pulses corresponding to the conveying movement amount required until the rear-side boundary line 21 is detected by the virtual second section sensor 105b.

FIG. 8 illustrates a situation where the actual object a has passed through a relevant section as determined by the conveying situation estimator 12.

That is, as illustrated in FIG. 8 (a), when the tip of the actual object a is detected by the first section sensor 5a of the real conveyance device 2, a virtual object a also appears on the virtual conveyance device 102 side. Incidentally, at this stage, the virtual object a is merely a model and possesses minimal substantive significance. Therefore, the appearance of the virtual object a on the virtual conveyance device 102 side may occur even after the rear end of the actual object a has passed through in front of the first section sensor 5a of the real conveyance device 2.

And, as illustrated in FIG. 8 (b), the virtual object a on the virtual conveyance device 102 and the actual object a on the real conveyance device 2 advance simultaneously. When the virtual object a departs from the virtual first section sensor 105a, a presence area 15 is defined around the virtual object a on the virtual conveyance device 102, as described above, thereby determining the front-side boundary line 20 and the rear-side boundary line 21.

Then, as shown in FIG. 8 (c), the virtual object a on the virtual conveyance device 102 and the actual object a on the real conveyance device 2 advance together at the same speed. Further, as shown in FIG. 8 (d) and (e), the virtual object a on the virtual conveyance device 102 and the actual object a on the real conveyance device 2 simultaneously pass through the real second section sensors 5b and the virtual second section sensor 105b respectfully.

FIG. 9 illustrates the situation where the actual object a advances slightly faster than the conveying situation determined by the conveying situation estimator 12 to pass through the corresponding section. However, in the example shown in FIG. 9, the actual object a passes through the second section sensor 5b simultaneously as the presence area 15 on the virtual conveyance device 102 passes the virtual second section sensor 105b, thus showing normal passage.

That is, as shown in FIG. 9 (a), when the tip of the actual object a is detected by the first section sensor 5a of the real conveyance device 2, a virtual object a appears on the virtual conveyance device 102.

As shown in FIG. 9 (b), the advance of the actual object a is faster than that of the virtual object a. Then, although the difference between the two gradually expands as shown in FIG. 9 (c), when the tip of the actual object a on the real conveyance device 2 reaches the second section sensor 5b as shown in FIG. 9 (d), at least the front-side boundary line 20 on the virtual conveyance device 102 has reached the virtual second section sensor 105b.

Furthermore, as illustrated in FIG. 9 (e), when the rear end of the actual object a on the real conveyance device 2 reaches the second section sensor 5b, the rear-side boundary line 21 of the virtual conveyance device 102 has not yet reached the virtual second section sensor 105b.

Therefore, the conveying situation shown in FIG. 9 indicates that the actual object a is advancing slightly ahead of the conveying situation determined by the conveying situation estimator 12, but this is within the range of normal passage.

That is, at the stage when the tip of the actual object a on the real conveyance device 2 reaches the second section sensor 5b, the front-end comparator 53 compares the actual conveying movement amount with the predicted tip arrival pulses (the predicted tip-side conveying movement amount). The predicted tip arrival pulses is the minimum motor pulse (conveying movement amount) value (tolerance value) estimated for the tip of the actual object a to be detected by the second section sensor 5b after it has been detected by the first section sensor 5a.

In the conveying situation illustrated in FIG. 9, the actual conveying movement amount of the real conveyance device 2 (the accumulated value of motor pulses) during the movement from the time when the tip of the actual object a is detected by the first section sensor 5a until when it is detected by the second section sensor 5b, is greater than the predicted tip-side conveying movement amount determined by the predicted tip-side conveying amount determinator 36. Accordingly, in the conveying situation illustrated in FIG. 9, the actual object a advances slightly faster than the conveying situation predetermined by the conveying situation estimator 12; however, the tip of the actual object a passes normally.

Moreover, upon the actual object a on the real conveyance device 2 reaching the second section sensor 5b, the rear-end comparator 55 compares the actual conveying movement amount with the predicted rear-end arrival pulses (predicted rear-end-side conveying movement amount). The predicted rear-end arrival pulses are the maximum value (allowable value) of the motor pulses (conveying movement amount) estimated from the detection of the tip of the actual object a by the first section sensor 5a until the rea-end of the actual object a is detected by the second section sensor 5b.

In the conveying state situation in FIG. 9, the actual conveying movement amount of the real conveyance device 2 (cumulative value of motor pulses) during movement from when the tip of the actual object a is detected by the first section sensor 5a until the rear-end of the actual object a is detected by the second section sensor 5b is less than the predicted rear-end arrival pulses (predicted rear-end-side conveying movement amount) determined by the predicted rear-end-side conveying amount determinator 37. Accordingly, the conveying situation illustrated in FIG. 9 shows that the actual object a advances slightly ahead of the conveying situation determined by the conveying situation estimator 12, but the rear end of the actual object a passes correctly.

When the rear-end of the actual object a passes through the second section sensor 5b, the relationship between the virtual conveyance device 102 and the real conveyance device 2 within the corresponding area is reset by the reset unit 16. That is, within the section, the actual object a is advancing faster than the conveying situation determined by the conveying situation estimator 12, and the position of the actual object a and that of the virtual object a are misaligned. However, at the point when the rear-end of the actual object a passes through the second section sensor 5b, the discrepancy between them is reset, and the virtual object a newly appears on the side of the virtual conveyance device 102. The newly introduced virtual object a has the presence area 15 as described above.

In the explanation provided above, the relative displacement between the two is reset at the time when the rear end of the actual object a passes the second section sensor 5b. However, the timing for resetting the relationship between the virtual conveyance device 102 and the real conveyance device 2 by the reset unit 16 may alternatively be at the time when the tip of the actual object a passes through the second section sensor 5b.

That is, since the entire length of the actual object a is known, the deviation between the two can be reset once the tip of the actual object a passes through the second section sensor 5b, and a new virtual object a may be generated on the virtual conveyance device 102.

FIG. 10 illustrates the situation where the actual object a passes through the relevant section slower than the conveying situation determined by the conveying situation estimator 12. However, in the example shown in FIG. 10, the presence area 15 of the virtual conveyance device 102 passes through the virtual second section sensor 105b at the same time when the actual object a passes through the second section sensor 5b, which constitutes a normal passage.

That is, as shown in FIG. 10 (a), when the tip of the actual object a is detected by the first section sensor 5a of the real conveyance device 2, the virtual object a also appears on the virtual conveyance device 102.

As shown in FIG. 10 (b), the advance of the actual object a is slower than the that of the virtual object a. Then, as shown in FIG. 10 (c) and (d), the difference between the two gradually increases; however, as illustrated in FIG. 10 (e), when the tip of the actual object a on the real conveyance device 2 reaches the second section sensor 5b, the front-side boundary line 20 on the virtual conveyance device 102 at least reaches the virtual second section sensor 105b.

Further, as shown in FIG. 10 (f), when the rear end of the actual object a on the real conveyance device 2 reaches the second section sensor 5b, the rear-side boundary line 21 on the virtual conveyance device 102 does not reach the virtual second section sensor 105b.

Therefore, the conveyance situation in FIG. 10 indicates that the actual object a is advancing slightly slower than the conveying situation determined by the conveying situation estimator 12, but remains within the range of normal passage.

That is, when the tip of the actual object a on the real conveyance device 2 reaches the second section sensor 5b, the front-end comparator 53 compares the actual conveying movement amount and the predicted tip arrival pulses (predicted tip-side conveying movement amount). Also, when the rear end of the actual object a on the real conveyance device 2 reaches the second section sensor 5b, the rear-end comparator 55 compares the actual conveying movement amount and the predicted rear end arrival pulses (predicted rear-end-side conveying movement amount).

In the conveying situation shown in FIG. 10, the actual conveying movement amount (the cumulative value of motor pulses) of the real conveyance device 2 during the movement after the tip of the actual object a is detected by the first section sensor 5a until the tip of the actual object a is detected by the second section sensor 5b is greater than the predicted tip-side conveying movement amount determined by the predicted tip-side conveying amount determinator 36. Therefore, in the conveying situation of FIG. 10, the front end of the object a passes normally.

Further, in the conveying situation shown in FIG. 10, the actual conveying movement amount (the cumulative value of motor pulses) of the real conveyance device 2 during movement from the time when the tip of the actual object a is detected by the first section sensor 5a until the rear end of the actual object a is detected by the second section sensor 5b is less than the predicted rear end arrival pulses (predicted rear-end-side conveying movement amount) determined by the predicted rear-end-side conveying amount determinator 37. Therefore, in the conveying situation shown in FIG. 10, the rear end of the actual object a passes through normally.

When the rear end of the actual object a passes through the second section sensor 5b, the reset unit 16 resets the relationship between the virtual conveyance device 102 and the real conveyance device 2 within that section. That is, in the section, the actual object a is advancing more slowly than the conveying situation determined by the conveying situation estimator 12, and the position of the actual object a is out of alignment with that of the virtual object a. However, at the point when the rear end of the actual object a passes through the second section sensor 5b, the misalignment between the two is canceled, and a new virtual object a appears on the virtual conveyance device 102. The new virtual object a includes the above-mentioned presence area 15.

As described above, when the tip of the actual object a has passed through the second section sensor 5b, the deviation between the two may be reset, and a new virtual object a may be generated on the virtual conveyance device.

FIG. 11 illustrates a situation where the actual object a advances much more rapidly than the conveying situation determined by the conveying situation estimator 12 and passes through the corresponding section. The example shown in FIG. 11 depicts an abnormal passing through where the actual object a has reached the second section sensor 5, but the presence area 15 of the virtual conveyance device 102 does not reach the virtual second section sensor 105b.

That is, as shown in FIG. 11 (a), when the tip of the actual object a is detected by the first section sensor 5a of the real conveyance device 2, a virtual object a also appears on the virtual conveyance device 102.

As shown in FIG. 11 (b), the advance of the actual object a is much faster than that of the virtual object a. Furthermore, the difference between the two further widens as shown in FIG. 11 (c) and (d), and as shown in FIG. 11 (e), when the tip of the actual object a on the real conveyance device 2 reaches the second section sensor 5b, the front-side boundary line 20 of the virtual conveyance device 102 has not yet reached the virtual second section sensor 105b.

Accordingly, the conveying situation depicted in FIG. 11 indicates that the actual object a is advancing faster than the conveying situation determined by the conveying situation estimator 12, constituting an abnormal passing through.

That is, when the tip of the actual object a on the real conveyance device 2 reaches the second section sensor 5b, the actual conveying movement amount and the predicted tip arrival pulses (predicted tip-side conveying movement amount) are compared by the front-end comparator 53.

In the conveying situation shown in FIG. 11, the actual conveying movement amount (the cumulative value of motor pulses) of the real conveyance device 2 during the movement from the time when the tip of the actual object a is detected by the first section sensor 5a until the tip of the actual object a is detected by the second section sensor 5b is less than the predicted tip-side conveying movement amount determined by the predicted tip-side conveying amount determinator 36. Therefore, in the conveying situation of FIG. 11, the front end of the object a does not pass through properly.

FIG. 12 illustrates a situation where the actual object a advances much slower than the conveying situation determined by the conveying situation estimator 12 and passes through the relevant section. In the example shown in FIG. 12, when the rear end of the actual object a passes through the second section sensor 5b, the presence area 15 on the virtual conveyance device 102 has already passed beyond the virtual second section sensor 105b

That is, as shown in FIG. 12 (a), when the tip of the actual object a is detected by the first section sensor 5a of the real conveyance device 2, the virtual object a also appears on the virtual conveyance device 102.

As shown in FIG. 12 (b), the advance of the actual object a is much slower than that of the virtual object a. Then, as shown in FIG. 12 (c) and (d), the difference between the two further widens, and as shown in FIG. 12 (e), when the rear end of the actual object a on the real conveyance device 2 reaches the second section sensor 5b, the rear-side boundary line 21 of the virtual conveyance device 102 has already passed through the virtual second section sensor 105b.

Therefore, the conveying situation depicted in FIG. 12 represents an abnormal passing through where the actual object a is slower than the conveying situation determined by the conveying situation estimator 12.

That is, at the stage where the rear end of the actual object a on the real conveyance device 2 reaches the second section sensor 5b, the rear-end comparator 55 compares the actual conveying movement amount with the predicted rear end arrival pulses (predicted rear-end-side conveying movement amount).

In the conveying status illustrated in FIG. 12, the actual conveying movement amount (cumulative value of motor pulses) of the real conveyance device 2 when it moves from the point where the tip of the actual object a is detected by the first section sensor 5a to the point where the rear end of the actual object a is detected by the second section sensor 5b is more than the predicted rear-end-side conveying movement amount determined by the predicted rear-end-side conveying amount determinator 37. Therefore, in the conveying situation shown in FIG. 12, the rear end of the actual object a has not passed through normally.

FIG. 13 illustrates a situation where the object a is removed between the first section sensor 5a and the second section sensor 5b.

That is, as shown in FIG. 13 (a), when the tip of the actual object a is detected by the first section sensor 5a of the real conveyance device 2, a virtual object a also appears on the virtual conveyance device 102.

As shown in FIG. 13 (b), the actual object a advances at a velocity equivalent to that of the virtual object a. Furthermore, in FIG. 13 (b), the tip of the actual object b is detected by the first section sensor 5a of the real conveyance device 2, and the virtual object b also appears on the virtual conveyance device 102.

Then, as shown in FIG. 13 (c), the actual object a advances at the same speed as the virtual object a, and the actual object b similarly advances at the same speed as the virtual object b.

Then, at the stage of FIG. 13 (d), the leading actual object a is removed. Accordingly, the actual object b that follows object a substantially advances at the head. However, on the virtual conveyance device 102, the virtual object a does not disappear and continues to advance as is.

As shown in FIG. 13 (e), when the object b currently at the head reaches the second section sensor 5b, the presence area 15 of the virtual object a, which is at the head on the virtual conveyance device 102, has already passed through the virtual second section sensor 105b.

That is, when the rear end of the actual object b of the real conveyance device 2 reaches the second section sensor 5b, the rear-end comparator 55 compares the actual conveying movement amount with the predicted rear end arrival pulses (predicted rear-end-side conveying movement amount).

In the conveying situation illustrated in FIG. 13, the actual conveying movement amount (a value of cumulative motor pulses) of the real conveyance device 2 when moving from the point where the tip of the actual object a is detected by the first section sensor 5a to the point where the rear end of the actual object b is detected by the second section sensor 5b is more than the predicted rear-end-side conveying movement amount determined by the rear-end-side predicted conveying movement amount determinator 37. Therefore, in the conveying situation shown in FIG. 13, the rear end of the actual object a does not pass normally.

Accordingly, in the case where the object is removed, it can be determined that an abnormal passing through has occurred.

FIG. 14 illustrates a situation where an unexpected object x is introduced between the first section sensor 5a and the second section sensor 5b.

That is, as shown in FIG. 14 (a), when the tip of the actual object a is detected by the first section sensor 5a of the real conveyance device 2, the virtual object a appears on the virtual conveyance device 102 side as well.

As shown in FIG. 14 (b) and (c), the actual object a advances at the same speed as the virtual object a.

Then, at the stage shown in FIG. 14(d), an actual object x is introduced in front of the leading actual object a. Therefore, the introduced actual object x substantially advances at the forefront. However, on the virtual conveyance device 102, the virtual object x does not appear, and the virtual object a continues to advance as it is.

And, as shown in FIG. 14 (e), when the actual object x currently at the forefront reaches the second section sensor 5b, the presence area 15 of the leading virtual object a on the virtual conveyance device 102 does not reach the virtual second section sensor 105b.

That is, at the stage where the tip of the actual object x of the real conveyance device 2 reaches the second section sensor 5b, the actual conveying movement amount and the predicted tip arrival pulses (predicted tip-side conveying movement amount) are compared by the front-end comparator 53.

In the conveying situation shown in FIG. 14, the actual conveying movement amount (accumulated value of motor pulses) of the real conveyance device 2 when moving from the time when the tip of the actual object a is detected by the first section sensor 5a until the tip of the actual object x is detected by the second section sensor 5b is less than the predicted tip-side conveying movement amount determined by the predicted tip-side conveying amount determinator 36. Therefore, in the conveying situation shown in FIG. 14, the front end of the object a has not properly passed through.

Therefore, if an unexpected object x is introduced, it can be identified as an abnormal passing through.

When the passing through of an object a is deemed to be an abnormal passing through, for example, the following measures are taken.
(1) Change of the conveying speed of the conveyance device
(2) Correction of the predicted conveying situation by the conveying situation estimator
(3) Change of the destination of the object
(4) Stop of the conveyance device
(5) Notification

"Change of the conveying speed of the conveyance device" may involve either changing the speed of the entire conveyance devices or changing the speed of only a portion of the conveyance devices.

"Correction of the predicted conveying situation by the conveying situation estimator" is a measure taken when the estimation of the predicted conveying situation is deemed to be unreasonable, thereby the settings of the predicted conveying situation being revised.

"Change of the destination of the object" involves, for example, returning the object to its initial position by conveying it back. For example, the destination is changed to the manual sorting station 27 for being sorted by the worker's manual operation.

"Change of conveying route" diverts the object to convey the object to a predetermined destination.

"Notification" involves, for example, displaying a warning character or light on the display device 17. Moreover, voice may be generated from a speaker.

In the above-described embodiment, for ease of understanding, the virtual conveyance device 102 and the real conveyance device 2 were described as operating concurrently, but the virtual conveyance device 102 and the real conveyance device 2 do not necessarily need to operate simultaneously.

In summary, when the actual object a is detected by the section sensor 5, the actual conveying movement amount is compared with the predicted tip arrival pulses (predicted tip-side conveying movement amount) as well as the predicted rear end arrival pulses (predicted rear-end-side conveying movement amount).

The embodiment described above compares, by the comparator 28, the predicted conveying situation of the object assumed by the conveying situation estimator 12 with the actual conveying situation of the object detected by the sensor 5. That is, in the above-described embodiment, the predicted conveying situation of the object is defined and compared with the actual movement of the object.

However, even without assuming the predicted conveying situation of the object, it is permissible to simply compare the minimum value of the predicted tip-side conveying movement amount, which is the smallest predicted conveying operation amount when the tip of the object is expected to be detected by the sensor at a predetermined position in the case of normal movement, and the actual conveying movement amount when the tip of the actual object is detected by the sensor at the predetermined position.

Similarly, it may suffice to simply compare the predicted rear-end-side conveying movement amount, which is the maximum value of the conveying operation amount expected when the rear end of the object is detected by the sensor at the predetermined position under normal movement, with the actual conveying movement amount at the time when the rear end of the actual object is detected by the sensor at the predetermined position.

In the embodiment described above, as shown in each (b) of FIGS. 8 to 14, when the virtual object a moves away from the virtual first section sensor 105a, a presence area 15 is defined around the virtual object a on the virtual conveyance device 102, and the front-side boundary line 20 and the rear-side boundary line 21 are determined.

However, the present invention is not limited to this configuration, and when the tip of the real object a is detected by the first section sensor 5a of the real conveyance device 2, a virtual object a may also appear on the virtual conveyance device 102, and simultaneously, the presence area 15 may be defined. In addition, the presence area 15 may be defined while the tip of the real object a is being detected by the first section sensor 5a of the real conveyance device 2.

That is, the meter to detect the overall length of the actual object a is optional, and if the entire length of the actual object a is known at the time when the tip of the object a is detected by the first section sensor 5a of the real conveyance device 2, the presence area 15 may be defined at an early stage.

In the embodiment described above, the predicted tip arrival pulses are the minimum value (tolerance value) of the motor pulses (conveying movement amount) estimated when the tip of the actual object a is detected by the second section sensor 5b, and they do not have a width. That is, as will be described later, the predicted tip arrival pulses (predicted tip-side conveying movement amount) are numerical values, such as 1950 pulses, with no range. That is, in the above-described embodiment, only the front end of the presence area 15 (front-side boundary line 20) is determined, and the range is not limited.

The present invention is not limited to this configuration, and the predicted tip arrival pulses may have upper and lower limits. For example, the predicted tip arrival pulses may have upper and lower limits, such as from 1950 pulses to 2000 pulses.

If the predicted tip arrival pulses have an upper limit and a lower limit, as shown in FIG. 15, it becomes possible to detect the fact that the object a has been removed between the first section sensor 5a and the second section sensor 5b at an earlier stage.

That is, in the embodiment shown in FIG. 15, the predicted tip arrival pulses include an upper limit UL and a lower limit LL. In the embodiment illustrated in FIG. 15 (a) to (e), as shown in FIG. 15 (e), when the leading virtual object a on the virtual conveyance device 102 reaches the upper limit UL in the presence area 15, the present actual object b leading currently has not reached the second section sensor 5b.

Therefore, according to the present embodiment, it is possible to detect that the actual object a is removed at the stage when the leading virtual object a on the virtual conveyance device 102 reaches the upper limit UL in the presence area 15.

Also, the above-mentioned embodiment compares the expected conveying movement amount (predicted pulses) when properly moves, with the actual conveying movement amount (measured pulses). However, in addition to this or as an alternative, one may compare the expected passing time between sensors when the object is normally moved, with the time actually taken by the actual object to pass between the sensors.

For example, the conveying situation estimator 12 determines the time required from the moment when the tip of the virtual object a is detected by the virtual first section sensor 105a until the tip of the virtual object a is detected by the virtual second section sensor 105b. Also, the conveying situation estimator determines the time required from the moment when the rear end of the virtual object a is detected by the virtual first section sensor 105a until the rear end of the virtual object a is detected by the virtual second section sensor 105b.

The driving situation detector 13 accumulates the time required from when the tip of the actual object a is detected by the first section sensor 5a until the tip of the actual object a is detected by the second section sensor 5b. Then, the comparator compares the predicted required time with the actual time taken.

For example, in the cases shown in FIGS. 8 to 10, the passing times of the tip and rear end of the actual object a fall within the range assumed by the conveying situation estimator and are within the range of normal passing through.

In contrast, in the examples shown in FIGS. 11 to 14, the passing time of the tip or rear end of the actual object a deviates from the range assumed by the conveying situation estimator, indicating an abnormal passing through.

### Examples

Hereinafter, an embodiment involving the presence area 15 and others is described with reference to FIG. 16.

For example, as shown in FIG. 16 (a), the distance from the first section sensor 5a to the second section sensor 5b is assumed to correspond to D pulses, and the total length of the actual object a is assumed to be M pulses. The presence area 15 is larger than the entire length of the actual object a, showing F pulses whereas the entire length of the actual object shows M pulses. For example, the front end of the presence area 15 (front-side boundary line 20) is positioned fg pulses ahead from the front end of the actual object a while the rear end of the presence area 15 (rear-side boundary line 21) is positioned rg pulses behind from the front end of the actual object a.

As illustrated in FIG. 16 (b), the conveying movement amount from the situation where the tip of the actual object a is located at the position of the first section sensor 5a until the tip of the actual object a reaches the second section sensor 5b corresponds to D pulses. That is, the D pulses represent the conveying movement amount when the actual object a advances normally without any obstruction.

In contrast, the presence area 15 represents an allowable range within which the actual object a exists, and the front-end of the presence area 15 (front-side boundary line 20) shows permissible forward limit when the actual object a moves faster due to some kind of error. Since the front-side boundary line 20 is located forward by fg pulses from the front end of the actual object a, the conveying movement amount from the state where the tip of the actual object a is at the position of the first section sensor 5a until the tip of the front-side boundary line 20 reaches the second section sensor 5b is "D - fg pulses" as shown in FIG. 16 (b). When the tip of the actual object a is at the position of the first section sensor 5a, the conveying movement amount "D-fg" from the tip of the front-side boundary line 20 to the second section sensor 5b is the minimum value of the predicted tip-side conveying movement amount, which predicts the conveying movement amount at which the tip of the object is expected to be detected by a sensor at a predetermined position in case of normal movement.

The rear end of the presence area 15 (rear-side boundary line 21) indicates the rear end acceptable when the actual object a advances slower within the assumed range. The rear-side boundary line 21 is positioned rearward by a distance of rg pulses from the rear end of the actual object a, and therefore, the conveying movement amount from the situation where the tip of the actual object a is at the position of the first section sensor 5a until the rear-side boundary line 21 reaches the second section sensor 5b is "D + M + rg." The conveying operation amount "D + M + rg", which is a conveying operation amount needed for moving from the state where the tip of the actual object a is at the first section sensor 5a to the state where the rear-side boundary line 21 reaches the second section sensor 5b, is referred to as the maximum predicted rear-end-side conveying movement amount because this is the maximum value of the predicted rear-end-side conveying movement amount detected by a sensor at a predetermined position upon normal movement.

When the conveying movement amount of D pulses for the tip of the virtual object a to reach the virtual second section sensor 105b is assumed to be 2000 pulses, the length of the actual object a, which is referred to as M pulses, is assumed to be 300 pulses; and both fg and rg are assumed to be 30 pulses, then the predicted tip-side conveying movement amount is 1970 pulses. Furthermore, the predicted rear-end-side conveying movement amount is 2330 pulses.

The conveyance system 1 described above employs a transmissive optical sensor, for example, including a pair of light emitters and photodetectors, as the section sensor 5 for the conveyor line 25. The section sensor 5 adopted in the conveyance system 1 is a single sensor configured to determine whether or not an object exists between the light emitter and the light receiver. In other words, the section sensor 5 used in the conveyance system 1 consists solely of one light emitter and one light receiver.

The section sensor 5 employed in the conveyance system 1 merely detects whether or not the object is positioned between the light emitter and the light receiver.

On the other hand, a conveyance system 151 of the second embodiment described below aims to realize a conveyance system capable of recognizing the shape, size, posture, and the like of objects when viewed in plan view. The conveyance system 151 is capable of recognizing states such as an object being tilted in posture during conveyance, being conveyed in a side-by-side state, or a rear object pushing the front object and being conveyed as if they were a single object.

In the conveyance system 151 of the second embodiment, a sensor group 112 including a plurality of sensor elements 121 arranged in parallel in a straight line with an interval, perpendicular to the conveying direction, as shown in FIG. 18, is employed as a section sensor 5. That is, the sensor group 112 includes a plurality of sensor elements 121 aligned in series and housed within a predetermined case 186. Hereinafter, the sensor group will be referred to as an sensor unit 112.

In the present embodiment, as shown in FIG. 17, the sensor unit (sensor group) 112 is arranged such that the sensor elements 121 are disposed in a direction orthogonal to the conveying direction of the object.

In the conveyor line 200 of the conveyance system 151 of the second embodiment, as shown in FIG. 17, the section sensor 5 with a single sensor employed in the conveyor line 25 of the above embodiment is replaced with a sensor unit 112 (112a to 112e). That is, in the conveyance system 1 of the first embodiment, a single sensor was employed as the section sensor 5, whereas in the conveyance system 151 of the second embodiment, the sensor unit (sensor group) 112, which houses a plurality of sensor elements 121 arranged in series within a predetermined case 186, is used as the section sensor 5.

The basic component configuration of the conveyor line 200 is same as that of the conveyor line 25 in the conveyance system 1 of the aforementioned embodiment.

That is, as shown in FIG. 17, the conveyor line 200 includes a conveyance device 2 having roller conveyors and a plurality of section sensor 5 (sensor unit 112).

The conveyance device 2 is constituted with a plurality of known conveying modules 6 connected in series, and the conveying module 6 is also referred to as a zone conveyor. A load sensor 45 (FIG. 7) is provided on each of the conveying modules 6.

The conveyor line 200 includes a single main conveying passage 10 and a plurality of branching conveying passage A and B branching from said main conveying passage as shown in FIG. 17, which is similar to the previously described embodiment.

In the conveyor line 200, a plurality of section sensor 5 (sensor unit 112) are provided at a regular interval.

For convenience of explanation, as shown in FIG. 17, when the sections of the conveying area 51 are designated as the first section 70a, the second section 70b, the third section 70c, the fourth section 70d, and the fifth section 70e, section sensors 5 (sensor units 112) are provided between the preparation area 50 and the first section 70a, as well as between each of the sections. The section sensor 5 (sensor unit 112) includes a plurality of sensor elements 121 arranged in a direction perpendicular to the conveying direction of the objects.

The central controller 153 of the present embodiment, like the previously described central controller 3, is equipped with a CPU and memory, and stores a program that implements the desired functions.

As major functional blocks, a conveyor controller 11, a conveying situation estimator 162, a driving situation detector 163, comparator 158, a reset unit 16, and an object length meter 18 are provided.

In the present embodiment, signals from the sensor unit 112, the information reader 8, and each conveying module 6 are input to the central controller 153, and on the output side of the information reader 8, the conveying module 6 and the display device 17 are connected.

The function of the conveyor controller 11 is the same as that of the previous embodiment, and thus description thereof is omitted.

The function of the conveying situation estimator 162 is to estimate the moving posture of an object during conveyance in addition to the functions of the previously described embodiment.

That is, the conveying situation estimator 162 employed in the present embodiment estimates and determines the conveying situation of an object by computer, similar to the conveying situation estimator 12 employed in the preceding embodiment. Moreover, the conveying situation estimator 162 particularly functions as the estimated pulse calculator 35 and the virtual object conveying amount determinator 185. These functions are equivalent to those of the conveying situation estimator 12 employed in the preceding embodiment.

In the conveying situation estimator 162, the moving posture of an object during conveyance is assumed to be such that the object advances straight ahead.

Next, the driving situation detector 163 will be described. The driving situation detector 163 has the same functions as the driving situation detector 13 employed in the previous embodiment, and in addition, it includes a sensor image generator 155 that generates sensor images, and a detected object determinator 156.

According to the driving situation detector 163, the sensor image generator 155 and the detected object determinator 156 can determine the shape, size, and posture of an object (detected object detected by the sensor unit 112) when viewed in plan.

The central controller 153 includes a comparator 158. In the comparator 158 of this embodiment, whether an abnormality has occurred during the conveyance process is determined by comparing the detected object, which is determined by the detected object determinator 156, with the virtual object. The detected object is a planar shape created by the sensor image generator 155 based on the sensor unit 112 and the conveyance distance of the actual object, reflecting the shape, size, and posture of the actual object.

By comparing the detected object with the virtual object, it is possible, for example, to detect if the posture has tilted or if side-by-side movement of an object has occurred.

The reset unit 16 is the same as that in the preceding embodiment. That is, the reset unit 16 resets the relationship between the virtual conveyance device 102 and the real conveyance device 2 within the prescribed area at a predetermined timing.

Hereinafter, the operation of the conveyance system according to the second embodiment will be explained in further detail. In addition, the same reference signs as those used in the first embodiment are assigned to components having the same functions as those described in the first embodiment.

Firstly, the operation of the central controller 153 of the conveyance system 151 of the second embodiment will be explained, specifically how it detects the driving situation such as the posture of the object and the presence or absence of side-by side movement.

With reference to FIGS. 21 to 22, the operation when an object is conveyed from the first section 70a to the second section 70b in an orientation parallel to the conveyance direction will be described. It should be noted that the first section 70a and the second section 70b each includes a number of conveying modules 6 connected in series and have a corresponding length, as shown in FIG. 17; however, in FIGS. 21 and 22, only the boundary portion between the first section 70a and the second section 70b is extracted for illustrative purposes.

Many of the drawings from FIG. 21 onwards are arranged in four tiers. Each tier is labeled with the alphabet letters (a), (b), (c), and (d) from the top, accompanied by numerical sublabels such as 1, 2, 3, and so forth.

In each figure, the uppermost diagram labeled (a) depicts the movement of an actual object on the conveyance device. The second diagram labeled (b) shows a sensor image on the conveyance device. The third diagram labeled (c) illustrates the posture and shape of an object derived from the sensor image at the time of reset. The fourth diagram labeled (d) represents the movement of a virtual object on the conveyance device.

Reference signs such as 1, 2, 3, and so forth indicate the changes over the passage of time.

For instance, focusing on the series of figures marked with (a) at the top tier, the actual object is initially positioned at (a1); as time progresses, the actual object position changes sequentially to (a2), (a3), (a4), and so forth.

The second diagram marked with (b), the third diagram marked with (c), and the fourth diagram marked with (d) are similarly illustrating changes over the passage of time.

As shown in FIGS. 17, 21, and 22, the second sensor unit 112b is arranged at the tip of the second section 70b.

In the present embodiment, the second sensor unit 112b includes eight sensor elements 121 arranged linearly. It should be noted that the number of sensor elements 121 included in the sensor units 112a, 112b, 112c, 112d, and 112e is not limited to eight; it may be more or less. The sensor unit 112b may be configured by arranging a plurality of sensor elements 121 in parallel with an interval between them in a linear manner.

In addition, only reference signs corresponding to the movements (a1) to (a4) of the actual object a are inscribed in FIGS. 21 to 22.

The sensor element 121 is a sensor capable of detecting the presence of an object, and in the present embodiment, a reflective photoelectric sensor is employed. That is, the sensor element 121 has a light projecting portion and a light receiving portion within a single housing, and the light emitted from the light projecting portion is reflected by the object and reaches the light receiving portion, whereby the presence of the object at a predetermined location is detected. In other words, sensor element 121 performs a contactless detection of the presence or absence of the object at the predetermined location.

Although not particularly limited thereto, in the present embodiment, a photodiode is employed as the sensor element constituting the light receiving section.

The actual object a advances from left to right as shown in FIGS. 21(a1) to (a2), and 22 (a3) to (a4). In FIG. 21 (a1), the actual object a is located in the first section 70a and subsequently advances to FIG. 22 (a4). To facilitate a clear explanation of the detection operation of the sensor unit 112, the virtual object on the conveyance device is described below as being initialized firstly at the moment the actual object passes the sensor unit 112b.

The actual object a passes through the second sensor unit 112b and advances to the second section 70b. At this moment, when the actual object a begins to pass over the second sensor unit 112b, reflected light reaches the light-receiving portion of the sensor element 121. As shown in FIG. 21 (b2), the driving situation detector 163 of the central controller 153 starts to form a sensor image sa by the sensor image generator 155. That is, the actual object a moves at a constant speed while the on/off state of each sensor element 121 of the lower sensor unit 112b monitors during this period. Since each sensor member 121 of the sensor unit 112b is arranged in a straight line, it is instantly detected whether or not there is an object on the sensor unit 112b, and this is detected as a line. As time elapses and the actual object a moves, the line indicating the presence or absence of the object on the sensor unit 112b at each instant spreads in a planar form, becoming a figure with an area.

That is, by accumulating the image (line) of the actual object a captured by the sensor unit 112b along the time axis, the sensor image sa is formed as shown in FIG. 21 (b1) to (b2), and FIG. 22 (b3) to (b4).

The sensor unit operation time of the second sensor unit 112b is associated with the amount of conveying operation (number of motor pulses) by the actual pulse accumulator 42. Consequently, as described later, it becomes possible to compare the relative positional relationship with the virtual object ia expressed by the number of motor pulses.

The accumulation of the sensor image sa commences when the tip of the object a passes over the sensor unit 112 located upstream of each section 70, and terminates when the rear end surpasses the sensor unit 112 and reaches the next section 70. In other words, the sensor image generator 155 accumulates the sensor image sa along the time axis through the states illustrated in FIG. 22 (b3) to (b4), and at the point where reflected light can no longer be obtained from the sensor unit in (b4), the accumulation of the sensor image sa is concluded. Thus, at this moment, the complete image of the sensor image sa is obtained.

At the time when the accumulation of the sensor image sa is completed, the detected object da shown in FIG. 22 (c4) is determined from the sensor image sa accumulated in the time-axis direction as shown in FIG. 22 (b4) using the detected object determinator 156. Specifically, at the time when the rear end of the actual object a surpasses sensor unit 112 and reaches the conveying module (the time when the second sensor unit 112 can no longer receive reflected light, hereinafter also referred to as the reset timing), the detected object da shown in FIG. 22 (c4) is determined from the sensor image sa accumulated in the time-axis direction as shown in FIG. 22 (b4) using the detected object determinator 156. Then, at this time point (reset timing), simultaneously, the virtual object ia is reset (reconfigured) to this detected object da as shown in FIG. 22 (d4).

Note that the third-tier diagram marked with (c) illustrates the posture and shape of the object derived from the sensor image at the time of reset, and hence appears only at the timing of reset (hereinafter referred to as the reset timing). Referring to FIGS. 21 and 22, the detected object da is only emerged by the detected object determinator 156 at the reset timing, which in this embodiment corresponds solely to the timing of FIG. 22 (c4). This applies also to the diagrams explaining other examples hereinafter.

Next, referring to FIGS. 23 to 25, the operation when an object is conveyed from the first section 70a to the second section 70b in a posture tilted relative to the conveying direction will be described. That is, when entering the section 70a, the posture of the object is parallel to the conveying direction, but the posture tilts midway within the section 70a, and then it is assumed that the object enters from the section 70a into the second section 70b with maintain the tilted posture. Also in this embodiment, for easy explanation of the detection operation of the sensor unit 112, the virtual object on the conveyance device will be described assuming that it is initialized firstly when the actual object passes the sensor unit 112b.

The actual object a advances as illustrated in FIGS. 23 (a1) to (a2), 24 (a3) to (a4), and 25 (a5) to (a6). In FIG. 23 (a1), the actual object a is located in the first section 70a, passes through the second sensor unit 112b, and advances to the second section 70b as shown in FIG. 25 (a6). At this time, when the actual object a begins to pass over the second sensor unit 112b, simultaneously, as shown in FIG. 23 (b2), the driving situation detector 163 of the central controller 153 begins to form a sensor image sa using the sensor image generator 155. That is, the sensor image sa is formed by accumulating over the time axis the image of the actual object a captured by the sensor unit 112b. Here, since the actual object a takes a posture inclined downward, the sensor image sa of the actual object a in FIG. 23 (a2) has a width narrower than the width of the actual object a. In other words, compared to the case where it advances in a parallel state (FIG. 23(b2)), a sensor image with a slightly narrower width is obtained.

Furthermore, when the actual object a advances over the section 70b and reaches the position shown in FIG. 24 (a3), the portion that was not reflected in FIG. 23 (a2) reflects light emitted from the sensor element 121, whereby the sensor image sa forms an image extending downward from the middle, as shown in FIG. 24 (b3). As the actual object a further advances over the section 70b and reaches the position shown in FIG. 25 (a5), since the actual object a tilts its tip downward, its rear end protrudes upward. Therefore, at this position, the sensor image sa exhibits an image with a protruding upper portion, as depicted in FIG. 25 (b5). When the rear end of the actual object a surpasses the second sensor unit 112b and reaches the section 70b, the sensor image generator 155 accumulates the sensor image sa along the time axis until the state shown in FIG. 25 (b6). When the actual object a reaches the position in FIG. 25 (a6) and the reflected light can no longer be obtained from the sensor unit, the accumulation of the sensor image sa ends. That is, at this point, the complete image of the sensor image sa is obtained.

At this point, that is, at the reset timing, the detected object da shown in FIG. 25 (c6) is determined from the sensor image sa stored along the time axis in FIG. 25 (b6) using the detected object determinator 156. Then, at the moment when this actual object a reaches the section 70b by exceeding the last sensor unit 112, simultaneously, as shown in FIG. 25 (d6), the virtual object ia is reset (reconfigured) to this obtained detected object da.

Since the object maintained a parallel posture with respect to the conveying direction when entering the section 70a, the posture of the virtual object remained straight from d1 to d5. At the point where the rear end of the actual object a exceeds the sensor unit 112 and reaches the section 70b, as shown in FIG. 25 (d6), the posture of the virtual object ia is reset, thereafter showing an inclined posture.

According to the conveyance system 151 of the present embodiment, it is possible to determine whether a plurality of actual objects are being conveyed in side-by side movement.

Herein, in the present embodiment, " side-by side movement of objects" refers to a state in which at least a part of a plurality of objects exist in the same region along the conveying direction of the conveying passage. Specifically, the side-by side movement of objects includes cases where, as in FIG. 19 (a), at least a portion of the objects are advancing side by side in the same region along the conveying direction of the conveyance path in plan view. This also includes cases where the objects advance in parallel without a space.

Furthermore, as depicted in FIG. 19 (b), even in the case where the objects are overlapping vertically during movement, the objects are described to be in a state of side-by side movement.

Next, with reference to FIGS. 26 through 28, the operation will be described in the case where object move from the first section 70a to the second section 70b while two object overlap each other during transportation. Although there was a predetermined interval between an actual object a and an actual object b upon entering the section 70a, it is presumed that the actual objects a and b overlap midway through the section 70a and enter from the section 70a to the second section 70b in an overlapped state. Even in this example, in order to clearly describe the detection operation by the sensor unit 112, the virtual object on the conveyance device is herein described with assuming that it is initialized only at the time when the actual object passes the sensor unit 112b.

The actual object a and b advance in an overlapping state, as shown in FIG. 26 (a1) to (a2), FIG. 27 (a3) to (a4), and FIG. 28 (a5) to (a6). In FIG. 26 (a1), the actual object a is located within the first section 70a and passes through the second sensor unit 112b, advancing to the second section 70b as shown in FIG. 26 (a2). At this time, as the overlapping actual objects a and b, the preceding actual object a begins to pass over the second sensor unit 112b, whereby, as shown in FIG. 26 (b2), the driving situation detector 163 of the central controller 153 starts to form a sensor image sa via the sensor image generator 155. At this time, as for the overlapping actual objects a and b, the preceding actual object a begins to pass over the second sensor unit 112b, whereby, as shown in FIG. 26 (b2), the driving situation detector 163 of the central controller 153 starts to form a sensor image sa via the sensor image generator 155. That is, the sensor image sa is formed by accumulating the image of the actual object a captured by the sensor unit 112b over the time axis. At this point, since only the portion of the actual object a has reached the section 70b, as shown in FIG. 26 (b2), the sensor image sa having the same width as the actual object a is obtained.

Furthermore, when the actual objects a and b advance over the section 70b and reach the position shown in FIG. 27 (a3), the portion of actual object b also begins to reflect the light emitted from the sensor element 121, causing the overlapping sensor image sa and sb to form an image extending downward midway, as illustrated in FIig 27 (b3). Furthermore, when the actual objects a and b advance over the section 70b and reach the position depicted in FIG. 27 (a4), the actual object a has surpassed the second sensor unit 112b. Accordingly, the rear portions of the sensor image sa and sb form images having the width of the actual object b. Then, at the point when the rear end of the actual object b surpasses the second sensor unit 112b and reaches the conveying module, namely at the point shown in FIG. 28 (a5), reflected light from the sensor unit is no longer obtained, thereby terminating the accumulation of the sensor image sb. That is, as shown in FIG. 28 (b5), at this point, a complete image of the sensor image sa and sb has been obtained.

At this reset timing, the detected objects da and db in FIG. 28 (c5) are sensor image sa and sb accumulated in the time axis direction as depicted in FIG. 28 (b5) by the detected object determinator 156. Then, at the point when the rear end of the actual object b has passed beyond the sensor unit 112 and reached the conveying module, the virtual objects ia and ib are reset (reconfigured) to the state of the obtained detected objects da and db as shown in FIG. 28 (d5).

At the point when the rear end of the actual object a and b passes over the sensor unit 112 and reach the conveying module at the section 70b, the posture of the virtual object ia and ib is reset, thereafter resulting in the overlapping of the virtual object a and b.

Thereafter, the virtual objects ia and ib advance over the section 70b with the conveying movement amount obtained by the virtual object conveying amount determinator 185 of the conveying situation estimator 162. Then, in the case where the actual objects a and b are conveyed normally, they exhibit the same movement as the virtual objects ia and ib, as shown in FIG. 28 (a6).

Next, using FIGS. 29 through 30, the operation where the rear object pushes the front object and they move as if they were a single object from the first section 70a to the second section 70b will be described. That is, when entering the section 70a, there is a predetermined interval between the actual object a and actual object b, but during the passing through the section 70a, the rear actual object b comes into contact with the preceding actual object a, and behaves as if they are a single object, and then the objects a and b are conveyed from the first section 70a to the second section 70b. It is noted that the width of the actual object a is smaller than the width of the actual object b. Also in this example, in order to provide a clear explanation of the detection operation of the sensor unit 112, the virtual object on the conveyance device will be described on the assumption that it is initialized firstly when the actual object passes the sensor unit 112b.

The actual objects a and b advance as shown in FIG. 29 (a1) to (a2), and FIG. 30 (a3) to (a4), with the trailing object pushing the leading object.

In FIG. 29 (a1), the actual object a is located in the first section 70a, passes through the second sensor unit (112b), and advances into the second section 70b as shown in FIG. 29 (a2). At this time, when the preceding actual object a begins to pass over the second sensor unit 112b, as shown in FIG. 29(b2), the driving situation detector 163 of the central controller 153, using the sensor image generator 155, starts to form the sensor image sa. That is, the sensor image sa is formed by accumulating the image of the actual object a captured by the sensor unit 112b over the time axis. At this point, since only the portion of the actual object a has reached the section 70b, as shown in FIG. 29 (b2), a sensor image sa having the same width as the actual object a is obtained.

Furthermore, when the actual objects a and b advance on the section 70b and reach the position shown in FIG. 30 (a3), the portion of the actual object b is in a state where it has begun to reflect the light emitted from the sensor element 121. Therefore, the width of the rear parts of the sensor image sa and sb is larger than the width of its tip part. In this example, the rear end of the actual object a is in contact with and pushed by the tip of the actual object b. Accordingly, the driving situation detector 163 recognizes the actual objects a and b as if they were a single object. Therefore, even when the rear end of the actual object a passes the sensor unit 112b, the sensor image generator 155 does not reach the reset timing, so it does not instruct a reset operation and continues the accumulating operation of the sensor image.

When the sensor image sa and sb, recognized as a state in which the actual object a and b are integrated, further advance over the section 70b and reach the position shown in FIG. 30 (a4), the rear end of the actual object b exceeds the second sensor unit 112b. Accordingly, the rear portions of the sensor image sa and sb form an image having the width corresponding to the actual object b. Then, when the rear end of the actual object b surpasses the second sensor unit 112b and reaches the conveying module, that is, at the time point corresponding to FIG. 30 (a4), reflected light can no longer be obtained from the sensor unit, and the accumulation of the sensor image sb terminates. That is, as shown in FIG. 30 (b4), at this point, the entire sensor image sa and sb have been obtained.

From the sensor image sa and sb of FIG. 30 (b4) accumulated in this time axis direction, the detected object da and db of FIG. 30 (c4) are determined using the detected object determinator 156. At this point, as shown in FIG. 30 (d4), the virtual objects ia and ib are reset (reconfigured) to the state of the obtained detected objects da and db.

Thereafter, the virtual objects ia and ib advance over the section 70b with the conveying movement amount obtained by the virtual object conveying amount determinator 185 of the conveying situation estimator 162. Then, when the actual objects a and b are transported normally, they exhibit the same motion as the virtual objects ia and ib as shown in FIG. 30 (a4) to (d4).

Using the driving situation detector 163, which is a distinctive function of the conveyance system 151 of the second embodiment described above, the following will be explained how the central controller 153 controls the conveyance device 2.

As the first example, the control of the central controller 153 when the posture of the actual object a changes during conveyance, will be explained with reference to FIGS. 31 through 35.

Each of FIGS. 31 to 35 depicts a portion of a conveyance device 2 that conveys an object from upstream on the left side of the figures to downstream on the right side, illustrating the advancement of the object over time as it moves downstream. Each of FIGS. 31 to 35 depicts from the first section 70a to the third section 70c.

An object a is conveyed from the first section 70a on the far left side, passing through the second section 70b, and advancing to the third section 70c.

As shown in FIG. 31 (a1), the actual object a moves from the first section 70a, passes through the second sensor unit 112b, and is conveyed to the second section 70b. Here, the virtual object ia is described as being reset at the reset timing (reconfiguration timing) on the first section 70a to the same shape, size, and posture at a position where it does not lag behind the movement of the normally advancing actual object a. At this time, the actual object a is assumed to be operating normally on the first section 70a, and the explanation proceeds accordingly. In this case, as shown in FIG. 31 (d1), the virtual object ia at the time when the object a is conveyed to the first section 70a or the second section 70b assumes a virtual conveying situation having almost the same shape, size, and posture as the actual object a.

Then, the actual object a advances forward on the second section 70b without changing the posture for a certain period as illustrated in FIGS. 31 (a2) and 32 (a3) to (a4), and subsequently, as shown in FIG. 33 (a5), changes its posture by tilting its tip to the right relative to the conveying direction within the second section 70b for some reason. The actual object a maintains a posture tilted to the right relative to the direction of advancement at its tip, passing through the third sensor unit 112c as shown in FIGS. 33 (a6), 34 (a7) to (a8), and 35(a9) to (a10), and advances to the third section 70c.

First, a description is given about the control operation that occurs when the actual object a passes beyond the second sensor unit 112b and completely reaches the second section 70b.

At this time, the actual object a passes through the second sensor unit 112b as illustrated in FIG. 31 (a1) to (a2), and FIG. 32 (a3), advances into the second section 70b, and upon reaching FIG. 32 (a4) fully enters the second section 70b after having passed beyond the second sensor unit 112b including its rear end.

As shown in FIG. 31 (a1), when the actual object a passes through the second sensor unit 112b and begins to receive the reflected light, the driving situation detector 163 of the central controller 153, using the sensor image generator 155, starts forming an image of the actual object captured by the sensor unit 112b. Then, it initiates the accumulation of the obtained image.

As the object a advances as shown in FIGS. 31 (b1) to (b2) and 32 (b3), the area of the sensor image gradually increases. Here, as shown in FIG. 32 (a4), until the actual object a completely passes through the second sensor unit 112b 1including its rear end and is fully incorporated into the second section 70b, the actual object a is conveyed in a posture parallel to the conveying passage. At this time, the sensor image sa will be as shown in FIG. 32 (b4). Then, the detected object determinator 156 of the driving situation detector 163 determines that the detected object da shown in FIG. 32 (c4) is indeed an object that has arrived at the second section 70b using the sensor image sa in FIG. 32 (b4).

Simultaneously, at this reset timing, the virtual object (ia) is reset (reconfigured) so that the virtual object (ia) has a posture parallel to the conveying passage as illustrated in FIG. 32 (d4). That is, the posture is not inclined but maintains the posture as it is at the first section 70a.

Next, the control operation that occurs when the actual object a surpasses the third sensor unit 112c and completely reaches the third section 70c will be described.

The actual object a is assumed to have a posture where its tip is tilted to the right relative to the conveying direction during it advances from the state shown in FIG. 32 (a4) to the state shown in FIG. 33 (a5), and thereafter the object a is assumed to advance parallel to the conveying passage while maintaining the posture shown in FIG. 33 (a5). As described above, in the state illustrated in FIG. 33 (d5), the virtual object ia maintains the conveying situation that is reset in FIG. 32 (d4), that is, a posture parallel to the conveying direction. Then, when the actual object a further advances through the conveyance device 2 as shown in FIGS. 33 (a6), 34 (a7) to (a8), 35 (a9) to (a10), passes through the third sensor unit 112c, and completely reaches the third section 70c including its rear end, it is a time for the next reset timing (FIG. 35 (a10)).

The sensor image sa when the actual conveying module has reached the state shown in FIG. 35 (a10) is shown in FIG. 35 (b10). From this sensor image sa, the detected object determinator 156 of the driving situation detector 163 calculates a detected object da having the shape, size, and posture as shown in FIG. 35 (c10), and with that, resets the shape, size, and posture of the virtual object ia shown in FIG. 35 (d10). Then, until the next reset timing, the virtual object ia of this shape/size/posture is advanced on a section 70.

As a second example, while conveying three object, the control by the central controller 153 in the case where the rear two object overlap each other during conveyance and are conveyed in this overlapped state will be explained with reference to FIGS. 36 to 39.

For drawing purposes, each area is depicted considerably shorter than in the actual situation. Each of FIGS. 36 to 39 illustrates a part of the conveyance device 2. From the upstream side (left side in the drawing), the first section 70a, the second section 70b, the third section 70c, the fourth section 70d, and the fifth section 70e on the downstream side (right side in the drawing) are arranged. At the upstream end of the first section 70a, a first sensor unit 112a (not illustrated) is installed; at the upstream end of the second section 70b, a second sensor unit 112b is installed; at the upstream end of the third section 70c, a third sensor unit 112c is installed; at the upstream end of the fourth section 70d, a fourth sensor unit 112d is installed; and at the upstream end of the fifth section 70e, a fifth sensor unit 112e is installed.

Assuming that three actual object a, b, and c are conveyed normally along the conveying passage in this order, and that these three object have reached the reset timing, as the initial state (situation of FIG. 36 (a1), (b1), (c1), and (d1)), the subsequent advancement of conveyance will be described.

As shown in FIG. 36 (a1), the conveyance device 2 is such that, at this time, the actual object a is positioned at the reset timing position within the fourth section 70d, the actual object b is positioned at the reset timing position within the third section 70c, and the actual object c has reached the reset timing position within the second section 70b. Therefore, the detected objects da, db, dc corresponding to the actual objects a, b, c constitute an image as shown in FIG. 36 (c1), and based on this, the virtual objects ia, ib, ic are reset (reconfigured) as shown in FIG. 36 (d1). Here, since the actual objects a, b, and c are operating normally, the virtual objects ia, ib, ic are reset to almost identical shapes, sizes, and portions to the actual objects.

Subsequently, as illustrated in FIG. 36 (a2), the actual object a and c are conveyed normally, but the actual object b has stopped moving within the third section 70c due to some circumstance.

At this time, the actual object a continues its normal operation, moving from the section 70d to the section 70e as illustrated in FIGS. 36 (a2) and 37 (a3). When the actual object a passes beyond the fifth sensor unit 112e and is conveyed into the fifth section 70e, the driving situation detector 163 of the central controller 153 utilizes the sensor image generator 155 to produce a sensor image sa, as shown in FIGS. 36 (b2), and 37 (b3) to (b4). Since the actual object a continues normal operation, it is assumed that when the fifth section 70e reaches the reset timing, the detected object determinator 156 of the driving situation detector 163 will calculate the detected object da. Furthermore, it is assumed that the reset unit 16 generates a virtual object ia, which is approximately equal in shape, size, and posture to the actual object a, from the detected object da calculated based on the sensor image sa.

The actual object c within the third section 70c is also continuing the assumed conveying operation, as shown in FIGS. 36 (a2) and 37 (a3). Accordingly, when the actual object c is transported beyond the third sensor unit 112c into the third section 70c, the driving situation detector 163 of the central controller 153 uses the sensor image generator 155 to produce a sensor image sc corresponding to the advancement of the actual object c, as illustrated in FIGS. 37 (b3) to (b4), and 38 (b5). Then, the detected object determinator 156 of the driving situation detector 163 calculates, upon reaching the reset timing at which the third sensor unit 112c receives no reflected light, as indicated in FIG. 38 (c5), the detected object dc. At this reset timing, the reset unit 16 updates the virtual object ic to a new virtual object ic as shown in FIG. 38 (d5). However, the actual conveying situation corresponds to a state in which the actual objects b and c overlap, as shown in FIG. 38 (a5), making it impossible to ascertain the precise conveying condition at this reset timing.

Next, the movement of the actual object b will be described. As shown in FIG. 36 (a2), it is assumed that the actual object b ceases operation within the third section 70c. Further, as depicted in FIG. 37 (a3) to (a4), the actual object b, while initially remaining stationary within the third section 70c, is approached by the actual object c and the actual object c eventually comes to overlap above actual object b. Subsequently, in this state, the actual objects b and c are considered to have integrated, initiating forward movement together as a whole.

Meanwhile, as shown in FIG. 36 (d1), the virtual object ib is reset (reconfigured) and, thereafter, this virtual object ib is conveyed as shown in FIG. 36 (d2), FIG. 37 (d3) to (d4), and FIG. 38 (d5). Then, in FIG. 38 (d5), the virtual object ib passes through the fourth sensor unit 112d and is conveyed into the fourth section 70d in a state in which its rear end is completely included. However, as previously mentioned, the actual object b has stopped moving in the third section 70c, resulting in a situation where the detected object db, which should originally have reached FIG. 38 (d5), is absent. Therefore, at this reset timing, the virtual object ib is reset (reconfigured) to a state of being 'nonexistent'.

Subsequently, the overlapping actual objects b and c in FIG. 38 (a5) are conveyed from the third section 70c to the fourth section 70d by passing through the fourth sensor unit 112d as shown in FIGS. 38 (a6), 39 (a7) to (a8). In FIG. 39 (a8), the actual objects b and c in the overlapped state are completely conveyed into the fourth section 70d, including their rear end, thereby reaching the next reset timing. At this time, the sensor image sb and sc obtained by accumulating the image of the actual object captured by the fourth sensor unit 112d over the time axis correspond to the image shown in FIG. 39 (b8). From this sensor image sb and sc, the detected objects shown in FIG. 39 (c8) are calculated by the detected object determinator 156 of the driving situation detector 163, and are reset (reconfigured) by the reset unit 16 to the virtual objects ib and ic shown in FIG. 39(d8). As described above, when overlapping occurs, the presence of the overlap can be recognized at the section 70d located downstream of the section 70c where the overlap has occurred. Furthermore, when the widths of the actual objects b and c differ, it is possible to identify which of the actual objects b and c is being conveyed first while in the overlapped state. In addition, since it can be confirmed that two actual object exist, it can be determined that no removal of an object has occurred.

When such overlapping occurs, it is possible to resolve the overlap by applying control, for example, by temporarily increasing the transport speed and then suddenly reducing the speed. This overlap detection function can also be used as a trigger to determine whether or not to perform such control, and it is a function that can generate significant benefits in application.

In this case, for example, by using the conveying module 136 shown in FIG. 43, it is possible to set different conveying speed for different positions within the section 70. That is, the conveying module 136 includes a plurality of conveyance cells 141, and each conveyance cell 141 includes a traveling motor 149. Accordingly, by setting the rotational speed of the traveling motors 149 of each of the conveyance cells 141 to different values, it is possible to configure the conveying rollers 143 of each conveyance cell 141 to rotate at different speeds; for example, by setting the first half of the section 70 to high-speed rotation and the latter half to low-speed rotation, it is possible to resolve overlapping issues.

Furthermore, each conveying module 136 is also equipped with a turning motor 148. Accordingly, by rotating the turning motor 148, the orientation of the turning table 146 can be changed. This also enables changing the orientation of the conveying roller 143.

As a third example, regarding the case where the object temporarily stops due to occurrence of a snag or the like but is conveyed integrally after being pushed by another object coming from behind, the operation in sections 70a, 70b, 70c, 70d, and 70e will be described with reference to FIGS. 40 to 42. Also with regard to FIGS. 40 to 42, due to constraints related to the drawings, each section is depicted significantly shorter than its actual length. In the present embodiment as well, it is assumed that objects are conveyed from the left side of the figure, i.e., from the first section 70a toward the right to the fifth section 70e. The sections are arranged from upstream (left side in the drawings) as the first section 70a, second section 70b, third section 70c, fourth section 70d, and downstream (right side in the drawings) as the fifth section 70e. At the upstream end of the first section 70a, the first sensor unit 112a (not illustrated) is installed; at the upstream end of the second section70b, the second sensor unit 112b is installed; at the upstream end of the third section 70c, the third sensor unit 112c is installed; at the upstream end of the fourth section 70d, the fourth sensor unit 112d is installed; and at the upstream end of the fifth section 70e, the fifth sensor unit 112e is installed. Also in the third example, although the first sensor unit 112a is not illustrated, it will be explained based on the assumption that it exists. In addition, reference numerals are provided only for the diagrams (a1) to (a6) illustrating the movement of an actual object.

As an initial state, as shown in FIG. 40 (a1), the actual object a has completely reached the third section 70c including its rear end, and at that time, the actual object b has completely reached the second section 70b including its rear end, that is, it is assumed to have arrived at the position where the reset timing is performed. It is also assumed that, at this time, the objects were conveyed properly. In the aforementioned state, the sensor images sa and sb of the actual objects a and b become images as shown in FIG. 40 (b1), generated by the sensor image generator 155 of the driving situation detector 163. Accordingly, the detected objects da and db are calculated as shown in FIG. 40 (c1) by the detected object determinator 156, and based on this, the virtual objects ia and ib are set as shown in FIG. 40 (d1) by the reset unit.

At this time, the actual object a is assumed to be conveyed normally. Accordingly, as shown in FIGS. 40 (a2), 41 (a3) to (a4), and 42 (a5) to (a6), the actual object a is smoothly transported from the third section 70c downstream to the fourth section 70d, and to the fifth section 70e.

Therefore, the virtual object ia is calculated to advance from the fourth section 70d to the fifth section 70e, as shown in FIGS. 40 (d2), 41 (d3) to (d4), and 42 (d5) to (d6), by the virtual object conveying amount determinator 185 of the conveying situation estimator 162.

Meanwhile, the actual object b, as shown in FIGS. 40 (a2) and 41 (a3), is assumed to have stopped moving due to some form of entanglement or the like. At this time, the actual object c, which is conveyed immediately after the actual object b, approaches the actual object b, and eventually, as shown in FIGS. 41 (a4) and 42 (a5), the actual object c comes into contact with the actual object b and begins to push it. Furthermore, due to the force exerted by the actual object c pushing the actual object b, the entanglement of the actual object b is released, and the actual objects b and c move forward together over the sections 70 as a single body.

At this point, the virtual object ib is calculated to advance from the second section 70b to the third section 70c, as illustrated in FIGS. 40 (d2), 41 (d3) to (d4), reaching FIG. 41 (d4). Here, the virtual object ib passes through the sensor unit 112c and reaches the third section 70c completely, including its rear end. Therefore, the reset timing is reached at this point. Here, the actual object b remained in a stationary state for a certain period until it was pushed by the actual object c, as shown in FIGS. 40 (a2) and 41 (a3). Accordingly, as shown in FIG. 41 (a4), the timing when the tip of the actual object b passes through the third sensor unit 112c and reaches the reset timing of the third section 70c is significantly later than the virtual conveyor section ib. Therefore, at this reset timing, as illustrated in FIG. 41 (c4), no detected object db is generated. Thus, at this reset timing, the detected object determinator 156 of the driving situation detector 163 determines that the virtual object ib does not exist, and it disappears as shown in FIG. 41 (d4).

At this time, as shown in FIG. 41 (a4), the actual object b, although subject to a time delay, has begun to move because the actual object b is pushed by the actual object c. Accordingly, when the tip of the actual object b passes beyond the third sensor unit 112c to make it possible to receive the reflected light, the sensor image generator 155 begins the accumulation operation of the sensor image sb generated by the third sensor unit 112c. Here, the actual object b is conveyed because the actual object b comes in contact with the actual object b to form a single unit. Accordingly, the sensor image sb are conveyed with their rear end brought into contact with the sensor image sc, and through FIGS. 41 (b4) ,42 (b5) to (b6), the sensor image sb and sc are formed as seen as if they were a single object.

Receiving these sensor image sb and sc, the detected object determinator 156 of the driving situation detector 163 produces detection object db and dc, as shown in FIG. 42 (c6). Here, if the width of the actual objects b and that of the actual object c differ, it is possible to identify which actual object is b and which is c for the two actual objects b and c.

Furthermore, when the contact between objects occurs, for example, by increasing the conveying speed of the preceding actual object and decreasing the conveying speed of the succeeding actual object, it is possible to restore the spacing between the conveyed objects to the space in a normal operation. For example, this adjustment can be achieved by using the conveying module 136 shown in FIG. 43 mentioned previously.

When using the conveying module shown in FIG. 43, upon recognizing an actual object being conveyed in an inclined posture as illustrated in FIG. 35 (a10), it becomes possible to align its posture parallel to the conveying direction. This can be achieved, for example, by making the conveying speed of the conveyance cells on the upper side of the conveying module smaller than the conveying speed of the conveyance cells on the lower side.

When using the conveying module of FIG. 43, if two actual objects b and c, which are conveyed in a state as shown in FIG. 42 (a6) where the rear object pushes the front object, thus appearing as a single object during conveyance, are recognized, it is possible to correct the conveyance to separate the interval between the two objects b and c. The conveying speed of the conveyance cells in contact with the object b is set to be faster than the conveying speed of the conveyance cell in contact with the object c.

Furthermore, by employing the conveyance system 1 of the second embodiment described above, it is also possible to detect abnormalities caused by the removal or insertion of object. That is, when objects have different widths or lengths, by confirming the width or length of the objects conveyed on the conveying module, it is possible to identify any missing objects from the planned conveying schedule.

In the above-described embodiment, a conveying situation estimator 162 is provided, and the conveying situation estimator 162 assumes that the object advances in a straight line. That is, in the above-described embodiment, the conveying situation estimator 162 includes a function of estimating the conveying posture of the object during conveyance under the predicted conveying situation.

However, the present embodiment is not limited to this configuration, and the conveying situation estimator may not include a function of estimating the conveying posture of the object. That is, the conveying posture of an object may be compared by the comparator on the assumption that it travels straight ahead.

That is, the conveyance system according to a modification example includes conveyance devices, a plurality of sensors, and a comparator. The conveyance device places and actually moves the actual object, and at least one of the plurality of sensors constitutes a sensor group, wherein the sensor group arranges multiple sensor members in a direction intersecting the conveying direction of the object. Using information about the operation timing detected by each sensor member of the sensor group, the system detects the side-by side movement and/or conveying posture of the object, and the comparator compares the predetermined conveying posture of the object with the actual side-by side movement and/or conveying posture detected by the sensors.

### EXPLANATION OF REFERENCE SIGNS

1, 151: Conveyance system
2: Conveyance device
5a: First section sensor
5b: Second section sensor
6: Conveying module
8: Information reader
11: Conveyor controller
12, 162: Conveying situation estimator
13, 163: Driving situation detector
15: Presence area
16: Reset unit
20: Front-side boundary line
21: Rear-side boundary line
28, 158: Comparator
30: Object information storage
35: Estimated pulse calculator
36: Predicted tip-side conveying amount determinator
37: Predicted rear-end-side conveying amount determinator
53: Front-end comparator
55: Rear-end comparator
105a: Virtual first section sensor
105b Virtual second section sensor
112: Sensor group (sensor unit)
121: Sensor element

## Claims

1. A conveyance system for conveying a plurality of objects to their respective destinations, comprising:
a conveying situation estimator;
a conveyance device;
a plurality of sensors; and
a comparator,
the conveying situation estimator estimating an estimated conveying situation that shows how each of the objects is conveyed by the conveyance device,
the conveyance device placing an actual object thereonto to actually move the actual object,
each of the sensors being located at a predetermined position to detect the actual object on the conveyance device,
the comparator being configured to compare the estimated conveying situation of each of the objects estimated by the conveying situation estimator with an actual conveying situation of each of the actual objects detected by the each of the sensors.

2. The conveyance system according to claim 1,
wherein the conveying situation estimator estimates an operation timing of the sensor under the estimated conveying situation, and
wherein the conveyance system further comprises a driving situation detector that detects an operation timing of the sensors under an actual driving situation of the conveyance device.

3. The conveyance system according to claim 1 or 2,
wherein the conveying situation estimator estimates a rotational situation of a specific component and/or a time required to convey the object under the estimated conveying situation, and
wherein the conveyance system further comprises a driving situation detector that detects a rotational situation of the specific component and /or a time required to convey the object.

4. The conveyance system according to any one of claims 1 to 3,
wherein the conveying situation estimator estimates a conveying posture of the object when it is conveyed under the estimated conveying situation,
wherein at least any of the plurality of sensors is a sensor group, the sensor group comprising a plurality of sensor elements arranged in a direction intersecting a conveying direction of the object,
wherein the actual conveying situation is configured to detect a side-by-side movement and/or a conveying posture of the object from information on an operation timing of each of the sensor elements of the sensor group detected by the each of the sensor elements, and
wherein the comparator compares the conveying posture of the object estimated by the conveying situation estimator with the side-by-side movement and/or the conveying posture of the actual object detected by the sensor.

5. The conveyance system according to any one of claims 1 to 4,
wherein the conveyance device comprises a conveying member that performs conveying operation through rotation or linear movement, thereby moving the object through the conveying operation of the conveying member,
wherein the conveying situation estimator estimates a predicted tip-side conveying movement amount, the predicted tip-side conveying movement amount being a minimum value of the conveying movement amount that is expected to be detected by the sensor at a predetermined position when a tip of the object moves normally,
wherein the conveyance system comprises a driving situation detector that acquires an actual conveying movement amount of the conveyance device, and
wherein the comparator performs a front end comparison of comparing the predicted tip-side conveying movement amount with the actual conveying movement amount when an actual tip of the object is detected by the sensor at a predetermined position.

6. The conveyance system according to any one of claims 1 to 5,
wherein the conveyance device comprising a conveying member that performs conveying operation through rotation or linear movement, thereby moving the object through the conveying operation of the conveying member,
wherein the conveying situation estimator estimates a predicted rear-end-side conveying movement amount, the predicted rear-end-side conveying movement amount being a maximum value of the conveying movement amount that is expected to be detected by the sensor at a predetermined position when a rear end of the object moves normally,
wherein the conveyance system includes a driving situation detector that acquires an actual conveying movement amount of the conveyance device, and
wherein the comparator performs a rear-end comparison of comparing the predicted rear-end-side conveying movement amount with the actual conveying movement amount when an actual rear-end of the object is detected by the sensor at a predetermined position.

7. The conveyance system according to any one of claims 1 to 6,
wherein when the comparison by the comparator shows a difference of a certain amount or more between the expected conveying situation and the actual conveying situation, at least one of the following processes is performed:
(1) changing conveying speed of the conveyance device;
(2) correcting the estimated conveying situation of the conveying situation estimator;
(3) changing the destination of the object;
(4) stopping the conveyance device;
(5) changing a conveying route; and
(6) notification.

8. A conveyance system for conveying a plurality of objects to their respective destinations by using a conveyance device,
the conveyance device comprising:
a conveying member that performs conveying operation through rotation or linear movement, thereby moving the object through the conveying operation of the conveying member,
the conveyance system comprising:
a tip-side predictor that estimates a predicted tip-side conveying movement amount, the predicted tip-side conveying movement amount being a minimum value of the conveying movement amount that is expected to be detected by a sensor at a predetermined position when a tip of the object moves normally;
a driving situation detector that acquires an actual conveying movement amount of the conveyance device; and
a front-end comparator that performs a front-end comparison of comparing the predicted tip-side conveying movement amount with the actual conveying movement amount when an actual tip of the object is detected by the sensor at a predetermined position.

9. A conveyance system for conveying a plurality of objects to their respective destinations by using a conveyance device,
the conveyance device comprising:
a conveying member that performs conveying operation through rotation or linear movement, thereby moving the object through the conveying operation of the conveying member,
the conveyance system comprising:
a rear-end-side predictor that estimates a predicted rear-end-side conveying movement amount, the predicted rear-end-side conveying movement amount being a maximum value of the conveying movement amount that is expected to be detected by a sensor at a predetermined position when a tip of the object moves normally;
a driving situation detector that acquires an actual conveying movement amount of the conveyance device; and
a rear-end comparator that performs a rear-end comparison of comparing the predicted rear-end side conveying movement amount with the actual conveying movement amount when an actual rear-end of the object is detected by the sensor at a predetermined position.

10. A conveyance system for conveying a plurality of objects to their respective destinations by using a conveyance device,
the conveyance device comprising:
a conveying member that performs conveying operation through rotation or linear movement, thereby moving the object through the conveying operation of the conveying member,
the conveyance system comprising:
a tip-side predictor that estimates a predicted tip-side conveying movement amount, the predicted tip-side conveying movement amount being a minimum value of the conveying movement amount that is expected to be detected by a sensor at a predetermined position when a tip of the object moves normally;
a rear-end-side predictor that estimates a predicted rear-end-side conveying movement amount, the predicted rear-end-side conveying movement amount being a maximum value of the conveying movement amount that is expected to be detected by the sensor at a predetermined position when a tip of the object moves normally;
a driving situation detector that acquires an actual conveying movement amount of the conveyance device;
a front-end comparator that performs a front-end comparison of comparing the predicted tip-side conveying movement amount with the actual conveying movement amount when an actual tip of the object is detected by the sensor at a predetermined position; and
a rear-end comparator that performs a rear-end comparison of comparing the predicted rear-end-side conveying movement amount with the actual conveying movement amount when an actual rear end of the object is detected by the sensor at a predetermined position.

11. The conveyance system according to any one of claims 1 to 10,
wherein at least one of the plurality of sensors is a sensor group, and the sensor group is configured to arrange a plurality of sensor elements in a direction intersecting with a conveying direction of the object.

12. The conveyance system according to claim 4,
wherein the side-by-side movement of the objects is eliminated or the conveying posture is changed, based on a result of the detection operation.

13. The conveyance system according to any one of claims 1 to 12,
wherein when the conveyance system detects an abnormality caused by delay, early arrival, removal, or insertion of an object, it resets a discrepancy between the estimated conveying situation and the actual conveying situation so that the estimated conveying situation should match the actual conveying situation that is detected.

14. The conveyance system according to any one of claims 1 to 13,
wherein the estimated conveying situation is reset to match the actual conveying situation that is detected after the object reaches or passes the sensor.

15. A conveyance system for conveying a plurality of objects to their respective destinations, comprising:
a conveyance device;
a plurality of sensors; and
a comparator,
the conveyance device placing an actual object thereonto to actually move the actual object,
at least any of the plurality of sensors being a sensor group that comprises a plurality of sensor elements arranged in a direction intersecting a conveying direction of the object,
wherein the conveyance system is configured to detect a side-by-side movement and/or a conveying posture of the object from information acquired by each of the sensor elements of the sensor group, and
wherein the comparator is configured to compare a predetermined conveying posture with the side-by-side movement and/or the conveying posture of the object detected by the sensor.

16. The conveyance system according to any one of claims 1 to 15,
wherein the conveyance device includes a conveying passage that branches into multiple passages and has multiple destinations, thereby conveying order of the objects corresponding to the destinations of the objects.
